# EUROPÄISCHE PATENTSCHRIFT

(11) **EP 3 891 085 B1**
(45) Veröffentlichungstag und Bekanntmachung des Hinweises auf die Patenterteilung: **07.06.2023**
(21) Anmeldenummer: 19828183.4
(22) Anmeldetag: 19.11.2019
(51) Int. Cl.: B65G 1/04

(54) **LAGERANORDNUNG UND KOMMISSIONIERSYSTEM MIT VERBESSERTER EIN- UND AUSLAGERUNG VON LADEGÜTERN SOWIE BETRIEBSVERFAHREN HIERFÜR**
STORAGE ARRANGEMENT AND PICKING SYSTEM HAVING IMPROVED LOADING AND RETRIEVAL OF LOADED ITEMS AND METHOD FOR OPERATING SAME
ARRANGEMENT DE STOCKAGE ET SYSTÈME DE PRÉPARATION AVEC MISE EN STOCK ET SORTIE DE STOCK AMÉLIORÉES DES MARCHANDISES CHARGÉES ET PROCÉDÉ D'EXPLOITATION ASSOCIÉ

(30) Priorität: 07.12.2018 AT 510902018
(43) Veröffentlichungstag der Anmeldung: 13.10.2021
(60) Teilanmeldung: 23155493.2
(73) Patentinhaber: TGW Mechanics GmbH, 4600 Wels (AT)
(72) Erfinder: AHAMMER, Christian, 4623 Gunskirchen (AT); HASLEHNER, Christoph, 4731 Prambachkirchen (AT); SCHAUER, Johannes, 4076 St. Marienkirchen an der Polsenz (AT); SCHRÖPF, Harald, 4600 Wels (AT); RAUSCH, Martin, 4810 Gmunden (AT)
(74) Vertreter: Burger, Hannes
(86) Internationale Anmeldenummer: PCT/AT2019/060392
(87) Internationale Veröffentlichungsnummer: WO 2020/113249

(56) Entgegenhaltungen:
- EP-A1- 2 949 604
- AT-A1- 509 294
- US-A1- 2016 355 339
- US-B2- 8 876 454

## Beschreibung

Die Erfindung betrifft eine Lageranordnung, welche eine Regalanordnung mit einem ersten Lagerregal und einem zweiten Lagerregal jeweils mit Lagerplätzen für Ladegüter und eine Regalgasse zwischen dem ersten Lagerregal und dem zweiten Lagerregal umfasst. Die Lagerplätze sind dabei in übereinander liegenden Lagerebenen angeordnet. Weiterhin umfasst die Lageranordnung eine Einlager-Puffervorrichtung mit Einlager-Bereitstellvorrichtungen, welche in übereinander liegenden Bereitstellebenen angeordnet und jeweils für das Zwischenpuffern eines Ladeguts oder mehrerer Ladegüter ausgebildet sind, sowie eine Auslager-Puffervorrichtung mit Auslager-Bereitstellvorrichtungen, welche in übereinander liegenden Bereitstellebenen angeordnet und jeweils für das Zwischenpuffern eines Ladeguts oder mehrerer Ladegüter ausgebildet sind. Darüber hinaus weist die Lageranordnung Regalbediengeräte auf, welche in der Regalgasse vor den Lagerplätzen, vor den Einlager-Bereitstellvorrichtungen und vor den Auslager-Bereitstellvorrichtungen jeweils auf einer horizontalen Fahrebene verfahrbar sind, welche jeweils eine Lastaufnahmevorrichtung aufweisen und welche zum Transport der Ladegüter von den Einlager-Bereitstellvorrichtungen zu den Lagerplätzen und zum Transport der Ladegüter von den Lagerplätzen zu den Auslager-Bereitstellvorrichtungen ausgebildet sind. Das heißt, die Regalbediengeräte sind für die fördertechnische Verbindung der Einlager-Bereitstellvorrichtungen mit den Lagerplätzen und die fördertechnische Verbindung der Lagerplätze mit den Auslager-Bereitstellvorrichtungen ausgebildet. Des Weiteren betrifft die Erfindung ein Kommissioniersystem mit einer Lageranordnung der oben genannten Art sowie ein Verfahren für den Betrieb einer Lageranordnung der oben genannten Art.

Die AT 509 294 A1 offenbart eine Lageranordnung und ein Verfahren zum Betrieb einer Lageranordnung gemäß dem Oberbegriff der Ansprüche 1 und 16. Die einer Regalgasse zugeordneten Vertikalfördervorrichtungen umfassen jeweils in einem fixen Vertikalabstand zueinander angeordnete (nicht unabhängig voneinander bewegbare) Transportplattformen, wovon eine Transportplattform als Einlager-Transportplattform und eine Transportplattform als Auslager-Transportplattform ausgebildet ist. An die Vertikalfördervorrichtungen sind jeweils sowohl eine Einlager-Fördertechnik als auch eine Auslager-Fördertechnik angeschlossen, durch welche Ladegüter zu der jeweiligen Vertikalfördervorrichtung antransportiert und von derjeweiligen Vertikalfördervorrichtung abtransportiert werden.

Eine Lageranordnung und ein Betriebsverfahren für eine solche Lageranordnung sind aus dem Stand der Technik grundsätzlich bekannt. Beispielsweise offenbart die US 2016/264356 A2 hierzu eine Lageranordnung mit einem Lagerregal, Ein-/Auslager-Puffervorrichtungen und Regalbediengeräten, welche in den Fahrebenen der Lageranordnung verfahrbar sind. Stirnseitig ist eine Vertikalfördereinrichtung mit zwei vertikal sowie lateral verfahrbaren Transportplattformen angeschlossen.

Des Weiteren offenbart die JP 2016/169083 A in diesem Zusammenhang eine Lageranordnung mit einem Lagerregal, Ein-/Auslager-Puffervorrichtungen und Regalbediengeräten, welche in den Fahrebenen der Lageranordnung verfahrbar sind. Des Weiteren offenbart die JP 2016/169083 A zwei in Serie geschaltete Vertikalfördereinrichtungen mit jeweils zwei Transportplattformen und einer dazwischen geschalteten Puffervorrichtung.

Schließlich offenbart die EP 3 354 598 A1 eine weitere Lageranordnung mit einem Lagerregal, Ein-/Auslager-Puffervorrichtungen und Regalbediengeräten, welche in den Fahrebenen der Lageranordnung verfahrbar sind. Stirnseitig ist eine Vertikalfördereinrichtung mit zwei vertikal verfahrbaren Transportplattformen angeschlossen.

Nachteilig ist an den bekannten Verfahren, dass die Einlager-Transportplattformen und die Auslager-Transportplattformen nicht ohne gegenseitige Beeinflussung innerhalb der Einlager-Bewegungsbereiche und Auslager-Bewegungsbereiche bewegt werden können. Es entstehen gegenseitige Abhängigkeiten beim Vorgang der Einlagerung von Ladegütern mit dem Vorgang der Auslagerung von Ladegütern. Insgesamt wird das System damit langsam und störanfällig, und es kann auch zu Blockaden beim Ein- und Auslagern von Ladegütern kommen. Der steuerungstechnische Aufwand für die genannte Lageranordnung ist daher sehr hoch.

Eine Aufgabe der Erfindung ist es nun, eine verbesserte Lageranordnung, ein verbessertes Kommissioniersystem sowie ein verbessertes Betriebsverfahren für eine Lageranordnung anzugeben. Insbesondere sollen gegenseitige Abhängigkeiten beim Vorgang der Einlagerung von Ladegütern mit dem Vorgang der Auslagerung von Ladegütern vermieden und der steuerungstechnische Aufwand für die genannte Lageranordnung somit verringert werden.

Die Aufgabe der Erfindung wird mit einer Lageranordnung der eingangs genannten Art gelöst, zusätzlich umfassend
- eine der Regalgasse zugeordnete Einlager-Vertikalfördervorrichtung mit mehreren unabhängig voneinander ansteuerbaren und jeweils in einem Einlager-Bewegungsbereich relativ gegenüber den Bereitstellebenen verstellbaren Einlager-Transportplattformen und eine der Regalgasse zugeordnete und an die Einlager-Vertikalfördervorrichtung fördertechnisch angeschlossene Einlager-Fördertechnik zum Antransport von Ladegütern zu der Einlager-Vertikalfördervorrichtung, wobei die Ladegüter mittels der Einlager-Transportplattformen von der Einlager-Fördertechnik zu den Einlager-Bereitstellvorrichtungen transportierbar sind,
- eine der Regalgasse zugeordnete Auslager-Vertikalfördervorrichtung mit mehreren unabhängig voneinander ansteuerbaren und jeweils in einem Auslager-Bewegungsbereich relativ gegenüber den Bereitstellebenen verstellbaren Auslager-Transportplattformen und eine der Regalgasse zugeordnete und an die Auslager-Vertikalfördervorrichtung fördertechnisch angeschlossene Auslager-Fördertechnik zum Abtransport von Ladegütern von der Auslager-Vertikalfördervorrichtung, wobei die Ladegüter mittels der Auslager-Transportplattformen von den Auslager-Bereitstellvorrichtungen zu der Auslager-Fördertechnik transportierbar sind, und
- ein Steuersystem, das für die voneinander unabhängige Ansteuerung der Einlager-Transportplattformen und der Auslager-Transportplattformen ausgebildet ist.

Insbesondere ist an die Einlager-Vertikalfördervorrichtung eingangsseitig (das heißt insbesondere auf einer von der Einlager-Puffervorrichtung abgewandten Ausgangsseite) ausschließlich die Einlager-Fördertechnik und an die Auslager-Vertikalfördervorrichtung ausgangsseitig (das heißt insbesondere auf einer von der Auslager-Puffervorrichtung abgewandten Eingangsseite) ausschließlich die Auslager-Fördertechnik angeschlossen. Dies bedeutet, dass die Auslager-Fördertechnik bei dieser Ausführungsvariante nicht an die Einlager-Vertikalfördervorrichtung und die Einlager-Fördertechnik nicht an die Auslager-Vertikalfördervorrichtung angeschlossen ist. Einzulagernde Ladegüter werden von der Einlager-Fördertechnik antransportiert und von dieser ausschließlich an die Einlager-Vertikalfördervorrichtung abgegeben, und auszulagernde Ladegüter werden ausschließlich von der Auslager-Vertikalfördervorrichtung auf die Auslager-Fördertechnik abgegeben und von dieser abtransportiert. In diesem Zusammenhang ist es auch von Vorteil, wenn die Einlager-Bereitstellvorrichtungen der Einlager-Puffervorrichtung in allen Bereitstellebenen, in welchen diese angeordnet sind, jeweils (ausschließlich) der Einlagerung dienen, und die Auslager-Bereitstellvorrichtungen der Auslager-Puffervorrichtung in allen Bereitstellebenen, in welchen diese angeordnet sind, jeweils (ausschließlich) der Auslagerung dienen.

Die Aufgabe der Erfindung wird auch durch ein Betriebsverfahren für die offenbarte Lageranordnung gelöst, bei dem
- ein Steuersystem die Einlager-Transportplattformen derart ansteuert, dass einzulagernde Ladegüter von der Einlager-Fördertechnik übernommen und auf die Einlager-Puffervorrichtung abgegeben werden, und
- das Steuersystem die Auslager-Transportplattformen derart ansteuert, dass auszulagernde Ladegüter von der Auslager-Puffervorrichtung übernommen und auf die Auslager-Fördertechnik abgegeben werden.

Schließlich wird die Aufgabe der Erfindung durch ein Kommissioniersystem mit einer Lageranordnung der oben genannten Art gelöst, das zusätzlich eine erste Kommissionierstation und eine zweite Kommissionierstation umfasst.

Vorteilhaft werden die Einlager-Transportplattformen und die Auslager-Transportplattformen durch das Steuerungssystem voneinander getrennt beziehungsweise unabhängig voneinander angesteuert. Die Einlager-Bewegungsbereiche überschneiden sich somit nicht mit den Auslager-Bewegungsbereichen. Dadurch können der Vorgang der Einlagerung von Ladegütern durch mehrere Einlager-Transportplattformen und der Vorgang der Auslagerung von Ladegütem durch mehrere Auslager-Transportplattformen parallel und voneinander entkoppelt durchgeführt werden. Das heißt, die Einlager-Transportplattformen und Auslager-Transportplattformen können ohne gegenseitige Beeinflussung innerhalb der Einlager-Bewegungsbereiche und Auslager-Bewegungsbereiche (mit maximaler Bewegungsgeschwindigkeit) bewegt werden. Die Förderströme, welche einen Förderstrom mit einzulagernden Ladegütern und einen Förderstrom mit auszulagernden Ladegütern umfassen, werden von der Einlager-Vertikalfördervorrichtung und der Auslager-Vertikalfördervorrichtung getrennt behandelt. Der steuerungstechnische Aufbau der Lageranordnung beziehungsweise der steuerungstechnische Aufwand für die Lageranordnung kann auf diese Weise verringert werden. Insbesondere führen einzulagernde Ladegüter nicht zu Blockaden beim Auslagern von Ladegütern und umgekehrt, so wie dies im Stand der Technik auftreten kann.

Die erste Einlager-Transportplattform und zweite Einlager-Transportplattform bedienen jeweils eine Anzahl an Lagerebenen. Das Steuersystem kann die erste Einlager-Transportplattform und die zweite Einlager-Transportplattform derart ansteuern, dass die Ladegüter durch die erste Einlager-Transportplattform von der ersten Einlager-Fördervorrichtung übernommen werden und durch die zweite Einlager-Transportplattform von der zweiten Einlager-Fördervorrichtung übernommen werden. Die Einlager-Bewegungsbereiche der ersten Einlager-Transportplattform und der zweiten Einlager-Transportplattform können voneinander getrennt sein und aneinander angrenzen. Durch diese Steuerungsmaßnahme können die erste Einlager-Transportplattform und die zweite Einlager-Transportplattform ohne die Gefahr einer Kollision jeweils im zugeordneten Einlager-Bewegungsbereich mit hoher Bewegungsgeschwindigkeit bewegt werden, sodass eine hohe Einlagerleistung erreicht wird.

Möglich ist aber auch, dass die Einlager-Bewegungsbereiche einander überlappen und somit einen Einlager-Überlappungsbereich aufweisen. Das Steuersystem verhindert dabei Kollisionen der ersten Einlager-Transportplattform und der zweiten Einlager-Transportplattform im Einlager-Überlappungsbereich. Das Steuersystem kann in diesem Fall auch dazu ausgebildet sein, die erste Einlager-Transportplattform und die zweite Einlager-Transportplattform derart anzusteuern, dass die Ladegüter durch die erste Einlager-Transportplattform von der zweiten Einlager-Fördervorrichtung übernommen werden und durch die zweite Einlager-Transportplattform von der ersten Einlager-Fördervorrichtung übernommen werden. Durch diese Steuerungsmaßnahme können die erste Einlager-Transportplattform und zweite Einlager-Transportplattform besonders flexibel eingesetzt werden.

Die erste Auslager-Transportplattform und zweite Auslager-Transportplattform bedienen ebenfalls jeweils eine Anzahl an Lagerebenen. Das Steuersystem kann die erste Auslager-Transportplattform und die zweite Auslager-Transportplattform derart ansteuern, dass die Ladegüter durch die erste Auslager-Transportplattform an die erste Auslager-Fördervorrichtung abgegeben werden und durch die zweite Auslager-Transportplattform an die zweite Auslager-Fördervorrichtung abgegeben werden. Die Auslager-Bewegungsbereiche der ersten Auslager-Transportplattform und der zweiten Auslager-Transportplattform können voneinander getrennt sein und aneinander angrenzen. Durch diese Steuerungsmaßnahme können die erste Auslager-Transportplattform und zweite Auslager-Transportplattform ohne die Gefahr einer Kollision jeweils im zugeordneten Auslager-Bewegungsbereich mit hoher Bewegungsgeschwindigkeit bewegt werden, sodass eine hohe Auslagerleistung erreicht wird.

Möglich ist aber auch, dass die Auslager-Bewegungsbereiche einander überlappen und somit einen Auslager-Überlappungsbereich aufweisen. Das Steuersystem verhindert dabei Kollisionen der ersten Auslager-Transportplattform und der zweiten Auslager-Transportplattform im Auslager-Überlappungsbereich. Das Steuersystem kann in diesem Fall auch dazu ausgebildet sein, die erste Auslager-Transportplattform und die zweite Auslager-Transportplattform derart anzusteuern, dass die Ladegüter durch die erste Auslager-Transportplattform an die zweite Auslager-Fördervorrichtung abgegeben werden und durch die zweite Auslager-Transportplattform an die erste Auslager-Fördervorrichtung abgegeben werden. Durch diese Steuerungsmaßnahme können die erste Auslager-Transportplattform und zweite Auslager-Transportplattform besonders flexibel eingesetzt werden.

Das Steuersystem kann insbesondere eine Auslager-Steuereinheit und eine Einlager-Steuereinheit umfassen.

Vorteilhaft ist es auch, wenn die Auslager-Vertikalfördervorrichtung von der Einlager-Vertikalfördervorrichtung baulich getrennt ist. Das heißt, es gibt hinsichtlich der mechanischen Komponenten, die für die Bewegung der Transportplattformen nötig sind, keine Überschneidungen. Anders gesagt gibt es keine gemeinsame Nutzung der für die Bewegung der Transportplattformen nötigen mechanischen Komponenten. Dadurch kann der Vorgang der Einlagerung von Ladegütern durch mehrere Einlager-Transportplattformen noch besser vom Vorgang der Auslagerung von Ladegütern durch mehrere Auslager-Transportplattformen entkoppelt werden.

Die Auslager-Vertikalfördervorrichtung und die Einlager-Vertikalfördervorrichtung können in Querrichtung der Regalgasse voneinander distanziert oder im Wesentlichen an derselben Querposition in Querrichtung der Regalgasse aufgestellt werden. Zusätzlich ist es möglich, dass die Auslager-Vertikalfördervorrichtung und die Einlager-Vertikalfördervorrichtung in Längsrichtung der Regalgasse zueinander distanziert oder im Wesentlichen an derselben Längsposition in Längsrichtung der Regalgasse angeordnet werden.

Die Auslager-Vertikalfördervorrichtung und die Einlager-Vertikalfördervorrichtung können insbesondere im Wesentlichen um eine Gassenbreite voneinander distanziert aufgestellt und spiegelbildlich einander gegenüberliegend angeordnet werden.

Möglich ist auch, dass die Auslager-Vertikalfördervorrichtung und die Einlager-Vertikalfördervorrichtung in Längsrichtung der Regalgasse zueinander versetzt und auf derselben Seite der Regalgasse angeordnet werden.

Möglich ist schließlich auch, dass die Auslager-Vertikalfördervorrichtung und die Einlager-Vertikalfördervorrichtung um eine Gassenbreite voneinander distanziert aufgestellt und in Längsrichtung der Regalgasse zueinander versetzt angeordnet werden.

Die Lageranordnung kann generell mehr als zwei Lagerregale und mehr als eine Regalgasse aufweisen. In diesem Fall kann je Regalgasse eine Auslager-Vertikalfördervorrichtung und eine Einlager-Vertikalfördervorrichtung vorgesehen sein.

Die Einlagerung von Ladegütern umfasst die Einlagerung von Ladegütern aus dem Wareneingang (Neuware oder Retourware) und kann auch die Rücklagerung von Ladegütern (die nicht für einen Kommissionierauftrag benötigt wurden) von der einen oder von den mehreren Kommissionierstationen umfassen. Die Auslagerung von Ladegütern umfasst die Auslagerung von Ladegütern, die für einen Kommissionierauftrag benötigt werden.

Vorzugsweise ist die Einlager-Puffervorrichtung zwischen dem ersten Lagerregal und der Einlager-Vertikalfördervorrichtung angeordnet und die Auslager-Puffervorrichtung zwischen dem zweiten Lagerregal und der Auslager-Vertikalfördervorrichtung.

Sofern Einlager-Bewegungsbereiche einen Überlappungsbereich aufweisen, können sie sich vollständig überlappen oder können einander auch nur teilweise überlappen. In äquivalenter Weise können auch Auslager-Bewegungsbereiche einander vollständig oder auch nur teilweise überlappen, sofern einen Überlappungsbereich aufweisen.

Die erste Einlager-Transportplattform und die zweite Einlager-Transportplattform sind insbesondere direkt vertikal übereinander angeordnet. Erfindungsgemäß werden die erste Einlager-Transportplattform und die zweite Einlager-Transportplattform auf einem einzigen Mast bewegt.

Ähnliches gilt für die Auslagerseite. Die erste Auslager-Transportplattform und die zweite Auslager-Transportplattform können direkt vertikal übereinander angeordnet werden. Erfindungsgemäß werden die erste Auslager-Transportplattform und die zweite Auslager-Transportplattform auf einem einzigen Mast bewegt.

Die (mehreren) Einlager-Transportplattformen können somit an einer Einlager-Führungsanordnung (welche von der Einlager-Vertikalfördervorrichtung umfasst ist) vertikal übereinander angeordnet sein, und können durch das Steuersystem unabhängig voneinander verstellt werden. Die (mehreren) Auslager-Transportplattformen können an einer Auslager-Führungsanordnung (welche von der Auslager-Vertikalfördervorrichtung umfasst ist) vertikal übereinander angeordnet sein und können durch das Steuersystem unabhängig voneinander verstellt werden.

Die Einlager-Führungsanordnung für die Einlager-Transportplattformen kann an einem ortsfest aufgestellten Einlager-Vertikalmast ausgebildet sein. Die Auslager-Führungsanordnung für die Auslager-Transportplattformen kann an einem ortsfest aufgestellten Auslager-Vertikalmast ausgebildet sein. Wie bereits erwähnt können der Einlager-Vertikalmast und der Auslager-Vertikalmast baulich voneinander getrennt sein. Vorzugsweise sind der Einlager-Vertikalmast und die Einlager-Transportplattformen sowie die Einlager-Puffervorrichtung in diesem Fall auf einer ersten Seite quer zur Längserstreckung der Regalgasse und außerhalb der Regalgasse angeordnet, und der Auslager-Vertikalmast und die Auslager-Transportplattformen sowie die Auslager-Puffervorrichtung auf einer zweiten Seite quer zur Längserstreckung der Regalgasse und außerhalb der Regalgasse.

Denkbar ist auch, dass der Einlager-Vertikalmast und der Auslager-Vertikalmast kombiniert und durch einen einzigen Einlager- und Auslager-Vertikalmast gebildet werden. In diesem Fall können die Einlager-Transportplattformen sowie die Einlager-Puffervorrichtung auf einer ersten Seite quer zur Längserstreckung der Regalgasse und außerhalb der Regalgasse angeordnet sein und die Auslager-Transportplattformen sowie die Auslager-Puffervorrichtung auf einer zweiten Seite quer zur Längserstreckung der Regalgasse und außerhalb der Regalgasse angeordnet sein. Der (einzige) Einlager- und Auslager-Vertikalmast bildet dann auf einer ersten Seite eine erste Führungsanordnung für die Einlager-Transportplattformen und auf einer zweiten Seite eine zweite Führungsanordnung für die Auslager-Transportplattformen aus. Eine solche Ausführung ist insbesondere dann von Vorteil, wenn die Regalgasse am Einlager-und Auslager-Vertikalmast endet.

Generell kann eine Einlager-Vertikalfördervorrichtung und/oder eine Auslager-Vertikalfördervorrichtung genau einer Regalgasse zugeordnet sein. Denkbar ist aber auch, dass eine Einlager-Vertikalfördervorrichtung und/oder eine Auslager-Vertikalfördervorrichtung mehreren Regalgassen zugeordnet ist. Beispielsweise können an einem einzigen Einlager-Vertikalmast Einlager-Transportplattformen angeordnet sein, die zwei Regalgassen zugeordnet sind. Beispielsweise können zwei übereinander angeordnete Einlager-Transportplattformen einer ersten Regalgasse zugeordnet sein und zwei andere übereinander angeordnete Einlager-Transportplattformen einer zweiten Regalgasse. Gleichermaßen können an einem einzigen Auslager-Vertikalmast Auslager-Transportplattformen angeordnet sein, die zwei Regalgassen zugeordnet sind. Beispielsweise können zwei übereinander angeordnete Auslager-Transportplattformen einer ersten Regalgasse zugeordnet sein und zwei andere übereinander angeordnete Auslager-Transportplattformen einer zweiten Regalgasse.

Vorzugsweise umfasst die erste Einlager-Fördervorrichtung in Einlager-Förderrichtung der Ladegüter hintereinander angeordnete Förderabschnitte, wovon ein erster Förderabschnitt zumindest eine erste Zuförderbahn aufweist, ein zweiter Förderabschnitt eine erste Verteilerbahn, ein dritter Förderabschnitt zumindest eine erste Rückförderbahn und ein vierter Förderabschnitt der Einlager-Vertikalfördervorrichtung zugeordnete erste Einlagerbahnen. Die zumindest erste Zuförderbahn ist mit der ersten Verteilerbahn verbunden und transportiert die Ladegüter von einem Wareneingang an. Die ersten Einlagerbahnen sind mit der ersten Verteilerbahn verbunden und transportieren die Ladegüter zu der jeweiligen Einlager-Vertikalfördervorrichtung an. Die zumindest eine erste Rückförderbahn verbindet die zumindest eine erste Kommissionierstation mit der ersten Verteilerbahn und transportiert nicht benötigte Ladegüter nach einem Kommissioniervorgang von der ersten Kommissionierstation ab.

Die erste Verteilerbahn ist vorzugsweise (jedoch nicht zwingend) durch eine geschlossene erste Einlager-Förderumlaufbahn (Einlager-Loop) gebildet, durch welche eine Anzahl an ersten Zuförderbahnen verbunden werden, welche zu den Einlager-Vertikalfördervorrichtungen hinführen. Von der ersten Einlager-Förderumlaufbahn (Einlager-Loop) können die einzulagernden Ladegüter auf eine oder mehrere erste Einlagerbahnen verteilt werden.

Vorzugsweise umfasst die zweite Einlager-Fördervorrichtung in Einlager-Förderrichtung der Ladegüter hintereinander angeordnete Einlager-Förderabschnitte, wovon ein erster Förderabschnitt zumindest eine zweite Zuförderbahn aufweist, ein zweiter Förderabschnitt eine zweite Verteilerbahn, ein dritter Förderabschnitt zumindest eine zweite Rückförderbahn und ein vierter Förderabschnitt der Einlager-Vertikalfördervorrichtung zugeordnete zweite Einlagerbahnen. Die zweite Zuförderbahn ist mit der zweiten Verteilerbahn verbunden und transportiert die Ladegüter von einem Wareneingang an. Die zweiten Einlagerbahnen sind mit der zweiten Verteilerbahn verbunden und transportieren die Ladegüter zu der jeweiligen Einlager-Vertikalfördervorrichtung an. Die zumindest eine zweite Rückförderbahn verbindet die zweite Kommissionierstation mit der zweiten Verteilerbahn und transportiert die Ladegüter nach einem Kommissioniervorgang von der zweiten Kommissionierstation ab.

Die zweite Verteilerbahn ist vorzugsweise durch eine geschlossene zweite Einlager-Förderumlaufbahn (Einlager-Loop) gebildet, durch welche eine Anzahl an zweiten Einlagerbahnen verbunden werden, welche zu den Einlager-Vertikalfördervorrichtungen hinführen. Von der zweiten Einlager-Förderumlaufbahn (Einlager-Loop) können die einzulagernden Ladegüter auf eine oder mehrere zweite Einlagerbahnen verteilt werden.

Die erste / zweite Zuförderbahn, die erste / zweite Einlager-Verteilerbahn, die erste / zweite Rückförderbahn und die erste / zweite Einlagerbahn können insbesondere jeweils Fördervorrichtungen umfassen, beispielweise Gurtförderer, Rollenförderer und dergleichen.

Der Transfer der Ladegüter von der ersten / zweiten Zuförderbahn auf die erste / zweite Einlager-Verteilerbahn, der Transfer der Ladegüter von der ersten / zweiten Rückförderbahn auf die erste / zweite Einlager-Verteilerbahn und der Transfer der Ladegüter von der ersten / zweiten Einlager-Verteilerbahn auf die erste / zweite Einlagerbahn kann durch Einschleusvorrichtungen und Ausschleusvorrichtungen ermöglicht werden. Die Einschleusvorrichtungen und Ausschleusvorrichtungen umfassen beispielsweise Riemenumsetzer, Röllchenweichen und dergleichen.

Vorzugsweise umfasst die erste Auslager-Fördervorrichtung in Auslager-Förderrichtung der Ladegüter hintereinander angeordnete Auslager-Förderabschnitte, wovon erster Förderabschnitt der Auslager-Vertikalfördervorrichtung zugeordnete erste Auslagerbahnen umfasst, ein zweiter Förderabschnitt eine die ersten Auslagerbahnen verbindende erste Auslager-Verteilerbahn und ein dritter Förderabschnitt zumindest eine zweite Zuförderbahn umfasst. Die zweite Zuförderbahn verbindet die erste Kommissionierstation mit der ersten Auslager-Verteilerbahn und transportiert die Ladegüter zur ersten Kommissionierstation an.

Die erste Auslager-Verteilerbahn ist vorzugsweise (jedoch nicht zwingend) durch eine geschlossene erste Auslager-Förderumlaufbahn (Auslager-Loop) gebildet, durch welche eine Anzahl an von den Auslager-Vertikalfördervorrichtungen wegführenden ersten Auslagerbahnen verbunden werden und die ausgelagerten Ladegüter auf einen oder mehrere erste Kommissionierstationen verteilt werden.

Vorzugsweise umfasst die zweite Auslager-Fördervorrichtung in Auslager-Förderrichtung der Ladegüter hintereinander angeordnete Auslager-Förderabschnitte, wovon ein erster Förderabschnitt der Auslager-Vertikalfördervorrichtung zugeordnete Auslagerbahnen aufweist, ein zweiter Förderabschnitt eine die zweiten Auslagerbahnen verbindende zweite Auslager-Verteilerbahn und ein dritter Förderabschnitt zumindest eine zweite Zuförderbahn umfasst. Die zweite Zuförderbahn verbindet die zweite Kommissionierstation mit der zweiten Auslager-Verteilerbahn und transportiert die Ladegüter zur zweiten Kommissionierstation an.

Die zweite Auslager-Verteilerbahn ist vorzugsweise durch eine geschlossene zweite Auslager-Förderumlaufbahn (Auslager-Loop) gebildet, durch welche eine Anzahl an zweiten Auslagerbahnen verbunden werden, welche von den Auslager-Vertikalfördervorrichtungen wegführen. Von der zweiten Auslager-Förderumlaufbahn (Auslager-Loop) können die ausgelagerten Ladegüter auf eine oder mehrere zweite Kommissionierstationen verteilt werden.

Die erste /zweite Auslagerbahn, die erste / zweite Auslager-Verteilerbahn und die erste / zweite Zuförderbahn umfassen jeweils Fördervorrichtungen, beispielweise Gurtförderer, Rollenförderer und dergleichen.

Der Transfer der Ladegüter von der ersten / zweiten Auslagerbahn auf die erste / zweiten Auslager-Verteilerbahn als auch der Transfer von der ersten / zweiten Auslager-Verteilerbahn auf die erste / zweite Zuförderbahn kann durch Einschleusvorrichtungen und Ausschleusvorrichtungen ermöglicht werden. Die Einschleusvorrichtungen und Ausschleusvorrichtungen können beispielsweise Riemenumsetzer, Röllchenweichen und dergleichen umfassen.

An dieser Stelle wird darauf hingewiesen, dass eine Verteilerbahn oder Förderumlaufbahn (Loop) nicht nur dem Einlagern oder Auslagern dienen muss, sondern auch beide Funktionen übernehmen kann und dann eine kombinierte Einlager-/Auslager-Verteilerbahn oder eine kombinierte Einlager-/Auslager-Förderumlaufbahn (Einlager-/Auslager-Loop) ausbildet. Diese kombinierte Einlager-/Auslager-Verteilerbahn beziehungsweise Einlager-/Auslager-Förderumlaufbahn (Einlager-/Auslager-Loop) kann an die Stelle der weiter oben erwähnten Auslager-Verteilerbahn / Auslager-Förderumlaufbahn (Auslager-Loop) und an die Stelle der weiter oben erwähnten Einlager-Verteilerbahn / Einlager-Förderumlaufbahn (Einlager-Loop) treten. Von der kombinierten Einlager-/Auslager-Förderumlaufbahn weg führende Einlager-Förderabschnitte der Einlager-Fördertechnik können aber weiterhin ausschließlich dem Einlagern von Ladegütern dienen, und zu der kombinierten kombinierte Einlager-/Auslager-Verteilerbahn beziehungsweise Einlager-/Auslager-Förderumlaufbahn hin führende Auslager-Förderabschnitte der Auslager-Fördertechnik können weiterhin ausschließlich dem Auslagern von Ladegütern dienen.

Weiterte vorteilhafte Ausgestaltungen und Weiterbildungen der Erfindung ergeben sich nun aus den Unteransprüchen sowie aus der Beschreibung in Zusammenschau mit den Figuren.

Vorteilhaft ist es, wenn die Auslager-Fördertechnik eine erste Auslager-Fördervorrichtung umfasst, welche einer ersten Auslager-Transportplattform der Auslager-Transportplattformen und einer zweiten Auslager-Transportplattform der Auslager-Transportplattformen zugeordnet und zur Auslagerung eines Ladegutes von der ersten Auslager-Transportplattform und von der zweiten Auslager-Transportplattform anfahrbar ist. Die Lageranordnung umfasst bei dieser Ausführungsvariante also nur eine (einzige) Auslager-Fördervorrichtung. Die Ladegüter werden durch die Auslager-Transportplattformen somit von den Auslager-Bereitstellvorrichtungen zu der (einzigen) Auslager-Fördervorrichtung transportiert. Die (mehreren) Auslager-Transportplattformen sind unabhängig voneinander verstellbar und werden durch das Steuersystem angesteuert.

Vorteilhaft ist es zudem, wenn die Auslager-Fördertechnik eine erste Auslager-Fördervorrichtung und eine zweite Auslager-Fördervorrichtung umfasst, welche in übereinander liegenden Förderebenen angeordnet sind, wobei die Ladegüter über eine erste Auslager-Transportplattform der Auslager-Transportplattformen oder eine zweite Auslager-Transportplattform der Auslager-Transportplattformen von den Auslager-Bereitstellvorrichtungen zu der ersten Auslager-Fördervorrichtung oder von den Auslager-Bereitstellvorrichtungen zu der zweiten Auslager-Fördervorrichtung transportiert werden. Dadurch kann die Auslagerung von Ladegütern auf die erste Auslager-Fördervorrichtung und die zweite Auslager-Fördervorrichtung in flexibler Weise erfolgen.

Vorteilhaft ist es aber auch, wenn die Auslager-Fördertechnik eine erste Auslager-Fördervorrichtung und eine zweite Auslager-Fördervorrichtung umfasst, welche in übereinander liegenden Förderebenen angeordnet sind, wobei
- die erste Auslager-Fördervorrichtung einer ersten Auslager-Transportplattform der Auslager-Transportplattformen zugeordnet und zur Auslagerung eines Ladegutes von der ersten Auslager-Transportplattform anfahrbar ist, und wobei
- die zweite Auslager-Fördervorrichtung einer zweiten Auslager-Transportplattform der Auslager-Transportplattformen zugeordnet und zur Auslagerung eines Ladegutes von der zweiten Auslager-Transportplattform anfahrbar ist.

Bei dieser Ausführungsvariante sind zwei Auslager-Fördervorrichtungen vorgesehen, die den Auslager-Transportplattformen fix zugeordnet sind. Die Ladegüter können somit durch die erste Auslager-Transportplattform von den Auslager-Bereitstellvorrichtungen zu der ersten Auslager-Fördervorrichtung transportiert werden oder von der zweiten Auslager-Transportplattform von den Auslager-Bereitstellvorrichtungen zu der zweiten Auslager-Fördervorrichtung. Die (mehreren) Auslager-Transportplattformen sind wiederum unabhängig voneinander verstellbar und werden durch das Steuersystem angesteuert.

Von Vorteil ist es zudem, wenn die Auslager-Fördertechnik eine erste Auslager-Fördervorrichtung und eine zweite Auslager-Fördervorrichtung umfasst, welche in übereinander liegenden Förderebenen angeordnet sind, wobei
- die erste Auslager-Fördervorrichtung wahlweise einer ersten Auslager-Transportplattform der Auslager-Transportplattformen oder einer zweiten Auslager-Transportplattform der Auslager-Transportplattformen zuordenbar und zum Auslagern eines Ladegutes von der ersten oder zweiten Auslager-Transportplattform anfahrbar ist, und wobei
- die zweite Auslager-Fördervorrichtung wahlweise der ersten Auslager-Transportplattform der Auslager-Transportplattformen oder der zweiten Auslager-Transportplattform der Auslager-Transportplattformen zuordenbar und zum Auslagern eines Ladegutes von der ersten oder zweiten Auslager-Transportplattform anfahrbar ist.

Bei dieser Ausführungsvariante sind zwei Auslager-Fördervorrichtungen vorgesehen, die den Auslager-Transportplattformen flexibel zugeordnet sind. Die Ladegüter können somit durch die erste Auslager-Transportplattform oder die zweite Auslager-Transportplattform von den Auslager-Bereitstellvorrichtungen wahlweise zu einer ersten Auslager-Fördervorrichtung oder zu einer zweiten Auslager-Fördervorrichtung transportiert werden. Die (mehreren) Auslager-Transportplattformen sind wiederum unabhängig voneinander verstellbar und werden durch das Steuersystem angesteuert.

Besonders vorteilhaft ist es auch, wenn die erste Auslager-Fördervorrichtung und die zweite Auslager-Fördervorrichtung fördertechnisch miteinander verbunden sind. Dadurch kann eine beliebige der Auslager-Transportplattformen für die Auslagerung eines Ladeguts verwendet werden (sofern sich das Ladegut im Zugriffsbereich der gewählten Auslager-Transportplattform befindet), auch wenn das Ladegut auf einer bestimmten der Auslager-Fördervorrichtungen transportiert werden soll. Das heißt, auch wenn die erste Auslager-Transportplattform nur einige einer Anzahl von Lagerebenen und die zweite Auslager-Transportplattform nur einige einer Anzahl von Lagerebenen bedienen können, so kann über die Förderverbindung zwischen der ersten Auslager-Fördervorrichtung und zweiten Auslager-Fördervorrichtung bedarfsweise der Förderstrom von der ersten Auslager-Fördervorrichtung auf die zweite Auslager-Fördervorrichtung oder von der zweiten Auslager-Fördervorrichtung auf die erste Auslager-Fördervorrichtung umgelenkt werden.

Auf diese Weise können Ladegüter auf eine zweite Auslager-Fördervorrichtung abgegeben werden und in Folge zu einer ersten Kommissionierstation transportiert werden, welche primär mit der ersten Auslager-Fördervorrichtung fördertechnisch verbunden ist. Dementsprechend können Ladegüter auf eine erste Auslager-Fördervorrichtung abgegeben werden und in Folge zu einer zweiten Kommissionierstation transportiert werden, welche primär mit der zweiten Auslager-Fördervorrichtung fördertechnisch verbunden ist. Demzufolge können die Ladegüter auch "chaotisch" ausgelagert werden, das heißt eine der Auslager-Transportplattformen kann zufällig für die Auslagerung ausgewählt werden, sofern sich das Ladegut im Zugriffsbereich der gewählten Auslager-Transportplattform befindet. Demzufolge unterstützt die vorgestellte Ausführungsvariante auch das "chaotische" Einlagern, das heißt die zufällige Auswahl eines Lagerplatzes für ein einzulagerndes Ladegut. Der steuerungstechnische Aufwand für die Lageranordnung kann damit besonders gering gehalten werden.

Die fördertechnische Verbindung zwischen der ersten Auslager-Fördervorrichtung und zweiten Auslager-Fördervorrichtung kann einfach aufgebaute Fördervorrichtungen umfassen. Die Fördervorrichtungen umfassen jeweils beispielweise einen Gurtförderer, Rollenförderer, Ausschleusförderer, Einschleusförderer und dergleichen oder jeweils eine Vertikalfördervorrichtung. Gurtförderer eignen sich besonders gut für den Höhenausgleich zwischen der ersten Auslager-Fördervorrichtung und zweiten Auslager-Fördervorrichtung. Grundsätzlich kann die fördertechnische Verbindung zwischen der ersten Auslager-Fördervorrichtung und zweiten Auslager-Fördervorrichtung auch eine einzige Fördervorrichtung umfassen, welche beispielweise durch eine Vertikalfördervorrichtung, insbesondere durch einen Spiralförderer, Hublift oder dergleichen gebildet ist. Diese einzige Fördervorrichtung kann dennoch als wechselseitige fördertechnische Verbindung zwischen den Einlager-Fördervorrichtungen und zwischen den Auslager-Fördervorrichtungen beziehungsweise zwischen den Verteilerbahnen fungieren, wenn sie in mehreren Förderrichtungen betrieben werden kann.

Nach einer besonders bevorzugten Ausführung ist die fördertechnische Verbindung zwischen der ersten Auslager-Fördervorrichtung und zweiten Auslager-Fördervorrichtung im Bereich des zweiten Förderabschnittes, das heißt zwischen einer ersten Auslager-Verteilerbahn/Förderumlaufbahn und einer zweiten Auslager-Verteilerbahn/Förderumlaufbahn angeordnet. Diese Ausführung wirkt sich besonders günstig aus, wenn mehrere Auslager-Vertikalfördervorrichtungen vorgesehen sind und die Auslagerbahnen durch die erste / zweite Auslager-Verteilerbahn/Förderumlaufbahn verbunden sind, da eine einzige fördertechnische Verbindung zwischen der ersten Auslager-Fördervorrichtung und zweiten Auslager-Fördervorrichtung genügt. Es vereinfacht sich der Aufbau der Fördertechnik. Dies schließt aber nicht aus, dass auch je Auslager-Vertikalfördervorrichtung zwischen der ersten Auslagerbahn und zweiten Auslagerbahn eine (weitere) fördertechnische Verbindung vorgesehen wird.

Möglich ist aber auch eine Ausführung, nach welcher die fördertechnische Verbindung zwischen der ersten Auslager-Fördervorrichtung und der zweiten Auslager-Fördervorrichtung im Bereich des ersten Förderabschnittes, insbesondere zwischen der ersten Auslagerbahn und zweiten Auslagerbahn angeordnet ist. Diese Ausführung findet beispielweise Anwendung, wenn eine einzige Auslager-Vertikalfördervorrichtung vorgesehen ist.

Günstig ist es, wenn die fördertechnische Verbindung zwischen der ersten Auslager-Fördervorrichtung und zweiten Auslager-Fördervorrichtung eine Zusammenführung der ersten Auslager-Fördervorrichtung und der zweiten Auslager-Fördervorrichtung umfasst. Demzufolge verringert sich die Anzahl der Auslager-Fördervorrichtungen nach der genannten fördertechnischen Verbindung. Die Struktur der Lageranordnung wird durch das Vorsehen einer Zusammenführung somit weiter vereinfacht.

Besonders vorteilhaft ist es darüber hinaus, wenn die fördertechnische Verbindung der ersten Auslager-Fördervorrichtung und der zweiten Auslager-Fördervorrichtung wechselseitig miteinander verbindet. Mit anderen Worten wird durch die fördertechnische Verbindung die erste Auslager-Fördervorrichtung mit der zweiten Auslager-Fördervorrichtung und die zweite Auslager-Fördervorrichtung mit der ersten Auslager-Fördervorrichtung verbunden. Oder noch anders gesagt wird eine Auskreuzung zwischen der ersten Auslager-Fördervorrichtung und der zweiten Auslager-Fördervorrichtung vorgesehen.

Der mit dieser Lageranordnung mögliche Verfahrensablauf kann somit besonders flexibel gestaltet werden. Beispielsweise kann sowohl ein von einer ersten Auslager-Transportplattform auf die erste Auslager-Fördervorrichtung abgegebenes Ladegut auf die zweite Auslager-Fördervorrichtung übergeben werden als auch ein von einer zweiten Auslager-Transportplattform auf die zweite Auslager-Fördervorrichtung abgegebenes Ladegut auf die erste Auslager-Fördervorrichtung.

Durch die oben vorgeschlagenen Maßnahmen wird eine vorteilhafte Variante des Verfahrens ermöglicht, bei der einige der Ladegüter beim Abtransport von einer ersten Auslager-Fördervorrichtung der Auslager-Fördertechnik auf eine zweite Auslager-Fördervorrichtung der Auslager-Fördertechnik und/oder einige der Ladegüter beim Abtransport von der zweiten Auslager-Fördervorrichtung auf die erste Auslager-Fördervorrichtung übergeben werden. Die fördertechnische Verbindung der Auslager-Fördervorrichtungen ermöglicht, dass die ausgelagerten Ladegüter bedarfsweise von der ersten Auslager-Fördervorrichtung auf die zweite Auslager-Fördervorrichtung übergeben werden und/oder umgekehrt.

Vorteilhaft ist es weiterhin, wenn die Einlager-Fördertechnik eine erste Einlager-Fördervorrichtung umfasst, welche einer ersten Einlager-Transportplattform der Einlager-Transportplattformen und einer zweiten Einlager-Transportplattform der Einlager-Transportplattformen zugeordnet und zur Einlagerung eines Ladegutes von der ersten Einlager-Transportplattform und von der zweiten Einlager-Transportplattform anfahrbar ist. Die Lageranordnung umfasst bei dieser Ausführungsvariante also nur eine (einzige) Einlager-Fördervorrichtung. Die Ladegüter werden durch die Einlager-Transportplattformen somit von der (einzigen) Einlager-Fördervorrichtung zu den Einlager-Bereitstellvorrichtungen transportiert. Die (mehreren) Einlager-Transportplattformen sind unabhängig voneinander verstellbar und werden durch das Steuersystem angesteuert.

Vorteilhaft ist es zudem, wenn die Einlager-Fördertechnik eine erste Einlager-Fördervorrichtung und eine zweite Einlager-Fördervorrichtung umfasst, welche in übereinander liegenden Förderebenen angeordnet sind, wobei die Ladegüter über eine erste Einlager-Transportplattform der Einlager-Transportplattformen oder eine zweite Einlager-Transportplattform der Einlager-Transportplattformen von der ersten Einlager-Fördervorrichtung zu den Einlager-Bereitstellvorrichtungen oder von der zweiten Einlager-Fördervorrichtung zu den Einlager-Bereitstellvorrichtungen transportiert werden. Dadurch kann die Einlagerung von Ladegütern von der ersten Einlager-Fördervorrichtung und von der zweiten Einlager-Fördervorrichtung in flexibler Weise erfolgen.

Vorteilhaft ist es aber auch, wenn die Einlager-Fördertechnik eine erste Einlager-Fördervorrichtung und eine zweite Einlager-Fördervorrichtung umfasst, welche in übereinander liegenden Förderebenen angeordnet sind, wobei
- die erste Einlager-Fördervorrichtung einer ersten Einlager-Transportplattform der Einlager-Transportplattformen zugeordnet und zur Einlagerung eines Ladegutes von der ersten Einlager-Transportplattform anfahrbar ist, und wobei
- die zweite Einlager-Fördervorrichtung einer zweiten Einlager-Transportplattform der Einlager-Transportplattformen zugeordnet und zur Einlagerung eines Ladegutes von der zweiten Einlager-Transportplattform anfahrbar ist.

Bei dieser Ausführungsvariante sind zwei Einlager-Fördervorrichtungen vorgesehen, die den Einlager-Transportplattformen fix zugeordnet sind. Die Ladegüter können somit durch die erste Einlager-Transportplattform von der ersten Einlager-Fördervorrichtung zu den Einlager-Bereitstellvorrichtungen transportiert werden oder von der zweiten Einlager-Transportplattform von der zweiten Einlager-Fördervorrichtung zu den Einlager-Bereitstellvorrichtungen. Die (mehreren) Einlager-Transportplattformen sind wiederum unabhängig voneinander verstellbar und werden durch das Steuersystem angesteuert.

Von Vorteil ist es zudem, wenn die Einlager-Fördertechnik eine erste Einlager-Fördervorrichtung und eine zweite Einlager-Fördervorrichtung umfasst, welche in übereinander liegenden Förderebenen angeordnet sind, wobei
- die erste Einlager-Fördervorrichtung wahlweise einer ersten Einlager-Transportplattform der Einlager-Transportplattformen oder einer zweiten Einlager-Transportplattform der Einlager-Transportplattformen zuordenbar und zum Einlagern eines Ladegutes von der ersten oder zweiten Einlager-Transportplattform anfahrbar ist, und wobei
- die zweite Einlager-Fördervorrichtung wahlweise der ersten Einlager-Transportplattform der Einlager-Transportplattformen oder der zweiten Einlager-Transportplattform der
Einlager-Transportplattformen zuordenbar und zum Einlagern eines Ladegutes von der ersten oder zweiten Einlager-Transportplattform anfahrbar ist.

Bei dieser Ausführungsvariante sind zwei Einlager-Fördervorrichtungen vorgesehen, die den Einlager-Transportplattformen flexibel zugeordnet sind. Die Ladegüter können somit durch die erste Einlager-Transportplattform oder die zweite Einlager-Transportplattform wahlweise von der ersten Einlager-Fördervorrichtung oder der zweiten Einlager-Fördervorrichtung zu den Einlager-Bereitstellvorrichtungen transportiert werden. Die (mehreren) Einlager-Transportplattformen sind wiederum unabhängig voneinander verstellbar und werden durch das Steuersystem angesteuert.

Besonders vorteilhaft ist es darüber hinaus, wenn die erste Einlager-Fördervorrichtung und/oder die zweite Einlager-Fördervorrichtung und/oder die erste Auslager-Fördervorrichtung und/oder die zweite Auslager-Fördervorrichtung im mittleren Drittel der vertikalen Erstreckung des ersten oder zweiten Lagerregals angeordnet sind/werden. Dadurch kann die Ein-und/oder Auslagerung von Ladegütern besonders effizient erfolgen, da die dabei von den Transportplattformen zurückzulegenden Wege relativ kurz sind.

Vorteilhaft umfasst ein Kommissioniersystem eine Lageranordnung der oben genannten Art sowie eine erste Kommissionierstation und eine zweite Kommissionierstation, welche durch die fördertechnische Verbindung zwischen der ersten Auslager-Fördervorrichtung und der zweiten Auslager-Fördervorrichtung jeweils sowohl mit der ersten Auslager-Fördervorrichtung als auch der zweiten Auslager-Fördervorrichtung fördertechnisch verbunden sind. Auf diese Weise kann die Auslagerung von Ladegütern von einer Zuteilung zu einer bestimmten Kommissionierstation entkoppelt werden.

Generell ist es von Vorteil, wenn
- von einer Auswerteeinheit (die Teil der Steuereinheit sein kann) ein erster Lagerkennwert für einen ersten Lagerbereich der Regalanordnung und ein zweiter Lagerkennwert für einen zweiten Lagerbereich der Regalanordnung ermittelt und miteinander verglichen werden, wobei der erste Lagerkennwert durch das Verhältnis zwischen vorhandenen Lagerplätzen und belegten Lagerplätzen im ersten Lagerbereich definiert ist und der zweite Lagerkennwert durch das Verhältnis zwischen vorhandenen Lagerplätzen und belegten Lagerplätzen im zweiten Lagerbereich definiert ist, und wobei sich der erste Lagerbereich vertikal anders erstreckt als der zweite Lagerbereich, und
- die Ladegüter im Hinblick auf eine gegenseitige Anpassung von Lagerkennwerten im ersten Lagerbereich und zweiten Lagerbereich in die Regalanordnung eingelagert werden.

Dadurch kann eine ungleichmäßige Auslastung der Lagerplätze in einem ersten Lagerbereich und einem zweiten Lagerbereich und damit eine so genannte "Schieflast" vermieden und eine gleichmäßige Auslastung der Auslager-Bereitstellvorrichtungen, der Regalbediengeräte, der Auslager-Transportplattformen und der Auslager-Fördervorrichtungen beim Auslagern von Ladegütern erreicht werden. Ein Unterschied zwischen dem ersten Lagerkennwert und dem zweiten Lagerkennwert kann beispielsweise durch Bildung der Differenz oder durch Bildung eines Quotienten zwischen dem ersten Lagerkennwert und dem zweiten Lagerkennwert gebildet werden. Die Lagerbereiche sind durch eine "logische" Trennung definiert. Eine "logische" Trennung ist also nicht baulicher Natur. Beispielweise ist der Lagerbereich unterhalb der "logischen" Trennung ein erster Lagerbereich und umfasst eine Anzahl an Lagerebenen und der Lagerbereich oberhalb der "logischen" Trennung ein zweiter Lagerbereich und umfasst eine Anzahl an Lagerebenen. Die Anzahl der Lagerplätze kann im ersten Lagerbereich und zweiten Lagerbereich insbesondere gleich sein. In diesem Fall entspricht der Quotient zwischen dem ersten Lagerkennwert und dem zweiten Lagerkennwert dem Quotienten zwischen der Anzahl der im ersten Lagerbereich eingelagerten Ladegüter und der Anzahl der im zweiten Lagerbereich eingelagerten Ladegüter. Die Lagerbereiche können jeweils eine einzelne Lagerebene oder eine Vielzahl von Lagerebenen umfassen. Die Zuteilung der Lagerbereiche kann statisch sein oder dynamisch (das heißt, die Lagerbereiche verändern über die Zeit ihre Größe und/oder Position).

Generell können die Lagerbereiche voneinander getrennt sein, oder einander überlappen. Liegt ein Überlappungsbereich vor, so liegt auch eine gegenseitige Beeinflussung der Lagerkennwerte vor.

Besonders vorteilhaft ist es darüber hinaus, wenn das Steuersystem
- für die Ansteuerung der ersten Einlager-Transportplattform und der zweiten Einlager-Transportplattform in einem ersten Betriebsmodus derart ausgebildet ist, dass die Einlager-Bewegungsbereiche der ersten Einlager-Transportplattform und der zweiten Einlager-Transportplattform beim Einlagern von Ladegütern einander vertikal überlappen, und
- für die Ansteuerung der ersten Auslager-Transportplattform und der zweiten Auslager-Transportplattform im ersten Betriebsmodus derart ausgebildet ist, dass die Auslager-Bewegungsbereiche der ersten Auslager-Transportplattform und der zweiten Auslager-Transportplattform beim Auslagern von Ladegütern stets vertikal voneinander getrennt sind.

Demgemäß ist ein Verfahren von Vorteil, bei dem
- das Steuersystem eine erste Einlager-Transportplattform und eine zweite Einlager-Transportplattform in einem ersten Betriebsmodus derart ansteuert, dass die Einlager-Bewegungsbereiche der ersten Einlager-Transportplattform und der zweiten Einlager-Transportplattform beim Einlagern von Ladegütern einander vertikal überlappen, und
- das Steuersystem eine erste Auslager-Transportplattform und eine zweite Auslager-Transportplattform im ersten Betriebsmodus derart ansteuert, dass die Auslager-Bewegungsbereiche der ersten Auslager-Transportplattform und der zweiten Auslager-Transportplattform beim Auslagern von Ladegütern stets vertikal voneinander getrennt sind.

Dabei macht man sich den Umstand zunutze, dass die Zuteilung der Lagerplätze zu den einzulagernden Ladegütern in der Regel flexibler gestaltet werden kann als die Zuteilung eines auszulagernden Ladeguts zu einer von mehreren mit der Auslager-Fördertechnik fördertechnisch verbundenen Kommissionierstationen. In der Regel muss ein Ladegut nach einer entsprechenden Anforderung auch schneller ausgelagert werden als dies beim Einlagern der Fall ist (Reaktionszeit). Auch kann die insgesamt für die Einlagerung der Ladegüter zur Verfügung stehende Zeit größer bemessen sein als die für die Auslagerung der Ladegüter zur Verfügung stehende Zeit (Prozesszeit).

Mit anderen Worten macht man sich den Umstand zu Nutze, dass bei der Einlagerung eines Ladeguts in aller Regel auf irgendeinen der unbelegten Lagerplätze zugegriffen werden kann, was insbesondere dann zutrifft, wenn die Ladegüter ungeordnet in einer Lageranordnung gelagert werden. Dem wird dadurch Rechnung getragen, dass die Einlager-Bewegungsbereiche einander überlappen und einen Einlager-Überlappungsbereich aufweisen. Eine Einlager-Transportplattform kann daher einen vergleichsweise großen Bereich an Lagerebenen abdecken.

Im Gegensatz zur Einlagerung wird bei der Auslagerung dagegen in aller Regel auf einen bestimmten Lagerplatz zugegriffen, auf welchem das benötigte Ladegut gelagert ist. Zudem ist der Auslagervorgang in aller Regel zeitkritischer als der Einlagervorgang, da die Zeit von der Bestellung eines Ladeguts bis zur Auslieferung kurz gehalten werden muss. Dem wird dadurch Rechnung getragen, dass die Auslager-Bewegungsbereiche voneinander getrennt sind und keinen Überlappungsbereich aufweisen. Die Auslager-Transportplattformen können daher ohne gegenseitige Beeinflussung und mit hoher Geschwindigkeit innerhalb der zugeordneten Auslager-Bewegungsbereiche bewegt werden.

In einer weitere besonders vorteilhaften Ausführungsvariante des Verfahrens wird
- von einer Auswerteeinheit ein erster Lagerkennwert für einen ersten Lagerbereich der Regalanordnung und ein zweiter Lagerkennwert für einen zweiten Lagerbereich der Regalanordnung ermittelt und miteinander verglichen werden, wobei der erste Lagerkennwert durch das Verhältnis zwischen vorhandenen Lagerplätzen und belegten Lagerplätzen im ersten Lagerbereich definiert ist und der zweite Lagerkennwert durch das Verhältnis zwischen vorhandenen Lagerplätzen und belegten Lagerplätzen im zweiten Lagerbereich definiert ist, und wobei sich der erste Lagerbereich vertikal anders erstreckt als der zweite Lagerbereich,
- das Steuersystem die erste Einlager-Transportplattform und die zweite Einlager-Transportplattform im ersten Betriebsmodus betreibt, wenn ein Unterschied zwischen dem ersten Lagerkennwert und dem zweiten Lagerkennwert über einem ersten Schwellwert liegt (und demzufolge eine ungleichmäßige Belegung der Lagerbereiche vorliegt oder sich die Lagerbereiche mit anderen Worten im Hinblick auf ihre Belegung im Ungleichgewicht befinden),
- das Steuersystem die erste Einlager-Transportplattform und die zweite Einlager-Transportplattform in einem zweiten Betriebsmodus betreibt, wenn ein Unterschied zwischen dem ersten Lagerkennwert und dem zweiten Lagerkennwert unter dem ersten Schwellwert liegt oder unter einem zweiten Schwellwert, der unter dem ersten Schwellwert liegt, (und demzufolge eine im Wesentlichen gleichmäßige Belegung der Lagerbereiche vorliegt oder sich die Lagerbereiche mit anderen Worten im Hinblick auf ihre Belegung im Wesentlichen im Gleichgewicht befinden), wobei die Einlager-Bewegungsbereiche der ersten Einlager-Transportplattform und der zweiten Einlager-Transportplattform beim Einlagern von Ladegütern im zweiten Betriebsmodus vertikal voneinander getrennt sind, und
- die Auslager-Bewegungsbereiche der ersten Auslager-Transportplattform und der zweiten Auslager-Transportplattform beim Auslagern im zweiten Betriebsmodus und unabhängig von einem Lagerkennwert stets vertikal voneinander getrennt sind.

Mit anderen Worten wird die Überlappung der Bewegungsbereiche der Einlager-Transportplattformen für die gegenseitige Anpassung von Lagerkennwerten im ersten Lagerbereich und zweiten Lagerbereich eingesetzt, das heißt für die gegenseitige Angleichung einer relativen Belegung der Lagerbereiche mit Ladegütern.

Durch die vorgeschlagenen Maßnahmen kann eine ungleichmäßige Auslastung der Lagerplätze in einem ersten Lagerbereich und zweiten Lagerbereich und damit eine so genannte "Schieflast" wiederum vermieden und eine gleichmäßige Auslastung der Auslager-Bereitstellvorrichtungen, der Regalbediengeräte, der Auslager-Transportplattformen und der Auslager-Fördervorrichtungen beim Auslagern von Ladegütern erreicht werden. Ein Unterschied zwischen dem ersten Lagerkennwert und dem zweiten Lagerkennwert kann wiederum beispielsweise durch Bildung der Differenz oder durch Bildung eines Quotienten zwischen dem ersten Lagerkennwert und dem zweiten Lagerkennwert gebildet werden. Die Lagerbereiche sind wiederum durch eine "logische" Trennung definiert. Beispielweise ist der Lagerbereich unterhalb der "logischen" Trennung ein erster Lagerbereich und umfasst eine Anzahl an Lagerebenen und der Lagerbereich oberhalb der "logischen" Trennung ein zweiter Lagerbereich und umfasst eine Anzahl an Lagerebenen. Die Anzahl der Lagerplätze kann im ersten Lagerbereich und zweiten Lagerbereich insbesondere gleich sein. In diesem Fall entspricht der Quotient zwischen dem ersten Lagerkennwert und dem zweiten Lagerkennwert dem Quotienten zwischen der Anzahl der im ersten Lagerbereich eingelagerten Ladegüter und der Anzahl der im zweiten Lagerbereich eingelagerten Ladegüter. Die Lagerbereiche können jeweils eine einzelne Lagerebene oder eine Vielzahl von Lagerebenen umfassen. Die Zuteilung der Lagerbereiche kann wiederum statisch sein oder dynamisch (das heißt, die Lagerbereiche verändern über die Zeit ihre Größe und/oder Position).

Vorteilhaft wird jene Variante angewandt, bei der die Umschaltung in den zweiten Betriebsmodus dann erfolgt, wenn ein Unterschied zwischen dem ersten Lagerkennwert und dem zweiten Lagerkennwert unter einem zweiten Schwellwert liegt, der unter dem ersten Schwellwert liegt. Die in diesem Fall vorgesehene Hysterese verhindert ein allzu häufiges Umschalten zwischen dem ersten und dem zweiten Betriebsmodus. Grundsätzlich kann aber auch jene Variante angewandt werden, bei der die Umschaltung in den zweiten Betriebsmodus dann erfolgt, wenn ein Unterschied zwischen dem ersten Lagerkennwert und dem zweiten Lagerkennwert unter dem ersten Schwellwert liegt, also keine Hysterese vorgesehen wird.

Wie die Lagerbereiche können die Einlager-Bewegungsbereiche voneinander getrennt sein, oder einander überlappen.

Vorteilhaft ist es zudem, wenn das Steuersystem die erste Auslager-Transportplattform und die zweite Auslager-Transportplattform im ersten Betriebsmodus oder im zweiten Betriebsmodus betreibt, wenn eine Betriebsfähigkeit der ersten Auslager-Transportplattform und der zweiten Auslager-Transportplattform und der ersten Auslager-Fördervorrichtung und der zweiten Auslager-Fördervorrichtung durch eine Diagnoseeinheit festgestellt wird (oder die Betriebsfähigkeit nicht beeinträchtigt ist). Mit anderen Worten werden die Auslager-Transportplattform mit getrennten Auslager-Bewegungsbereichen betrieben, unabhängig davon, ob die Einlager-Bewegungsbereiche ebenfalls voneinander getrennt sind oder einander überlappen.

Besonders vorteilhaft ist es auch, wenn das Steuersystem die erste Auslager-Transportplattform und die zweite Auslager-Transportplattform in einem dritten Betriebsmodus oder in einem vierten Betriebsmodus betreibt, wenn eine Beeinträchtigung der Betriebsfähigkeit der ersten Auslager-Transportplattform oder der zweiten Auslager-Transportplattform oder der ersten Auslager-Fördervorrichtung oder der zweiten Auslager-Fördervorrichtung durch eine Diagnoseeinheit festgestellt wird (oder die Betriebsfähigkeit nicht mehr gegeben ist), wobei
- die Auslager-Bewegungsbereiche der ersten Auslager-Transportplattform und der zweiten Auslager-Transportplattform beim Auslagern von Ladegütern einander sowohl im dritten Betriebsmodus als auch im vierten Betriebsmodus vertikal überlappen,
- die Einlager-Bewegungsbereiche der ersten Einlager-Transportplattform und der zweiten Einlager-Transportplattform beim Einlagern von Ladegütern einander im dritten Betriebsmodus vertikal überlappen und
- die Einlager-Bewegungsbereiche der ersten Einlager-Transportplattform und der zweiten Einlager-Transportplattform beim Einlagern von Ladegütern im vierten Betriebsmodus vertikal voneinander getrennt sind.

Bei dieser Variante des vorgestellten Verfahrens wird die mehrfache Anordnung von Auslager-Transportplattformen und/oder Auslager-Fördervorrichtungen im Fehlerfall dahingehend ausgenutzt, dass die strikte Trennung der Bewegungsbereiche für die Auslager-Transportplattformen im Fehlerfall aufgehoben wird, um den automatisierten Lagerbetrieb auch bei Ausfall einer der Auslager-Transportplattformen und/oder bei Ausfall einer der Auslager-Fördervorrichtungen aufrechtzuerhalten. Beispielsweise kann die (untere) erste Auslager-Transportplattform die (obere) zweite Auslager-Fördervorrichtung anfahren, wenn die (untere) erste Auslager-Fördervorrichtung blockiert ist, und so weiter.

Je nachdem, ob die Funktion der ersten Auslager-Transportplattform oder der zweiten Auslager-Transportplattform beeinträchtigt ist, kann
- die erste Auslager-Fördervorrichtung wahlweise der ersten Auslager-Transportplattform der Auslager-Transportplattformen oder der zweiten Auslager-Transportplattform der Auslager-Transportplattformen zugeordnet werden und zum Auslagern/Abtransport eines Ladegutes von der ersten Auslager-Transportplattform oder zweiten Auslager-Transportplattform angefahren werden, oder
- die zweite Auslager-Fördervorrichtung wahlweise der ersten Auslager-Transportplattform der Auslager-Transportplattformen oder der zweiten Auslager-Transportplattform der Auslager-Transportplattformen zugeordnet werden und zum Auslagern/Abtransport eines Ladegutes von der ersten Auslager-Transportplattform oder zweiten Auslager-Transportplattform angefahren werden.

Je nachdem, ob die Funktion der ersten Auslager-Fördervorrichtung oder der zweiten Auslager-Fördervorrichtung beeinträchtigt ist, kann
- die erste Auslager-Transportplattform wahlweise der ersten Auslager-Fördervorrichtung oder der zweiten Auslager-Fördervorrichtung zugeordnet und zum Auslagern/Abtransport eines Ladegutes von der ersten Auslager-Transportplattform angefahren werden, oder
- die zweite Auslager-Transportplattform wahlweise der ersten Auslager-Fördervorrichtung oder der zweiten Auslager-Fördervorrichtung zugeordnet und zum Auslagern/Abtransport eines Ladegutes von der zweiten Auslager-Transportplattform angefahren werden.

Günstig ist es weiterhin, wenn
- von einer Auswerteeinheit ein erster Lagerkennwert für einen ersten Lagerbereich der Regalanordnung und ein zweiter Lagerkennwert für einen zweiten Lagerbereich der Regalanordnung ermittelt und miteinander verglichen werden, wobei der erste Lagerkennwert durch das Verhältnis zwischen vorhandenen Lagerplätzen und belegten Lagerplätzen im ersten Lagerbereich definiert ist und der der zweite Lagerkennwert durch das Verhältnis zwischen vorhandenen Lagerplätzen und belegten Lagerplätzen im zweiten Lagerbereich definiert ist, und wobei sich der erste Lagerbereich vertikal anders erstreckt als der zweite Lagerbereich,
- das Steuersystem die erste Einlager-Transportplattform und zweite Einlager-Transportplattform im dritten Betriebsmodus betreibt, wenn ein Unterschied zwischen dem ersten Lagerkennwert und dem zweiten Lagerkennwert über einem ersten Schwellwert liegt (und demzufolge eine ungleichmäßige Belegung der Lagerbereiche vorliegt oder sich die Lagerbereich mit anderen Worten im Hinblick auf ihre Belegung im Ungleichgewicht befinden),
- das Steuersystem die erste Einlager-Transportplattform und zweite Einlager-Transportplattform in einem vierten Betriebsmodus betreibt, wenn ein Unterschied zwischen dem ersten Lagerkennwert und dem zweiten Lagerkennwert unter dem ersten Schwellwert liegt oder unter einem zweiten Schwellwert, der unter dem ersten Schwellwert liegt (und demzufolge eine im Wesentlichen gleichmäßige Belegung der Lagerbereiche vorliegt oder sich die Lagerbereich mit anderen Worten im Hinblick auf ihre Belegung im Wesentlichen im Gleichgewicht befinden).

Bei dieser Ausführungsvariante werden die einlagerseitig im ersten und zweiten Betriebsmodus vorgesehene Maßnahmen auf den dritten und vierten Betriebsmodus übertragen. Einlagerseitig entspricht der dritte Betriebsmodus somit dem ersten Betriebsmodus, und der vierte Betriebsmodus entspricht dem zweiten Betriebsmodus.

Vorteilhaft ist es auch, wenn der Einlager-Bewegungsbereich der ersten Einlager-Transportplattform (insbesondere im zweiten und vierten Betriebsmodus) den Lagerebenen des ersten Lagerbereichs und der Einlager-Bewegungsbereich der zweiten Einlager-Transportplattform (insbesondere im zweiten und vierten Betriebsmodus) den Lagerebenen des zweiten Lagerbereichs zugeordnet wird.

Dadurch werden die Lagerkennwerte nicht nur auf die Lagerbereiche bezogen, sondern auch auf die Einlager-Bewegungsbereiche der Einlager-Transportplattformen. Der Einlagervorgang beziehungsweise der davor nötige steuerungstechnische Aufwand können dadurch weiter vereinfacht werden.

Besonders vorteilhaft ist es, wenn
- der erste Einlager-Bewegungsbereich bei einem Wechsel vom zweiten Betriebsmodus in den ersten Betriebsmodus oder vom vierten Betriebsmodus in den dritten Betriebsmodus beibehalten und der zweite Einlager-Bewegungsbereich auf den ersten Einlager-Bewegungsbereich ausgedehnt wird, wenn der zweite Lagerbereich im zweiten/vierten Betriebsmodus im Vergleich zum ersten Lagerbereich übermäßig stark durch Ladegüter belegt ist. Die oben angesprochene Zustandsänderung betrifft also einen Wechsel von einem Betriebsmodus, in dem die Einlager-Bewegungsbereiche voneinander getrennt sind, in einen Betriebsmodus, in dem die Einlager-Bewegungsbereiche einander überlappen. Der zweite Einlager-Bewegungsbereich umfasst bei dieser Ausführungsform nach dem genannten Wechsel also den im zweiten/vierten Betriebsmodus gültigen ersten Einlager-Bewegungsbereich und den im zweiten/vierten Betriebsmodus gültigen zweiten Einlager-Bewegungsbereich, gegebenenfalls abzüglich einer von der zweiten Einlager-Transportplattform im ersten Einlager-Bewegungsbereich bauartbedingt nicht erreichbaren Lagerebene.

Besonders vorteilhaft ist es auch, wenn
- der zweite Einlager-Bewegungsbereich bei einem Wechsel vom zweiten Betriebsmodus in den ersten Betriebsmodus oder vom vierten Betriebsmodus in den dritten Betriebsmodus beibehalten und der erste Einlager-Bewegungsbereich auf den zweiten Einlager-Bewegungsbereich ausgedehnt wird, wenn der erste Lagerbereich im zweiten/vierten Betriebsmodus im Vergleich zum zweiten Lagerbereich übermäßig stark durch Ladegüter belegt ist. Die oben angesprochene Zustandsänderung betrifft also ebenfalls einen Wechsel von einem Betriebsmodus, in dem die Einlager-Bewegungsbereiche voneinander getrennt sind, in einen Betriebsmodus, in dem die Einlager-Bewegungsbereiche einander überlappen. Der erste Einlager-Bewegungsbereich umfasst bei dieser Ausführungsform nach dem genannten Wechsel also den im zweiten/vierten Betriebsmodus gültigen ersten Einlager-Bewegungsbereich und den im zweiten/vierten Betriebsmodus gültigen zweiten Einlager-Bewegungsbereich, gegebenenfalls abzüglich einer von der ersten Einlager-Transportplattform im zweiten Einlager-Bewegungsbereich bauartbedingt nicht erreichbaren Lagerebene.

Besonders vorteilhaft ist es auch, wenn
- der erste Einlager-Bewegungsbereich nach einem Wechsel vom ersten Betriebsmodus in den zweiten Betriebsmodus oder vom dritten Betriebsmodus in den vierten Betriebsmodus (keine Überlappung der Einlager-Bewegungsbereiche) dem ersten Einlager-Bewegungsbereich vor einem Wechsel vom zweiten Betriebsmodus in den ersten Betriebsmodus / vom vierten Betriebsmodus in den dritten Betriebsmodus entspricht und
- der zweite Einlager-Bewegungsbereich und nach einem Wechsel vom ersten Betriebsmodus in den zweiten Betriebsmodus oder vom dritten Betriebsmodus in den vierten Betriebsmodus (keine Überlappung der Einlager-Bewegungsbereiche) dem zweiten Einlager-Bewegungsbereich vor einem Wechsel vom zweiten Betriebsmodus in den ersten Betriebsmodus / vom vierten Betriebsmodus in den dritten Betriebsmodus entspricht.

Mit anderen Worten werden der erste Einlager-Bewegungsbereich und der zweite Einlager-Bewegungsbereich nach einem Wechsel vom ersten Betriebsmodus in den zweiten Betriebsmodus oder vom dritten Betriebsmodus in den vierten Betriebsmodus auf ihre ursprüngliche Größe zurückgeschaltet.

Generell ist es günstig, wenn die Ladegüter innerhalb des ersten Lagerbereichs und/oder innerhalb des zweiten Lagerbereichs chaotisch in die Regalanordnung eingelagert werden. Dadurch kann der steuerungstechnische Aufwand für die Einlagerung der Ladegüter gering gehalten werden.

Generell ist es auch von Vorteil, wenn die in die Regalanordnung einzulagernden Ladegüter chaotisch und/oder gleichmäßig auf eine erste Einlager-Fördervorrichtung und eine zweite Einlager-Fördervorrichtung der Einlager-Fördertechnik aufgeteilt werden. Dadurch kann der steuerungstechnische Aufwand für die Anförderung der Ladegüter gering gehalten werden. Es existiert in der Einlager-Fördertechnik somit ein "Y-Stück", mit welchem Ladegüter wahlweise auf die erste Einlager-Fördervorrichtung oder die zweite Einlager-Fördervorrichtung übergeben werden können. Alternativ oder zusätzlich ist auch hierfür auch eine wechselseitige fördertechnische Verbindung zwischen der ersten Einlager-Fördervorrichtung und der zweiten Einlager-Fördervorrichtung nutzbar.

Die Betriebsmodi können hinsichtlich der Anordnung der Einlager-Bewegungsbereiche und der Auslager-Bewegungsbereiche also auf folgende Weise zusammengefasst werden:

| | Einlagerseite | Auslagerseite |
|---|---|---|
| Erster Betriebsmodus | Überlappung Bewegungsbereiche | keine Überlappung |
| Zweiter Betriebsmodus | keine Überlappung | keine Überlappung |
| Dritter Betriebsmodus | Überlappung Bewegungsbereiche | Überlappung Bewegungsbereiche |
| Vierter Betriebsmodus | keine Überlappung | Überlappung Bewegungsbereiche |

Die Betriebsmodi können hinsichtlich der Grundlage für die Auswahl eines bestimmten Betriebsmodus darüber hinaus auf folgende Weise zusammengefasst werden:

| | Lagerbereiche | Auslagerseite |
|---|---|---|
| Erster Betriebsmodus | ungleicher Füllgrad | einwandfreie Funktion |
| Zweiter Betriebsmodus | gleicher Füllgrad | einwandfreie Funktion |
| Dritter Betriebsmodus | ungleicher Füllgrad | Funktionale Einschränkung |
| Vierter Betriebsmodus | gleicher Füllgrad | Funktionale Einschränkung |

An dieser Stelle wird angemerkt, dass sich die zur vorgestellten Lageranordnung/Regalanordnung und zum vorgestellten Kommissioniersystem offenbarten Varianten und Vorteile gleichermaßen auf das vorgestellte Verfahren beziehen und umgekehrt.

Zum besseren Verständnis der Erfindung wird diese anhand der nachfolgenden Figuren näher erläutert.

Es zeigen jeweils in stark vereinfachter, schematischer Darstellung:
- Fig. 1: eine schematisch dargestellte Lageranordnung mit einer Regalanordnung in Schrägansicht;
- Fig. 2: eine erste beispielhafte Ausführung eines Kommissioniersystems, bei dem die Einlager- und Auslagerfördertechnik in einem Regalgassenabschnitt einer Regalgasse angeordnet ist, in Schrägansicht;
- Fig. 3: eine zweite beispielhafte Ausführung eines Kommissioniersystems, bei dem die Einlager- und Auslagerfördertechnik in verschiedenen Regalgassenabschnitten einer Regalgasse angeordnet ist, in Schrägansicht;
- Fig. 4: eine schematisch dargestellte Lageranordnung in Seitenansicht in einem ersten Betriebsmodus mit überlappenden Einlager-Bewegungsbereichen und getrennten Auslager-Bewegungsbereichen;
- Fig. 5: die Lageranordnung aus Fig. 4 in einem zweiten Betriebsmodus mit getrennten Einlager-Bewegungsbereichen und getrennten Auslager-Bewegungsbereichen;
- Fig. 6: die Lageranordnung aus Fig. 4 in einem dritten Betriebsmodus mit überlappenden Einlager-Bewegungsbereichen und überlappenden Auslager-Bewegungsbereichen und
- Fig. 7: die Lageranordnung aus Fig. 4 in einem vierten Betriebsmodus mit getrennten Einlager-Bewegungsbereichen und überlappenden Auslager-Bewegungsbereichen.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und bei einer Lageänderung sinngemäß auf die neue Lage zu übertragen.

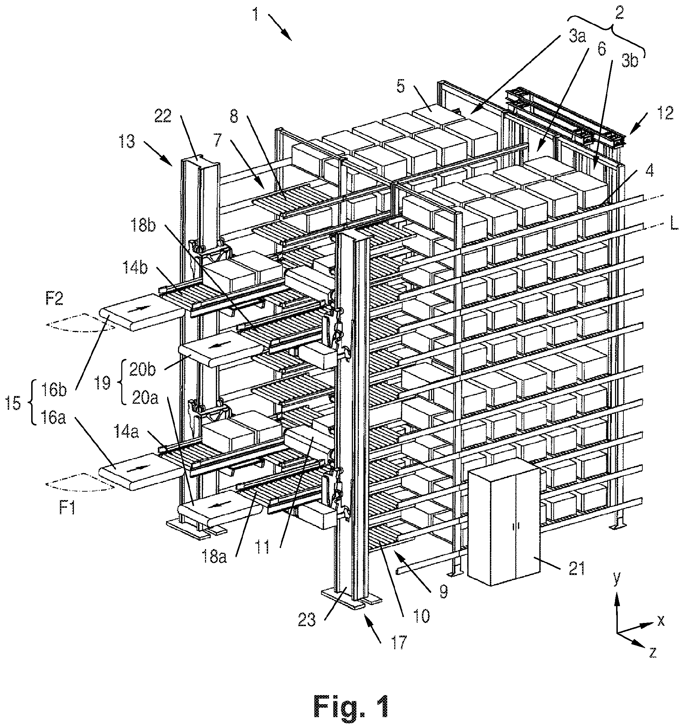

Fig. 1 zeigt ein Beispiel einer Lageranordnung 1 in Schrägansicht. Die Lageranordnung 1 umfasst eine Regalanordnung 2 mit einem ersten Lagerregal 3a und einem zweiten Lagerregal 3b jeweils mit Lagerplätzen 4 für Ladegüter 5, wobei die Lagerplätze 4 in übereinander liegenden Lagerebenen L angeordnet sind. Die Regalanordnung 2 umfasst auch eine Regalgasse 6 zwischen dem ersten Lagerregal 3a und dem zweiten Lagerregal 3b.

Die Lageranordnung 1 umfasst weiterhin eine Einlager-Puffervorrichtung 7 mit Einlager-Bereitstellvorrichtungen 8, welche in übereinander liegenden Bereitstellebenen angeordnet und jeweils für das Zwischenpuffern eines Ladeguts 5 oder mehrerer Ladegüter 5 ausgebildet sind. In diesem Beispiel ist je eine Bereitstellebene je einer Lagerebene L zugeordnet und daher nicht gesondert bezeichnet. Grundsätzlich wäre aber auch eine andere Zuordnung möglich.

Die Lageranordnung 1 umfasst darüber hinaus eine Auslager-Puffervorrichtung 9 mit Auslager-Bereitstellvorrichtungen 10, welche in übereinander liegenden Bereitstellebenen angeordnet und ebenfalls jeweils für das Zwischenpuffern eines Ladeguts 5 oder mehrerer Ladegüter 5 ausgebildet sind. In diesem Beispiel ist je eine Bereitstellebene je einer Lagerebene L zugeordnet. Grundsätzlich wäre aber auch hier eine andere Zuordnung möglich.

Die Lageranordnung 1 umfasst zudem Regalbediengeräte 11, welche in der Regalgasse 6 vor den Lagerplätzen 4, vor den Einlager-Bereitstellvorrichtungen 8 und vor den Auslager-Bereitstellvorrichtungen 10 jeweils auf einer horizontalen Fahrebene verfahrbar sind. Die Regalbediengeräte 11weisen jeweils eine Lastaufnahmevorrichtung auf und sind zum Transport der Ladegüter 5 von den Einlager-Bereitstellvorrichtungen 8 zu den Lagerplätzen 4 und zum Transport der Ladegüter 5 von den Lagerplätzen 4 zu den Auslager-Bereitstellvorrichtungen 10 ausgebildet. Mit anderen Worten erfolgt die fördertechnische Verbindung der Einlager-Bereitstellvorrichtungen 8 mit den Lagerplätzen 4 und die fördertechnische Verbindung der Lagerplätze 4 mit den Auslager-Bereitstellvorrichtungen 10 über die Regalbediengeräte 11. In diesem Beispiel ist je eine Fahrebene je einer Lagerebene L zugeordnet und daher nicht gesondert bezeichnet, jedoch gibt es weniger Regalbediengeräte 11 als Fahrebenen. Die Regalbediengeräte 11 können in diesem Beispiel mit einem nicht im Detail dargestellten Regalbediengeräte-Heber 12 von einer Fahrebene auf eine andere Fahrebene bewegt werden. Es kann aber auch auf jeder Fahrebene ein Regalbediengerät 11 vorhanden sein, sodass der Regalbediengeräte-Heber 12 entfallen kann.

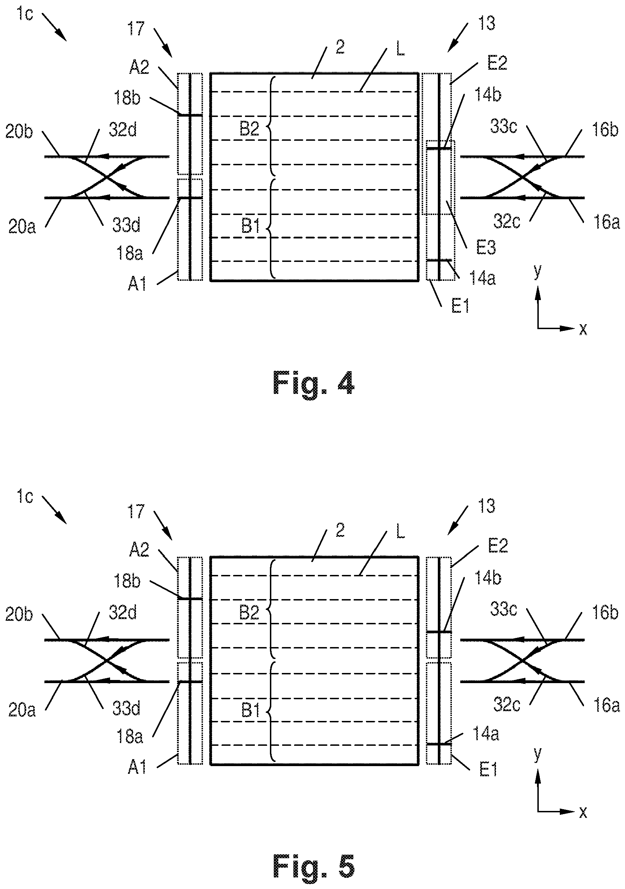

Weiterhin umfasst die Lageranordnung 1 eine der Regalgasse 6 zugeordnete Einlager-Vertikalfördervorrichtung 13 mit mehreren unabhängig voneinander ansteuerbaren und jeweils in einem Einlager-Bewegungsbereich E1, E2 (siehe Fig. 4 bis 7) relativ gegenüber den Bereitstellebenen verstellbaren Einlager-Transportplattformen 14a, 14b und eine der Regalgasse 6 zugeordnete und an die Einlager-Vertikalfördervorrichtung 13 fördertechnisch angeschlossene Einlager-Fördertechnik 15 zum Antransport von Ladegütern 5 zu der Einlager-Vertikalfördervorrichtung 13. Die Ladegüter 5 sind dabei mittels der Einlager-Transportplattformen 14a, 14b von der Einlager-Fördertechnik 15 zu den Einlager-Bereitstellvorrichtungen 8 transportierbar. Die Ladegüter 5 sind mit Hilfe der Einlager-Transportplattformen 14a, 14b nicht nur vertikal, sondern auch horizontal bewegbar. Zu diesem Zweck weisen die Einlager-Transportplattformen 14a, 14b jeweils eine Transportvorrichtung auf, in diesem Beispiel Rollenförderer. Denkbar wäre aber beispielsweise auch der Einsatz von Förderbändern.

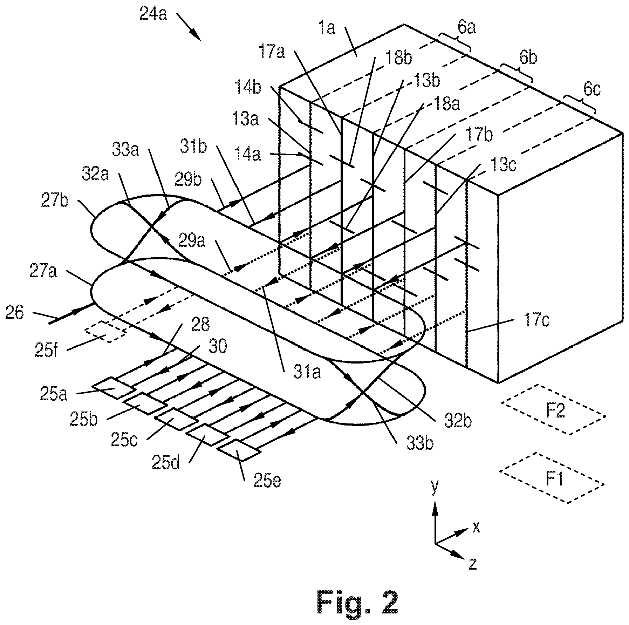

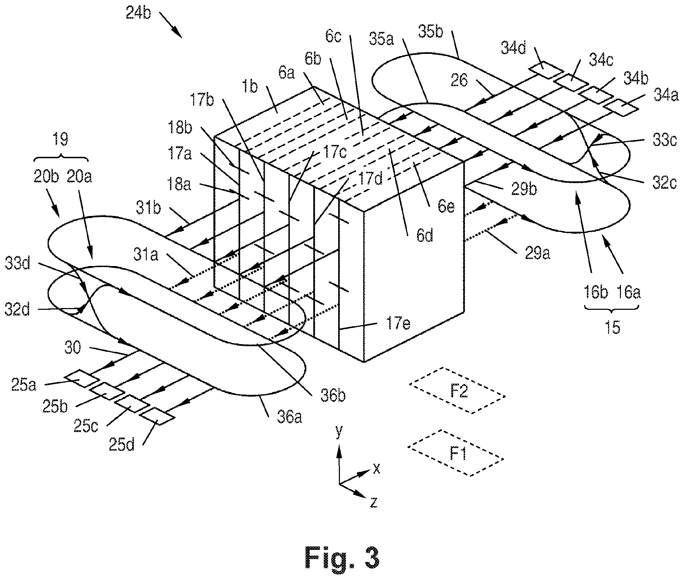

In diesem Beispiel umfasst die Einlager-Fördertechnik 15 eine erste Einlager-Fördervorrichtung 16a in einer ersten Förderebene F1 und eine zweite Einlager-Fördervorrichtung 16b in einer zweiten Förderebene F2. Denkbar wäre aber auch, dass die Einlager-Fördertechnik 15 nur eine Einlager-Fördervorrichtung 16a aufweist. Diese kann insbesondere auf dem Höhenniveau der untersten Lagerebene L angeordnet sein. Die Einlager-Fördervorrichtungen 16a, 16b sind hier als einfache Einlagerbahnen ausgebildet, sie können aber auch eine komplexere Form annehmen (siehe auch die Fig. 2 und 3).

Die Lageranordnung 1 umfasst auch eine der Regalgasse 6 zugeordnete Auslager-Vertikalfördervorrichtung 17 mit mehreren unabhängig voneinander ansteuerbaren und jeweils in einem Auslager-Bewegungsbereich A1, A2 (siehe Fig. 4 bis 7) relativ gegenüber den Bereitstellebenen verstellbaren Auslager-Transportplattformen 18a, 18b und eine der Regalgasse 6 zugeordnete und an die Auslager-Vertikalfördervorrichtung 17 fördertechnisch angeschlossene Auslager-Fördertechnik 19 zum Abtransport von Ladegütern 5 von der Auslager-Vertikalfördervorrichtung 17, wobei die Ladegüter 5 mittels der Auslager-Transportplattformen 18a, 18b von den Auslager-Bereitstellvorrichtungen 10 zu der Auslager-Fördertechnik 19 transportierbar sind. Die Ladegüter 5 sind mit Hilfe der Auslager-Transportplattformen 18a, 18b nicht nur vertikal, sondern auch horizontal bewegbar. Zu diesem Zweck weisen die Auslager-Transportplattformen 18a, 18b jeweils eine Transportvorrichtung auf, in diesem Beispiel Rollenförderer. Denkbar wäre aber beispielsweise auch der Einsatz von Förderbändern.

In diesem Beispiel umfasst die Auslager-Fördertechnik 19 eine erste Auslager-Fördervorrichtung 20a in der ersten Förderebene F1 und eine zweite Auslager-Fördervorrichtung 20b in der zweiten Förderebene F2. Denkbar wäre aber auch, dass die Auslager-Fördertechnik 19 nur eine Auslager-Fördervorrichtung 20a aufweist. Diese kann insbesondere auf dem Höhenniveau der untersten Lagerebene L angeordnet sein. Die Auslager-Fördervorrichtungen 20a, 20b sind hier als einfache Auslagerbahnen ausgebildet, sie können aber auch eine komplexere Form annehmen (siehe auch die Fig. 2 und 3).

Schließlich umfasst die Lageranordnung 1 ein Steuersystem 21, durch welches die Einlager-Transportplattformen 14a, 14b voneinander unabhängig angesteuert werden und durch welches die Auslager-Transportplattformen 18a, 18b voneinander unabhängig angesteuert werden können. Zudem können die Einlager-Transportplattformen 14a, 14b durch das Steuersystem 21 unabhängig von den Auslager-Transportplattformen 18a, 18b angesteuert werden und umgekehrt. Das Steuersystem 21 ist in der Fig. 1 symbolisch als Schaltschrank dargestellt, das mit den Aktoren und Sensoren der Lageranordnung 1 drahtgebunden oder drahtlos verbunden ist. Selbstverständlich kann es aber auch in einer anderen Bauform in Erscheinung treten. Das Steuersystem 21 kann insbesondere auch eine Einlager-Steuereinheit und eine davon getrennte Auslager-Steuereinheit umfassen.

In dem gezeigten Beispiel ist die Einlager-Puffervorrichtung 7 zwischen dem ersten Lagerregal 3a und der Einlager-Vertikalfördervorrichtung 13 angeordnet und die Auslager-Puffervorrichtung 9 zwischen dem zweiten Lagerregal 3b und der Auslager-Vertikalfördervorrichtung 17. Grundsätzlich ist aber auch eine andere Anordnung denkbar, insbesondere können die Einlagerseite und die Auslagerseite vertauscht sein.

Die (mehreren) Einlager-Transportplattformen 14a, 14b sind an einer Einlager-Führungsanordnung der Einlager-Vertikalfördervorrichtung 13 vertikal übereinander angeordnet und können durch das Steuersystem 21 unabhängig voneinander verstellt werden. Die Einlager-Führungsanordnung für die Einlager-Transportplattformen 14a, 14b kann an einem ortsfest aufgestellten Einlager-Vertikalmast 22 ausgebildet sein, insbesondere an dem einzigen Einlager-Vertikalmast 22, so wie das in der Fig. 1 der Fall ist.

Die (mehreren) Auslager-Transportplattformen 18a, 18b sind an einer Auslager-Führungsanordnung der Auslager-Vertikalfördervorrichtung 17 vertikal übereinander angeordnet und können durch das Steuersystem 21 unabhängig voneinander verstellt werden. Die Auslager-Führungsanordnung für die Auslager-Transportplattformen 18a, 18b kann an einem ortsfest aufgestellten Auslager-Vertikalmast 23 ausgebildet sein, insbesondere an dem einzigen Einlager-Vertikalmast 23, so wie das in der Fig. 1 der Fall ist.

Die Einlager-Vertikalfördervorrichtung 13 kann von der Auslager-Vertikalfördervorrichtung 17 baulich getrennt sein, so wie das im dargestellten Beispiel der Fall ist. Das heißt, es gibt hinsichtlich der mechanischen Komponenten, die für die Bewegung der Einlager-Transportplattformen 14a, 14b und der Auslager-Transportplattformen 18a, 18b nötig sind, keine Überschneidungen. Anders gesagt gibt es keine gemeinsame Nutzung der für die Bewegung der Einlager-Transportplattformen 14a, 14b und der Auslager-Transportplattformen 18a, 18b nötigen mechanischen Komponenten.

Dadurch können der Vorgang der Einlagerung von Ladegütern 5 durch mehrere Einlager-Transportplattformen 14a, 14b und der Vorgang der Auslagerung von Ladegütern 5 durch mehrere Auslager-Transportplattformen 18a, 18b gut voneinander entkoppelt werden.

Die Einlager-Vertikalfördervorrichtung 13 und die Auslager-Vertikalfördervorrichtung 17 können in einer Querrichtung z normal zur Längserstreckung x der Regalgasse 6 voneinander distanziert oder im Wesentlichen an derselben Querposition in Querrichtung z der Regalgasse 6 aufgestellt werden. Zusätzlich ist es möglich, dass die Einlager-Vertikalfördervorrichtung 13 und die Auslager-Vertikalfördervorrichtung 17 in Längsrichtung x der Regalgasse 6 voneinander distanziert oder im Wesentlichen an derselben Längsposition in Längsrichtung x der Regalgasse 6 angeordnet werden.

Die Einlager-Vertikalfördervorrichtung 13 und die Auslager-Vertikalfördervorrichtung 17 können insbesondere im Wesentlichen um eine Gassenbreite voneinander distanziert aufgestellt und spiegelbildlich einander gegenüberliegend angeordnet werden, so wie das in der Fig. 1 der Fall ist.

Möglich ist auch, dass die Einlager-Vertikalfördervorrichtung 13 und die Auslager-Vertikalfördervorrichtung 17 in Längsrichtung x der Regalgasse 6 zueinander versetzt und auf derselben Seite der Regalgasse 6 angeordnet werden (nicht dargestellt).

Möglich ist schließlich auch, dass die Einlager-Vertikalfördervorrichtung 13 und die Auslager-Vertikalfördervorrichtung 17 um eine Gassenbreite voneinander distanziert aufgestellt und in Längsrichtung x der Regalgasse 6 zueinander versetzt angeordnet werden.

In obigem Zusammenhang kann der Einlager-Vertikalmast 22 insbesondere vom Auslager-Vertikalmast 23 baulich voneinander getrennt sein, so wie das bereits weiter oben erwähnt wurde. Vorzugsweise sind der Einlager-Vertikalmast 22 und die Einlager-Transportplattformen 14a, 14b sowie die Einlager-Puffervorrichtung 7 in diesem Fall auf eine erste Seite in einer Querrichtung z normal zu einer Längserstreckung x der Regalgasse 6 und außerhalb der Regalgasse 6 angeordnet, und der Auslager-Vertikalmast 23 und die Auslager-Transportplattformen 18a, 18b sowie die Auslager-Puffervorrichtung 9 auf einer zweiten Seite in der Querrichtung z normal zur Längserstreckung x der Regalgasse 6 und außerhalb der Regalgasse 6.

Denkbar ist aber auch, dass der Einlager-Vertikalmast 22 und der Auslager-Vertikalmast 23 kombiniert und durch einen einzigen Einlager- und Auslager-Vertikalmast gebildet werden (nicht dargestellt). In diesem Fall können die Einlager-Transportplattformen 14a, 14b sowie die Einlager-Puffervorrichtung 7 auf einer ersten Seite in der Querrichtung z normal zur Längserstreckung x der Regalgasse 6 und außerhalb der Regalgasse 6 angeordnet sein und die Auslager-Transportplattformen 18a, 18b sowie die Auslager-Puffervorrichtung 9 auf einer zweiten Seite in der Querrichtung z normal zur Längserstreckung x der Regalgasse 6 und außerhalb der Regalgasse 6 angeordnet sein. Der (einzige) Einlager- und Auslager-Vertikalmast bildet dann auf einer ersten Seite eine erste Führungsanordnung für die Einlager-Transportplattformen 14a, 14b und auf einer zweiten Seite eine zweite Führungsanordnung für die Auslager-Transportplattformen 18a, 18b aus und kann in der Querrichtung z mittig in der Regalgasse 6 angeordnet sein. Eine solche Ausführung ist insbesondere dann von Vorteil, wenn die Regalgasse 6 am Einlager- und Auslager-Vertikalmast endet.

Generell kann eine Einlager-Vertikalfördervorrichtung 13 und/oder eine Auslager-Vertikalfördervorrichtung 17 genau einer Regalgasse 6 zugeordnet sein, so wie das in der Fig. 1 der Fall ist. Denkbar ist aber auch, dass eine Einlager-Vertikalfördervorrichtung 13 und/oder eine Auslager-Vertikalfördervorrichtung 17 mehreren Regalgassen 6 zugeordnet ist. Beispielsweise können an einem einzigen Einlager-Vertikalmast 22 Einlager-Transportplattformen 14a, 14b angeordnet sein, die zwei Regalgassen 6 zugeordnet sind. Beispielsweise können zwei übereinander angeordnete Einlager-Transportplattformen 14a, 14b einer ersten Regalgasse 6 zugeordnet sein und zwei andere übereinander angeordnete Einlager-Transportplattformen einer zweiten Regalgasse 6. Gleichermaßen können an einem einzigen Auslager-Vertikalmast 23 Auslager-Transportplattformen 18a, 18b angeordnet sein, die zwei Regalgassen 6 zugeordnet sind. Beispielsweise können zwei übereinander angeordnete Auslager-Transportplattformen 18a, 18b einer ersten Regalgasse 6 zugeordnet sein und zwei andere übereinander angeordnete Auslager-Transportplattformen einer zweiten Regalgasse 6.

Vorteilhaft überschneiden sich die Einlager-Bewegungsbereiche E1, E2 in der dargestellte Lageranordnung 1 nicht mit den Auslager-Bewegungsbereichen A1, A2 (siehe Fig. 4 bis 7). Die Einlager-Transportplattformen 14a, 14b und die Auslager-Transportplattformen18a, 18b werden durch das Steuerungssystem 21 voneinander getrennt beziehungsweise unabhängig voneinander angesteuert. Dadurch können der Vorgang der Einlagerung von Ladegütern 5 durch mehrere Einlager-Transportplattformen 14a, 14b und der Vorgang der Auslagerung von Ladegütern 5 durch mehrere Auslager-Transportplattformen 18a, 18b parallel und voneinander entkoppelt durchgeführt werden. Der steuerungstechnische Aufbau der Lageranordnung 1 beziehungsweise der steuerungstechnische Aufwand für die Lageranordnung 1 kann damit verringert werden. Insbesondere führen einzulagernde Ladegüter 5 nicht zu Blockaden beim Auslagern von Ladegütern 5 und umgekehrt, so wie dies im Stand der Technik auftreten kann. Die Einlager-Transportplattformen 14a, 14b und Auslager-Transportplattformen 18a, 18b können somit ohne gegenseitige Beeinflussung innerhalb der Einlager-Bewegungsbereiche E1, E2 und Auslager-Bewegungsbereiche A1, A2 (mit maximaler Bewegungsgeschwindigkeit) bewegt werden.

Vorteilhaft werden nicht nur die Einlager-Transportplattformen 14a, 14b unabhängig von den Auslager-Transportplattformen 18a, 18b bewegt, sondern auch die erste Einlager-Transportplattform 14a unabhängig von der zweiten Einlager-Transportplattform 14b (sofern die Einlager-Bewegungsbereiche E1, E2 einander nicht überlappen) und die erste Auslager-Transportplattform 18a unabhängig von der zweiten Auslager-Transportplattform 14b (sofern die Auslager-Bewegungsbereiche A1, A2 einander nicht überlappen).

Vorzugsweise ist an die Auslager-Vertikalfördervorrichtung 17 ausgangsseitig (das heißt insbesondere auf einer von der Auslager-Puffervorrichtung 9 abgewandten Eingangsseite) ausschließlich die Auslager-Fördertechnik 19 und an die Einlager-Vertikalfördervorrichtung 13 eingangsseitig (das heißt insbesondere auf einer von der Einlager-Puffervorrichtung 7 abgewandten Ausgangsseite) ausschließlich die Einlager-Fördertechnik 15 angeschlossen. Dies bedeutet, dass die Auslager-Fördertechnik 19 bei dieser Ausführungsvariante nicht an die Einlager-Vertikalfördervorrichtung 13 und die Einlager-Fördertechnik 15 nicht an die Auslager-Vertikalfördervorrichtung 17 angeschlossen ist. In diesem Zusammenhang ist es auch von Vorteil, wenn die Einlager-Bereitstellvorrichtungen 8 der Einlager-Puffervorrichtung 7 in allen Bereitstellebenen, in welchen diese angeordnet sind, jeweils (ausschließlich) der Einlagerung dienen, und die Auslager-Bereitstellvorrichtungen 10 der Auslager-Puffervorrichtung 9 in allen Bereitstellebenen, in welchen diese angeordnet sind, jeweils (ausschließlich) der Auslagerung dienen. Die Förderströme, welche einen Förderstrom mit einzulagernden Ladegütern 5 und einen Förderstrom mit auszulagernden Ladegütern 5 umfassen, werden von der Einlager-Vertikalfördervorrichtung 13 und der Auslager-Vertikalfördervorrichtung 17 daher getrennt behandelt.

Fig. 2 zeigt nun ein beispielhaftes Kommissioniersystem 24a mit einer Lageranordnung 1a, mit mehreren rein symbolisch dargestellten Einlager-Vertikalfördervorrichtungen 13a..13c, mehreren rein symbolisch dargestellten Auslager-Vertikalfördervorrichtungen 17a..17c und mehreren nicht im Detail dargestellten Regalanordnungen 2 mit einer Vielzahl an Regalgassen 6a..6c und daran angrenzenden Lagerregalen 3a, 3b. Die Lageranordnung 1a kann daher als Vervielfachung der in der Fig. 1 dargestellten Lageranordnung 1 angesehen werden. Die Lageranordnung 1a der Fig. 2 umfasst konkret drei aneinander gereihte Lageranordnungen 1 der Fig. 1, selbstverständlich könnte aber jede beliebige Anzahl an Lageranordnungen 1 vorgesehen sein. Der besseren Übersicht halber sind nur die Einlager-Transportplattformen 14a, 14b der ersten Einlager-Vertikalfördervorrichtung 13a und die Auslager-Transportplattformen 18a, 18b der erste Auslager-Vertikalfördervorrichtung 17a explizit bezeichnet. Selbstverständlich weisen die Einlager-Vertikalfördervorrichtung 13b, 13c ebenso jeweils zwei Einlager-Transportplattformen 14a, 14b auf und die Auslager-Vertikalfördervorrichtung 17b, 17c jeweils zwei Auslager-Transportplattformen 18a, 18b. Das Kommissioniersystem 24a umfasst weiterhin mehrere mit der Lageranordnung 1a fördertechnisch verbundene Kommissionierstationen 25a..25f.

In dem in Fig. 2 dargestellten Beispiel ist die Einlager-Fördertechnik 15 in zwei Förderebenen F1, F2 angeordnet. In einer ersten, unteren Förderebene F1 sind mehrere in Einlager-Förderrichtung der Ladegüter 5 hintereinander angeordnete Förderabschnitte der ersten Einlager-Fördervorrichtung 16a vorgesehen (Anmerkung: in allen Figuren ist die Förderrichtung der Ladegüter 5 mit Pfeilen visualisiert), wovon ein optionaler erster Förderabschnitt eine erste Zuförderbahn 26, ein zweiter Förderabschnitt eine erste Verteilerbahn 27a, ein optionaler dritter Förderabschnitt mehrere Rückförderbahnen 28 und ein vierter Förderabschnitt mehrere erste Einlagerbahnen 29a umfasst. Je eine erste Einlagerbahn 29a ist je einer Einlager-Vertikalfördervorrichtung 13a..13c zugeordnet (Anmerkung: Die ersten Einlagerbahnen 29a der ersten, unteren Förderebene F1 sind in der Fig. 2 mit punktierten Linien dargestellt, um deren Verlauf deutlicher hervorzuheben. Darüber hinaus hat die Verwendung punktierter Linien jedoch keine besondere Bedeutung). Die erste Zuförderbahn 26 ist mit der ersten Verteilerbahn 27a verbunden und transportiert die Ladegüter 5 von einem in der Fig. 2 nicht explizit dargestellten Wareneingang an. Die ersten Einlagerbahnen 29a sind mit der ersten Verteilerbahn 27a verbunden und transportieren die Ladegüter 5 zu der jeweiligen Einlager-Vertikalfördervorrichtung 13a.. 13c an. Die Rückförderbahnen 28 verbinden die Kommissionierstationen 25a..25e mit der ersten Verteilerbahn 27a und transportieren (nicht für einen Auftrag benötigte) Ladegüter 5 nach einem Kommissioniervorgang von den Kommissionierstationen 25a..25e ab.

Die erste Verteilerbahn 27a ist in diesem Beispiel vorteilhaft durch eine geschlossene erste Förderumlaufbahn (Loop) gebildet, durch welche die erste Zuförderbahn 26, mehrere Rückförderbahnen 28 sowie mehrere erste Einlagerbahnen 29a fördertechnisch miteinander verbunden sind. Dies ist aber keine zwingende Bedingung für die Erfindung, und es kann auch eine offene erste Verteilerbahn 27a vorgesehen werden.

In einer zweiten, oberen Einlager-Förderebene F2 sind ebenfalls mehrere in Einlager-Förderrichtung der Ladegüter 5 hintereinander angeordnete Einlager-Förderabschnitte einer zweiten Einlager-Fördervorrichtung 16b vorgesehen, wovon ein optionaler erster Förderabschnitt eine (nicht eingetragene) erste Zuförderbahn 26 umfassen kann, ein zweiter Förderabschnitt eine zweite Verteilerbahn 27b umfasst, ein optionaler dritter Förderabschnitt mehrere (nicht explizit bezeichnete) Rückförderbahnen 28 umfasst und ein vierter Förderabschnitt mehrere zweite Einlagerbahnen 29a umfasst. Je eine zweite Einlagerbahn 29b ist je einer Einlager-Vertikalfördervorrichtung 13a.. 13c zugeordnet. Die zweiten Einlagerbahnen 29b sind mit der zweiten Verteilerbahn 27b verbunden und transportieren die Ladegüter 5 zu der jeweiligen Einlager-Vertikalfördervorrichtung 13a..13c an.

Die zweite Verteilerbahn 27b ist in diesem Beispiel wiederum vorteilhaft durch eine geschlossene zweite Förderumlaufbahn (Loop) gebildet, durch welche mehrere zweite Einlagerbahnen 29b fördertechnisch miteinander verbunden sind. Dies ist aber keine zwingende Bedingung für die Erfindung, und es kann auch eine offene zweite Verteilerbahn 27b vorgesehen werden.

In dem in Fig. 2 dargestellten Beispiel ist die Auslager-Fördertechnik 19 ebenfalls in zwei Förderebenen angeordnet, nämlich in denselben Förderebenen F1, F2, in denen auch die Einlager-Fördertechnik 15 angeordnet ist. In der ersten, unteren Förderebene F1 sind mehrere in Auslager-Förderrichtung der Ladegüter 5 hintereinander angeordnete Förderabschnitte der ersten Auslager-Fördervorrichtungen 20a vorgesehen, wovon ein fünfter Förderabschnitt mehrere zweite Zuförderbahnen 30 und ein sechster Förderabschnitt mehrere erste Auslagerbahnen 31a umfasst. Die erste Verteilerbahn 27a (zweiter Förderabschnitt) ist in diesem Beispiel nicht nur Teil der ersten Einlager-Fördervorrichtung 16a, sondern auch Teil der ersten Auslager-Fördervorrichtung 20a.

Je eine erste Auslagerbahn 31a ist je einer Auslager-Vertikalfördervorrichtung 17a..17c zugeordnet (Anmerkung: Die ersten Auslagerbahnen 31a der ersten, unteren Förderebene F1 sind in der Fig. 2 wiederum mit punktierten Linien dargestellt, um deren Verlauf deutlicher hervorzuheben. Darüber hinaus hat die Verwendung punktierter Linien jedoch keine besondere Bedeutung).

Die zweiten Zuförderbahnen 30 verbinden die Kommissionierstation 25a..25e mit der ersten Verteilerbahn 27a und transportieren Ladegüter 5 zu den Kommissionierstationen 25a..25e. Die erste Verteilerbahn 27a verbindet in diesem Beispiel also nicht nur die erste Zuförderbahn 26 und die Rückförderbahnen 28 mit den ersten Einlagerbahnen 29a, 29b, sondern auch die ersten Auslagerbahnen 31a mit den zweiten Zuförderbahnen 30.

In der zweiten, oberen Förderebene F2 sind mehrere in Auslager-Förderrichtung der Ladegüter 5 hintereinander angeordnete Förderabschnitte der zweiten Auslager-Fördervorrichtung 20b vorgesehen, wovon ein optionaler fünfter Förderabschnitt mehrere (nicht explizit bezeichnete) zweite Zuförderbahnen 30 und ein sechster Förderabschnitt mehrere zweite Auslagerbahnen 31b umfasst. Die zweite Verteilerbahn 27b (zweiter Förderabschnitt) ist in diesem Beispiel nicht nur Teil der zweiten Einlager-Fördervorrichtung 16b, sondern auch Teil der zweiten Auslager-Fördervorrichtung 20b. Je eine zweite Auslagerbahn 31b ist je einer Auslager-Vertikalfördervorrichtung 17a..17c zugeordnet. Die zweiten Auslagerbahnen 31b sind über die zweiten Verteilerbahn 27b verbunden und transportieren die Ladegüter 5 von der jeweiligen Auslager-Vertikalfördervorrichtung 17a.. 17c ab.

Es sei an dieser Stelle hingewiesen, dass der dritte Förderabschnitt mit den Rückförderbahnen 28 und der fünfte Förderabschnitt mit den Zuförderbahnen 30 dann erforderlich sind, wenn an diese erste Kommissionierstationen 25a..25e angeschlossen sind.

Wie in Fig. 2 gezeigt, sind an die erste Auslager-Fördervorrichtung 20a (insbesondere die erste Verteilerbahn 27a) die eine oder mehreren ersten Kommissionierstationen 25a..25e angeschlossen.

Angedeutet (d.h. strichliert gezeichnet) ist auch eine zweite Kommissionierstation 25f, welche an die zweite Auslager-Fördervorrichtung 20b (insbesondere die zweite Verteilerbahn 27b) angeschlossen ist. Natürlich können auch mehrere zweite Kommissionierstationen 25f vorgesehen werden, welche an die an die zweite Auslager-Fördervorrichtung 20b (insbesondere die zweite Verteilerbahn 27b) angeschlossen sind, was aus Gründen der besseren Übersicht aber nicht dargestellt ist. Konkret sind die eine oder mehrere zweite Kommissionierstationen 25f über (nicht explizit bezeichnete) Rückförderbahn(en) 28 und Zuförderbahn(en) 30 an die zweite Verteilerbahn 27b angeschlossen.

In der Fig. 2 ist die erste Verteilerbahn 27a über zwei erste Verbindungsbahnen 32a, 32b mit der zweiten Verteilerbahn 27b verbunden und die zweite Verteilerbahn 27b über zwei zweite Verbindungsbahnen 33a, 33b mit der ersten Verteilerbahn 27a. Die erste Verteilerbahn 27a und die zweite Verteilerbahn 27b sind also an zwei Stellen wechselseitig miteinander verbunden. Es sein aber hingewiesen, dass die zwei ersten Verbindungsbahnen 32a, 32b und die zwei zweiten Verbindungsbahnen 33a, 33b optional vorgesehen sein können.

Die Förderebenen F1, F2 dienen im vorliegenden Beispiel sowohl der Einlagerung und der Auslagerung und können daher auch als "(kombinierte) Ein- und Auslager-Förderebenen" bezeichnet werden. Ähnliches gilt für die Verteilerbahnen / Förderumlaufbahnen 27a, 27b, die im vorliegenden Beispiel sowohl der Einlagerung und der Auslagerung dienen. Daher können die Förderumlaufbahnen auch als "(kombinierte) Ein- und Auslager-Verteilerbahnen" oder als "(kombinierte) Ein- und Auslager-Förderumlaufbahnen" bezeichnet werden.

Die "(kombinierten) Verteilerbahnen / Förderumlaufbahnen 27a, 27b sind daher sowohl Teil der Einlager-Fördertechnik 16 als auch der Auslager-Fördertechnik 20. Konkret ist die erste Verteilerbahn / Förderumlaufbahn 27a auf der ersten Förderebene F1 Teil der ersten Einlager-Fördervorrichtung 16a und der ersten Auslager-Fördervorrichtung 20a, und die zweite Verteilerbahn / Förderumlaufbahn 27b auf der zweiten Förderebene F2 ist Teil der zweiten Einlager-Fördervorrichtung 16b und der zweiten Auslager-Fördervorrichtung 20b. Wegen der Mehrfachfunktion sind die Verteilerbahnen / Förderumlaufbahnen 27a, 27b in der Fig. 2 nicht mit den Bezugszeichen der Einlager-Fördertechnik 16, der Auslager-Fördertechnik 20, der Einlager-Fördervorrichtungen 16a, 16b und der Auslager-Fördervorrichtungen 20a, 20b bezeichnet. Lediglich die erste Zuförderbahn 26, die Einlagerbahnen 29a, 29b, und die Rückförderbahnen 28 sind eindeutig der Einlager-Fördertechnik 16 und die zweiten Zuförderbahnen 30 und die Auslagerbahnen 31a, 31b eindeutig der Auslager-Fördertechnik 20 zuordenbar.

Auch wenn die Förderebenen F1, F2 und die Förderumlaufbahnen 27a, 27b sowohl der Einlagerung und der Auslagerung dienen, kann eine (kombinierte) Ein- und Auslager-Förderebene F1, F2 im Rahmen dieser Offenbarung auch als "Einlager-Förderebene" bezeichnet oder betrachtet werden, wenn auf die Funktion der Einlagerung Bezug genommen wird, und als "Auslager-Förderebene" bezeichnet oder betrachtet werden, wenn auf die Funktion der Auslagerung Bezug genommen wird. Desgleichen kann eine (kombinierte) Ein- und Auslager-Verteilerbahn/Förderumlaufbahn 27a, 27b im Rahmen dieser Offenbarung auch als "Einlager-Verteilerbahn/Förderumlaufbahn" bezeichnet oder betrachtet werden, wenn auf die Funktion der Einlagerung Bezug genommen wird, und als "Auslager-Verteilerbahn/Förderumlaufbahn" bezeichnet oder betrachtet werden, wenn auf die Funktion der Auslagerung Bezug genommen wird.

Wie oben erwähnt, können von einer kombinierten Einlager-/Auslager-Förderumlaufbahn 27a, 27b weg führende Förderabschnitte weiterhin ausschließlich dem Einlagern von Ladegütern 5 dienen (z.B. die Einlagerbahnen 29a, 29b der Einlager-Fördertechnik 15), und zu der kombinierten Einlager-/Auslager-Förderumlaufbahn 27a, 27b hin führende Förderabschnitte können weiterhin ausschließlich dem Auslagern von Ladegütern 5 dienen (z.B. die Auslagerbahnen 31a, 31b der Auslager-Fördertechnik 19).

Des Weiteren wird angemerkt, dass die gemeinsame Nutzung der Förderumlaufbahnen 27a, 27b für die Einlager-Fördertechnik 16 und die Auslager-Fördertechnik 20 keine zwingende Bedingung für das in der Fig. 2 dargestellte Kommissioniersystem 24a ist. Vielmehr ist auch denkbar, dass die Einlager-Fördertechnik 16 und die Auslager-Fördertechnik 20 voneinander getrennt angeordnet werden. Beispielsweise kann die erste Einlager-Fördervorrichtung 16a auf einer ersten Förderebene F1, die zweite Einlager-Fördervorrichtung 16b auf einer zweiten Förderebene F2, die erste Auslager-Fördervorrichtung 20a auf einer dritten Förderebene und die zweite Auslager-Fördervorrichtung 20b auf einer vierten Förderebene angeordnet werden. Auch eine gemischte Bauweise ist denkbar. In diesem Fall werden einige der Förderumlaufbahnen 27a, 27b nur für die Einlagerung, einige der Förderumlaufbahnen 27a, 27b nur für die Auslagerung und einige der Förderumlaufbahnen 27a, 27b gemischt für Ein- und Auslagerung verwendet.

Die Einlagerung von Ladegütern 5 umfasst generell die Einlagerung von Ladegütern 5 aus dem Wareneingang (Neuware oder Retourware) und die Rücklagerung von Ladegütern 5 von den Kommissionierstationen 25a..25f. Die Auslagerung von Ladegütern 5 umfasst den Transport der Ladegütern 5 zu den Kommissionierstationen 25a..25f.

Wie erwähnt müssen die Verteilerbahnen 27a, 27b nicht zwingend als geschlossene Förderumlaufbahnen (Loops) ausgeführt sein, auch wenn dies von Vorteil ist. Stattdessen kann/können die erste Verteilerbahn 27a und/oder die zweite Verteilerbahn 27b auch als offene Förderstrecke(n) ausgebildet sein.

Die erste Zuförderbahn 26, die beiden Verteilerbahnen / Förderumlaufbahnen 27a, 27b, die Rückförderbahnen 28, die zweiten Zuförderbahnen 30, die ersten Verbindungsbahnen 32a, 32b, die zweiten Verbindungsbahnen 33a, 33b sowie die Einlagerbahnen 29a, 29b und die Auslagerbahnen 31a, 31b umfassen angetriebene Fördervorrichtungen, beispielweise Gurtförderer, Rollenförderer, Kettenförderer und dergleichen. Insbesondere ist auch eine gemischte Bauweise denkbar.

Der Transfer der Ladegüter 5 von der ersten Zuförderbahn 26 auf die erste Verteilerbahn 27a, von den Rückförderbahnen 28 auf die erste Verteilerbahn 27a, von der ersten Verteilerbahn 27a auf die ersten Einlagerbahnen 29a, von der zweiten Verteilerbahn 27b auf die zweiten Einlagerbahnen 29b, von den ersten Auslagerbahnen auf die erste Verteilerbahn 27a, von den zweiten Auslagerbahnen auf die zweite Verteilerbahn 27b und von der ersten Verteilerbahn 27a auf die zweiten Zuförderbahnen 30 kann durch Einschleusvorrichtungen und Ausschleusvorrichtungen ermöglicht werden. Die Einschleusvorrichtungen und Ausschleusvorrichtungen können beispielsweise Riemenumsetzer, Röllchenweichen und dergleichen umfassen.

Die fördertechnische Verbindung zwischen der ersten Einlager-Fördervorrichtung 16a und der zweiten Einlager-Fördervorrichtung 16b sowie zwischen der ersten Auslager-Fördervorrichtung 20a und der zweiten Auslager-Fördervorrichtung 20b (im gezeigten Beispiel also die Verbindungsbahnen 32a, 32b, 33a, 33b zwischen der ersten Verteilerbahn 27a und der zweiten Verteilerbahn 27b) können jeweils angetriebene Fördervorrichtungen umfassen, wie zum Beispiel einen Gurtförderer, Rollenförderer, Ausschleusförderer, Einschleusförderer und dergleichen oder jeweils eine angetriebene Vertikalfördervorrichtung. Gurtförderer eignen sich besonders gut für den Höhenausgleich zwischen der ersten Einlager-Fördervorrichtung 16a und der zweiten Einlager-Fördervorrichtung 16b sowie zwischen der ersten Auslager-Fördervorrichtung 20a und der zweiten Auslager-Fördervorrichtung 20b (oder zwischen der ersten Verteilerbahn 27a und der zweiten Verteilerbahn 27b). Grundsätzlich kann die genannte fördertechnische Verbindung auch eine einzige Fördervorrichtung umfassen, welche beispielweise durch eine angetriebene Vertikalfördervorrichtung, insbesondere einen Spiralförderer, einen Hublift und dergleichen, gebildet ist. Diese einzige Fördervorrichtung kann dennoch als wechselseitige fördertechnische Verbindung zwischen den Einlager-Fördervorrichtungen 16a, 16b, den Auslager-Fördervorrichtungen 20a, 20b beziehungsweise zwischen den Verteilerbahnen 27a, 27b fungieren, wenn sie in zwei Richtungen betrieben werden kann, also von unten nach oben und von oben nach unten fördern kann.

Über die Verbindungsbahnen 32a, 32b, 33a, 33b können beim An- oder Abtransport einige der Ladegüter 5 von der ersten Verteilerbahn 27a auf die zweite Verteilerbahn 27b übergeben werden und einige der Ladegüter 5 von der zweiten Verteilerbahn 27b auf die erste Verteilerbahn 27a.

Bei der in Fig. 2 dargestellten Ausführungsform ist die fördertechnische Verbindung zwischen einer ersten Einlager-Fördervorrichtung 16a und einer zweiten Einlager-Fördervorrichtung 16b im Bereich des zweiten Förderabschnittes angeordnet, daher im Bereich der ersten Verteilerbahn 27a und der zweiten Verteilerbahn 27b. Die erste Einlager-Fördervorrichtung 16a und zweite Einlager-Fördervorrichtung 16b sind mit den ersten Verbindungsbahnen 32a, 32b und den zweiten Verbindungsbahnen 33a, 33b fördertechnisch verbunden. Diese Ausführung wirkt sich besonders günstig aus, wenn mehrere Einlager-Vertikalfördervorrichtungen 13a..13c vorgesehen sind (so wie das in der Fig. 2 der Fall ist), da dann prinzipiell eine einzige fördertechnische Verbindung zwischen mehreren ersten Einlagerbahnen 29a und mehreren zweiten Einlagerbahnen 29b genügt. Es vereinfacht sich damit der Aufbau der Einlager-Fördertechnik 15.

Möglich ist aber auch eine Ausführung, nach welcher die fördertechnische Verbindung zwischen einer ersten Einlager-Fördervorrichtung 16a und einer zweiten Einlager-Fördervorrichtung 16b im Bereich des vierten Förderabschnittes, das heißt unmittelbar im Bereich einer ersten Einlagerbahn 29a und einer zugeordneten zweiten Einlagerbahn 29b angeordnet ist (siehe auch die Figuren 4 bis 7). Diese Ausführung findet beispielweise dann Anwendung, wenn wenige oder gar nur eine einzige Einlager-Vertikalfördervorrichtung 13a..13c vorgesehen ist. Dies schließt aber nicht aus, dass auch im Bereich der ersten Verteilerbahn 27a und der zweiten Verteilerbahn 27b fördertechnische Verbindungen 32a, 32b, 33a, 33b vorgesehen sind.

Bei der in Fig. 2 dargestellten Ausführungsform ist die fördertechnische Verbindung zwischen einer ersten Auslager-Fördervorrichtung 20a und einer zweiten Auslager-Fördervorrichtung 20b ebenfalls im Bereich des zweiten Förderabschnitts, hier im Bereich der ersten Verteilerbahn 27a und der zweiten Verteilerbahn 27b angeordnet, nämlich mit den ersten Verbindungsbahnen 32a, 32b und den zweiten Verbindungsbahnen 33a, 33b. Diese Ausführung wirkt sich besonders günstig aus, wenn mehrere Auslager-Vertikalfördervorrichtungen 17a.. 17c vorgesehen sind, da dann prinzipiell eine einzige fördertechnische Verbindung zwischen mehreren ersten Auslagerbahnen 31a und mehreren zweiten Auslagerbahnen 31b genügt. Es vereinfacht sich damit der Aufbau der Auslager-Fördertechnik 19.

Möglich ist aber auch eine Ausführung, nach welcher die fördertechnische Verbindung zwischen einer ersten Auslager-Fördervorrichtung 20a und einer zweiten Auslager-Fördervorrichtung 20b im Bereich des sechsten Förderabschnittes, das heißt unmittelbar im Bereich einer ersten Auslagerbahn 31a und einer zugeordneten zweiten Auslagerbahn 31b angeordnet ist (siehe auch die Figuren 4 bis 7). Diese Ausführung findet beispielweise dann Anwendung, wenn wenige oder gar nur eine einzige Auslager-Vertikalfördervorrichtung 17a..17c vorgesehen ist. Dies schließt aber nicht aus, dass auch im Bereich der ersten Verteilerbahn 27a und der zweiten Verteilerbahn 27b fördertechnische Verbindungen 32a, 32b, 33a, 33b vorgesehen sind.

An dieser Stelle wird auch angemerkt, dass die zweite Förderebene F2 wie die erste Förderebene F1 aufgebaut sein kann und ebenfalls mehrere Kommissionierstationen 25f sowie eine erste Zuförderbahn 26 umfassen kann. Denkbar ist natürlich auch, dass die Kommissionierstationen 25f und die erste Zuförderbahn 26 nur in der zweiten Förderebene F2 angeordnet sind.

Auch kann die erste Zuförderbahn 26 in einer anderen Förderebene F1, F2 angeordnet sein als die Kommissionierstationen 25a..25f.

Fig. 3 zeigt nun ein beispielhaftes Kommissioniersystem 24b, das dem in Fig. 2 offenbarten Kommissioniersystem 24a sehr ähnlich ist. Im Unterschied dazu erfolgt aber die Einlagerung an einem ersten Regalgassenende und die Auslagerung an einem zweiten Regalgassenende. Konkret umfasst das Kommissioniersystem 24b eine Lageranordnung 1b, bei der eine oder mehrere Einlager-Vertikalfördervorrichtungen 13 in einem ersten Regalgassenabschnitt der Regalgassen 6a..6e (in der Fig. 3 beispielweise an einem ersten Regalgassenende und daher in der Fig. 3 nicht sichtbar) und eine oder mehrere Auslager-Vertikalfördervorrichtungen 17a.. 17e in einem zweiten Regalgassenabschnitt der Regalgasse 6a..6e (in der Fig. 3 beispielweise an einem zweiten Regalgassenende und in der Fig. 3 rein symbolisch dargestellt) angeordnet sind. Der erste Regalgassenabschnitt und zweite Regalgassenabschnitt können generell im Verlauf der Regalgasse 6a..6e (z.B. mittig) oder stirnseitig an den Regalgassenenden der Regalgasse 6a..6e und voneinander getrennt vorgesehen sein. Der besseren Übersicht halber sind nur die Auslager-Transportplattformen 18a, 18b der ersten Auslager-Vertikalfördervorrichtung 17a explizit bezeichnet. Selbstverständlich weisen die Einlager-Vertikalfördervorrichtungen 13 aber ebenso jeweils zwei Einlager-Transportplattformen 14a, 14b auf und die Auslager-Vertikalfördervorrichtungen 17b.. 17e jeweils zwei Auslager-Transportplattformen 18a, 18b. Das Kommissioniersystem 24b kann mehrere mit der Lageranordnung 1b fördertechnisch verbundene Wareneingangsstationen 34a..34d sowie mehrere mit der Lageranordnung 1b fördertechnisch verbundene Kommissionierstationen 25a..25d umfassen, so wie das in der Fig. 3 der Fall ist.

In dem in Fig. 3 dargestellten Beispiel ist die Einlager-Fördertechnik 15 wiederum in zwei Förderebenen F1, F2 angeordnet. In einer ersten, unteren Förderebene F1 sind mehrere in Einlager-Förderrichtung der Ladegüter 5 hintereinander angeordnete Förderabschnitte der ersten Einlager-Fördervorrichtung 16a vorgesehen, wovon ein erster Förderabschnitt mehrere erste Zuförderbahnen 26, ein zweiter Förderabschnitt eine erste Einlager-Verteilerbahn 35a und ein dritter Förderabschnitt mehrere erste Einlagerbahnen 29a umfasst. Der dritte Förderabschnitt des in der Fig. 3 dargestellten Kommissioniersystems 24b entspricht also dem vierten Förderabschnitt des in der Fig. 2 dargestellten Kommissioniersystems 24a. Je eine erste Einlagerbahn 29a ist je einer Einlager-Vertikalfördervorrichtung 13 zugeordnet (Anmerkung: Die ersten Einlagerbahnen 29a der ersten, unteren Förderebene F1 sind in der Fig. 3 wiederum mit punktierten Linien dargestellt. Darüber hinaus hat die Verwendung punktierter Linien jedoch keine besondere Bedeutung). Die ersten Zuförderbahnen 26 sind mit der ersten Einlager-Verteilerbahn 35a verbunden und transportieren die Ladegüter 5 von den Wareneingangsstationen 34a..34d ab. Die ersten Einlagerbahnen 29a sind mit der ersten Einlager-Verteilerbahn 35a verbunden und transportieren die Ladegüter 5 zu der jeweiligen Einlager-Vertikalfördervorrichtung 13 an. Die erste Einlager-Verteilerbahn 35a ist in diesem Beispiel vorteilhaft durch eine geschlossene erste Förderumlaufbahn (Loop) gebildet, durch welche die ersten Zuförderbahnen 26 und mehrere erste Einlagerbahnen 29a fördertechnisch miteinander verbunden sind.

In einer zweiten, oberen Förderebene F2 sind mehrere in Einlager-Förderrichtung der Ladegüter 5 hintereinander angeordnete Einlager-Förderabschnitte der zweiten Einlager-Fördervorrichtung 16b vorgesehen, konkret eine zweite Einlager-Verteilerbahn 35b, und mehrere zweite Einlagerbahnen 29b. Je eine zweite Einlagerbahn 29b ist je einer Einlager-Vertikalfördervorrichtung 13 zugeordnet. Die zweiten Einlagerbahnen 29b sind mit der zweiten Einlager-Verteilerbahn 35b verbunden und transportieren die Ladegüter 5 zu der jeweiligen Einlager-Vertikalfördervorrichtung 13 an. Die zweite Einlager-Verteilerbahn 35b ist in diesem Beispiel wiederum vorteilhaft durch eine geschlossene zweite Förderumlaufbahn (Loop) gebildet, durch welche mehrere zweite Einlagerbahnen 29b fördertechnisch miteinander verbunden sind.

In der Fig. 3 ist die erste Einlager-Verteilerbahn 35a über eine erste Verbindungsbahn 32c mit der zweiten Einlager-Verteilerbahn 35b verbunden und die zweite Einlager-Verteilerbahn 35a über eine zweite Verbindungsbahn 33c mit der ersten Einlager-Verteilerbahn 35a. Die erste Einlager-Verteilerbahn 35a und die zweite Einlager-Verteilerbahn 35b sind also wechselseitig miteinander verbunden.

In dem in Fig. 3 dargestellten Beispiel ist die Auslager-Fördertechnik 19 ebenfalls in zwei Förderebenen angeordnet, nämlich in denselben Förderebenen F1, F2, in denen auch die Einlager-Fördertechnik 15 angeordnet ist. In der ersten, unteren Förderebene F1 sind mehrere in Auslager-Förderrichtung der Ladegüter 5 hintereinander angeordnete Förderabschnitte der ersten Auslager-Fördervorrichtung 20a vorgesehen, wovon ein erster Förderabschnitt mehrere erste Auslagerbahnen 31a umfasst, ein zweiter Förderabschnitt eine erste Auslager-Verteilerbahn 36a und ein dritter Förderabschnitt mehrere zweite Zuförderbahnen 30. Je eine erste Auslagerbahn 31a ist je einer Auslager-Vertikalfördervorrichtung 17a.. 17e zugeordnet (Anmerkung: Die ersten Auslagerbahnen 31a der ersten, unteren Förderebene F1 sind in der Fig. 3 wiederum mit punktierten Linien dargestellt, um deren Verlauf deutlicher hervorzuheben. Darüber hinaus hat die Verwendung punktierter Linien jedoch keine besondere Bedeutung). Die erste Auslager-Verteilerbahn 36a verbindet in diesem Beispiel die ersten Auslagerbahnen 31a mit den zweiten Zuförderbahnen 30, über welche Ladegüter 5 zu den Kommissionierstationen 25a..25d transportiert werden.

In der zweiten, oberen Förderebene F2 sind ebenfalls mehrere in Auslager-Förderrichtung der Ladegüter 5 hintereinander angeordnete Förderabschnitte der zweiten Auslager-Fördervorrichtungen 20b vorgesehen, konkret eine zweite Auslager-Verteilerbahn 36b, und mehrere zweite Auslagerbahnen 31b. Je eine zweite Auslagerbahn 31b ist je einer Auslager-Vertikalfördervorrichtung 17a.. 17e zugeordnet. Die zweiten Auslagerbahnen 31b sind über die zweite Auslager-Verteilerbahn 36b verbunden und transportieren die Ladegüter 5 von der jeweiligen Auslager-Vertikalfördervorrichtung 17a..17e ab.

In der Fig. 3 ist die erste Auslager-Verteilerbahn 36a über eine erste Verbindungsbahn 32d mit der zweiten Auslager-Verteilerbahn 36b verbunden und die zweite Auslager-Verteilerbahn 36b über eine zweite Verbindungsbahn 33d mit der ersten Auslager-Verteilerbahn 36a. Die erste Auslager-Verteilerbahn 36a und die zweite Auslager-Verteilerbahn 36b sind also ebenfalls wechselseitig miteinander verbunden.

Die Einlagerung von Ladegütern 5 umfasst die Einlagerung von Ladegütern 5 von den Wareneingangsstationen 34a..34d (Neuware oder Retourware) und kann auch die Rücklagerung von Ladegütern 5 von den Kommissionierstationen 25a..25d umfassen. In der Fig. 3 sind zwar keine Rückförderbahnen 28 dargestellt, jedoch können diese im Kommissioniersystem 24b vorgesehen werden (siehe auch Fig. 2). Über eine ebenfalls nicht dargestellte Verbindungsstrecke von einer Auslager-Verteilerbahn 36a, 36b zu einer Einlager-Verteilerbahn 35a, 35b oder mehrerer solcher Verbindungsstrecken können (für einen Auftrag nicht benötigte) Ladegüter 5 von der Auslagerseite auf die Einlagerseite transportiert werden. Die Auslagerung von Ladegütern 5 umfasst wiederum den Transport der Ladegütern 5 zu den Kommissionierstationen 25a..25d.

An dieser Stelle wird auch angemerkt, dass die Einlager-Verteilerbahnen 35a, 35b und die Auslager-Verteilerbahnen 36a, 36b nicht zwingend als geschlossene Förderumlaufbahnen (Loops) ausgeführt sein müssen, auch wenn dies von Vorteil ist. Stattdessen kann/können die erste Einlager-Verteilerbahn 35a und/oder die zweite Einlager-Verteilerbahn 35b und/oder die erste Auslager-Verteilerbahn 36a und/oder die zweite Auslager-Verteilerbahn 36b auch als offene Förderstrecke(n) ausgebildet sein.

Die ersten Zuförderbahnen 26, die beiden Einlager-Verteilerbahnen / Förderumlaufbahnen 35a, 35b, die beiden Auslager-Verteilerbahnen / Förderumlaufbahnen 36a, 36b, die zweiten Zuförderbahnen 30, die ersten Verbindungsbahnen 32c, 32d, die zweiten Verbindungsbahnen 33c, 33d sowie die Einlagerbahnen 29a, 29b und die Auslagerbahnen 31a, 31b umfassen angetriebene Fördervorrichtungen, beispielweise Gurtförderer, Rollenförderer, Kettenförderer und dergleichen. Insbesondere ist auch eine gemischte Bauweise denkbar.

Der Transfer der Ladegüter 5 von den ersten Zuförderbahnen 26 auf die erste Einlager-Verteilerbahn / Förderumlaufbahn 35a, von der ersten Einlager-Verteilerbahn / Förderumlaufbahn 35a auf die ersten Einlagerbahnen 29a, von der zweiten Einlager-Verteilerbahn / Förderumlaufbahn 35b auf die zweiten Einlagerbahnen 29b, von den ersten Auslagerbahnen 31a auf die erste Auslager-Verteilerbahn / Förderumlaufbahn 36a, von den zweiten Auslagerbahnen 31b auf die zweite Auslager-Verteilerbahn / Förderumlaufbahn 36b und von der ersten Auslager-Verteilerbahn / Förderumlaufbahn 36a auf die zweiten Zuförderbahnen 30 kann durch Einschleusvorrichtungen und Ausschleusvorrichtungen ermöglicht werden. Die Einschleusvorrichtungen und Ausschleusvorrichtungen können beispielsweise Riemenumsetzer, Röllchenweichen und dergleichen umfassen.

Die fördertechnische Verbindung zwischen der ersten Einlager-Fördervorrichtung 16a und der zweiten Einlager-Fördervorrichtung 16b (im gezeigten Beispiel also die Verbindungsbahnen 32c, 33c zwischen der ersten Einlager-Verteilerbahn 35a und der zweiten Einlager-Verteilerbahn 35b) sowie zwischen der ersten Auslager-Fördervorrichtung 20a und der zweiten Auslager-Fördervorrichtung 20b (im gezeigten Beispiel also die Verbindungsbahnen 32d, 33d zwischen der ersten Auslager-Verteilerbahn 36a und der zweiten Auslager-Verteilerbahn 36b) können wiederum angetriebene Fördervorrichtungen umfassen wie zum Beispiel einen Gurtförderer, Rollenförderer, Ausschleusförderer, Einschleusförderer und dergleichen oder jeweils eine angetriebene Vertikalfördervorrichtung. Gurtförderer eignen sich besonders gut für den Höhenausgleich zwischen der ersten Einlager-Fördervorrichtung 16a und der zweiten Einlager-Fördervorrichtung 16b, beziehungsweise zwischen der ersten Einlager-Verteilerbahn 35a und der zweiten Einlager-Verteilerbahn 35b. Gurtförderer eignen sich zudem besonders gut für den Höhenausgleich zwischen der ersten Auslager-Fördervorrichtung 20a und der zweiten Auslager-Fördervorrichtung 20b, beziehungsweise zwischen der ersten Auslager-Verteilerbahn 36a und der zweiten Auslager-Verteilerbahn 36b. Grundsätzlich können die genannten fördertechnischen Verbindungen auch einfache Fördervorrichtungen umfassen, welche beispielweise durch eine angetriebene Vertikalfördervorrichtung, insbesondere durch einen Spiralförderer, Hublift und dergleichen, gebildet ist. Eine solche Fördervorrichtung kann dennoch als wechselseitige fördertechnische Verbindung zwischen den Einlager-Fördervorrichtungen 16a, 16b beziehungsweise zwischen den Einlager-Verteilerbahnen 35a, 35b fungieren oder als wechselseitige fördertechnische Verbindung zwischen den Auslager-Fördervorrichtungen 20a, 20b beziehungsweise zwischen den Auslager-Verteilerbahnen 36a, 36b, wenn sie in zwei Richtungen betrieben werden kann, also von unten nach oben und von oben nach unten fördern kann.

Über die Verbindungsbahnen 32c, 33c können beim Antransport einige der Ladegüter 5 von der ersten Einlager-Verteilerbahn 35a auf die zweite Einlager-Verteilerbahn 35b übergeben werden und einige der Ladegüter 5 von der zweiten Einlager-Verteilerbahn 35b auf die erste Einlager-Verteilerbahn 35a. Über die Verbindungsbahnen 32d, 33d können beim Abtransport darüber hinaus einige der Ladegüter 5 von der ersten Auslager-Verteilerbahn 36a auf die zweite Auslager-Verteilerbahn 36b übergeben werden und einige der Ladegüter 5 von der zweiten Auslager-Verteilerbahn 36a auf die erste Auslager-Verteilerbahn 36a.

Die Funktion der Lageranordnungen 1, 1a, 1b und der Kommissioniersysteme 24a, 24b wird nachfolgend unter Zuhilfenahme der Figuren 4 bis 7 erläutert, die jeweils eine schematisierte Seitenansicht einer Lageranordnung 1c in verschiedenen Systemzuständen zeigen.

Konkret zeigen die Figuren 4 bis 7 jeweils eine Lageranordnung 1c, welche eine Regalanordnung 2 mit einer Eingangsseite (rechts) und einer Ausgangsseite (links) umfasst.

Eingangsseitig umfasst die Lageranordnung 1c eine Einlager-Vertikalfördervorrichtung 13, welche zwei vertikal verfahrbare Einlager-Transportplattformen 14a, 14b aufweist, und zwei der Einlager-Vertikalfördervorrichtung 13 vorgeschaltete Einlager-Fördervorrichtung 16a, 16b. Die Einlager-Fördervorrichtungen 16a, 16b können gegebenenfalls über eine erste Verbindungsbahn 32c und eine zweite Verbindungsbahn 33c wechselseitig miteinander verbunden werden, so wie das in der Fig. 4 der Fall ist. Zusätzlich sind in der Fig. 4 auch der Einlager-Bewegungsbereich E1 der ersten Einlager-Transportplattformen 14a und Einlager-Bewegungsbereich E2 der zweiten Einlager-Transportplattformen 14b dargestellt.

Ausgangsseitig umfasst die Lageranordnung 1c eine Auslager-Vertikalfördervorrichtung 17, welche zwei vertikal verfahrbare Auslager-Transportplattformen 18a, 18b aufweist, und zwei der Auslager-Vertikalfördervorrichtung 17 nachgeschaltete Auslager-Fördervorrichtung 20a, 20b. Die Auslager-Fördervorrichtungen 20a, 20b sind über eine erste Verbindungsbahn 32d und eine zweite Verbindungsbahn 33d wechselseitig miteinander verbunden. Zusätzlich sind in der Fig. 4 auch der Auslager-Bewegungsbereich A1 der ersten Auslager-Transportplattformen 18a und Auslager-Bewegungsbereich A2 der zweiten Auslager-Transportplattformen 18b dargestellt.

Die in der Fig. 4 dargestellte Lageranordnung 1c ähnelt strukturell und vom Funktionsumfang her der in der Fig. 3 dargestellten Lageranordnung 1b. Die in der Fig. 4 dargestellte erste Verbindungsbahn 32c und zweite Verbindungsbahn 33c kann dabei zwischen den Einlager-Verteilerbahnen / Förderumlaufbahnen 35a, 35b angeordnet sein (so wie dies in der Fig. 3 der Fall ist) und/oder direkt zwischen den Einlagerbahnen 29a, 29b. Ein Wechsel eines Ladeguts 5 von der ersten Einlager-Fördervorrichtung 16a auf die zweite Einlager-Fördervorrichtung 16b und umgekehrt ist in beiden Fällen möglich.

Dasselbe gilt für die Ausgangsseite. Die in der Fig. 4 dargestellte erste Verbindungsbahn 32d und zweite Verbindungsbahn 33d kann zwischen den Auslager-Verteilerbahnen / Förderumlaufbahnen 36a, 36b angeordnet sein (so wie dies in der Fig. 3 der Fall ist) und/oder direkt zwischen den Auslagerbahnen 31a, 31b. Ein Wechsel eines Ladeguts 5 von der ersten Auslager-Fördervorrichtung 20a auf die zweite Auslager-Fördervorrichtung 20b und umgekehrt ist in beiden Fällen möglich.

Auch wenn die in der Fig. 4 dargestellte Lageranordnung 1c strukturell eher der in der Fig. 3 dargestellten Lageranordnung 1b ähnelt, so ist der Funktionsumfang der in der Fig. 4 dargestellte Lageranordnung 1c und der in der Fig. 2 dargestellten Lageranordnung 1a dennoch gut vergleichbar. Gedanklich wäre dazu die Eingangsseite von der rechten auf die linke Seite zu klappen.

Insbesondere sind die eine / mehreren Einlager-Vertikalfördervorrichtung(en) 13, 13a.. 13c und die eine / mehreren Auslager-Vertikalfördervorrichtung(en) 17, 17a..13e in einem Regalgassenabschnitt entlang der Regalgasse(n) 6, 6a..6e oder an einem der Regalgassenenden der Regalgasse(n) 6, 6a..6e angeordnet.

Die Einlager-Fördertechnik 15 kann entweder die erste Einlager-Fördervorrichtung 16a und zweite Einlager-Fördervorrichtung 16b umfassen oder ausschließlich die erste Einlager-Fördervorrichtung 16a umfassen.

Es sei auch nochmals hingewiesen, dass die fördertechnische Verbindung zwischen der ersten Einlager-Fördervorrichtung 16a und zweiten Einlager-Fördervorrichtung 16b optional ist.

Die Auslager-Fördertechnik 19 kann entweder die erste Auslager-Fördervorrichtung 20a und zweite Auslager-Fördervorrichtung 20b umfassen oder ausschließlich die erste Auslager-Fördervorrichtung 20a umfassen.

Auch wird darauf hingewiesen, dass die wechselseitige Verbindung der beiden Auslager-Fördervorrichtung 20a, 20b mit Hilfe der ersten Verbindungsbahn 32d und der zweiten Verbindungsbahn 33d nicht zwingend ist. Zwar können damit vorteilhaft auf der ersten Auslager-Fördervorrichtung 20a ausgelagerte Ladegüter 5 auf die zweite Auslager-Fördervorrichtung 20b übergeben werden und auf der zweiten Auslager-Fördervorrichtung 20b ausgelagerte Ladegüter 5 auf die erste Auslager-Fördervorrichtung 20a, was die Flexibilität beim Auslagervorgang erhöht, jedoch kann die erste Verbindungsbahn 32d oder die zweite Verbindungsbahn 32d auch weggelassen werden. Es liegt dann im Grunde eine einfache Zusammenführung der Auslager-Verteilerbahnen 36a, 36b vor, beziehungsweise damit auch eine einfache Zusammenführung der Auslager-Fördervorrichtungen 20a, 20b. Möglich ist es auch, beide Verbindungsbahnen 32d, 33d wegzulassen.

Im Nachfolgenden wird die Funktionsweise der in den Fig. 2 bis 7 dargestellten Lageranordnungen 1a..1c gemeinsam beschrieben werden.

Ladegüter 5 werden für den Einlagervorgang angeliefert, beispielsweise von einer Wareneingangsstation 34a..34d beziehungsweise einer ersten Zuförderbahn 26 kommend oder von einer Kommissionierstation 25a..25f beziehungsweise einer Rückförderbahn 28 kommend. Der Weg über eine Verteilerbahn / Förderumlaufbahn (Loop) 27a, 27b, 35a, 35b, 36a, 36b ist dabei möglich, jedoch nicht zwingend.

Das Steuersystem 21 steuert die Einlager-Transportplattformen 14a, 14b derart an, dass einzulagernde Ladegüter 5 von der Einlager-Fördertechnik 15 übernommen und auf die Einlager-Puffervorrichtung 7 abgegeben werden. Von der Einlager-Puffervorrichtung 7 werden die Ladegüter 5 vom Regalbediengerät 11 übernommen und in Folge auf einem gewählten Lagerplatz 4 abgelegt. Die erste Einlager-Transportplattform 14a bewegt sich dabei innerhalb eines ersten Einlager-Bewegungsbereichs E1, die zweite Einlager-Transportplattform 14b innerhalb eines zweiten Einlager-Bewegungsbereichs E2.

Für den Auslagervorgang werden Ladegüter 5 vom Regalbediengerät 11 vom Lagerplatz 4 abgeholt und an die Auslager-Puffervorrichtung 9 übergeben. Das Steuersystem 21 steuert die Auslager-Transportplattformen 18a, 18b derart an, dass auszulagernde Ladegüter 5 von der Auslager-Puffervorrichtung 9 übernommen und auf die Auslager-Fördertechnik 19 abgegeben werden. Die erste Auslager-Transportplattform 18a bewegt sich dabei innerhalb eines ersten Auslager-Bewegungsbereichs A1, die zweite Auslager-Transportplattform 18b innerhalb eines zweiten Auslager-Bewegungsbereichs A2.

In Folge werden die Ladegüter 5 abtransportiert, beispielsweise über eine zweite Zuförderbahn 30 zu einer der Kommissionierstationen 25a..25f. Der Weg über eine Verteilerbahn / Förderumlaufbahn (Loop) 27a, 27b, 35a, 35b, 36a, 36b ist dabei wiederum möglich, jedoch nicht zwingend.

Einzulagernde Ladegüter 5 werden also von der Einlager-Fördertechnik 15 antransportiert und von dieser vorteilhaft ausschließlich an die Einlager-Vertikalfördervorrichtung 13, 13a..13c abgegeben. Auszulagernde Ladegüter 5 werden vorteilhaft ausschließlich von der Auslager-Vertikalfördervorrichtung 17 auf die Auslager-Fördertechnik 19 abgegeben und von dieser abtransportiert. Dadurch können der Einlagervorgang und der Auslagervorgang vollständig voneinander entkoppelt durchgeführt werden.

Grundsätzlich sind für den Betrieb der Lageranordnung 1a..1c mehrere Möglichkeiten vorstellbar. Denkbar ist beispielsweise, dass die Einlager-Transportplattformen 14a, 14b den Einlager-Fördervorrichtungen 16a, 16b streng zugeordnet sind. Das heißt, die erste Einlager-För-dervorrichtung 16a ist der ersten Einlager-Transportplattform 14a zugeordnet und zur Einlagerung eines Ladegutes 5 (nur) von der ersten Einlager-Transportplattform 14a anfahrbar. Dementsprechend ist die zweite Einlager-Fördervorrichtung 16b der zweiten Einlager-Transportplattform 14b zugeordnet und zur Einlagerung eines Ladegutes 5 (nur) von der zweiten Einlager-Transportplattform 14b anfahrbar.

Denkbar ist aber auch, dass die Einlager-Transportplattformen 14a, 14b den Einlager-Fördervorrichtungen 16a, 16b flexibel zugeordnet sind. In diesem Fall kann die erste Einlager-Fördervorrichtung 16a wahlweise der ersten Einlager-Transportplattform 14a oder der zweiten Einlager-Transportplattform 14b zugeordnet werden und zum Einlagern eines Ladegutes 5 von der ersten oder zweiten Einlager-Transportplattform 14a, 14b angefahren werden. Dementsprechend kann die zweite Einlager-Fördervorrichtung 16b ebenfalls wahlweise der ersten Einlager-Transportplattform 14a oder der zweiten Einlager-Transportplattform 14b zugeordnet werden und zum Einlagern eines Ladegutes 5 von der ersten oder zweiten Einlager-Transportplattform 14a, 14b angefahren werden.

Auch wird darauf hingewiesen, dass die wechselseitige Verbindung der beiden Einlager-Fördervorrichtungen 16a, 16b mit Hilfe der ersten Verbindungsbahn 32c und der zweiten Verbindungsbahn 33c nicht zwingend ist. Zwar können damit vorteilhaft auf der ersten Einlager-Fördervorrichtung 16a antransportierte Ladegüter 5 auf die zweite Einlager-Fördervorrichtung 16b übergeben werden und auf der zweiten Einlager-Fördervorrichtung 16b antransportierte Ladegüter 5 auf die erste Einlager-Fördervorrichtung 16a, was die Flexibilität beim Einlagervorgang erhöht, jedoch kann die erste Verbindungsbahn 32c oder die zweite Verbindungsbahn 32d auch weggelassen werden. Es liegt dann im Grunde eine einfache Zusammenführung der Einlager-Verteilerbahnen 35a, 35b vor, beziehungsweise damit auch eine einfache Zusammenführung der Einlager-Fördervorrichtungen 16a, 16b. Möglich ist es auch, beide Verbindungsbahnen 32c, 33c wegzulassen.

Denkbar ist schließlich auch, dass die Lageranordnung 1a..1c nur die erste Einlager-Fördervorrichtung 16a (jedoch keine zweite Einlager-Fördervorrichtung 16b) umfasst, wobei die erste Einlager-Fördervorrichtung 16a der ersten Einlager-Transportplattform 14a und der zweiten Einlager-Transportplattform 14b zugeordnet und zur Einlagerung eines Ladegutes 5 von der ersten Einlager-Transportplattform 14a und von der zweiten Einlager-Transportplattform 14b angefahren werden kann.

Grundsätzlich sind die obigen Möglichkeiten äquivalent auch beim Auslagervorgang vorstellbar. Denkbar ist daher beispielsweise, dass die Auslager-Transportplattformen 18a, 18b den Auslager-Fördervorrichtungen 20a, 20b streng zugeordnet sind. Das heißt, die erste Auslager-Fördervorrichtung 20a ist der ersten Auslager-Transportplattform 18a zugeordnet und zur Auslagerung eines Ladegutes 5 (nur) von der ersten Auslager-Transportplattform 18a anfahrbar. Dementsprechend ist die zweite Auslager-Fördervorrichtung 20b der zweiten Auslager-Transportplattform 18b zugeordnet und zur Auslagerung eines Ladegutes 5 (nur) von der zweiten Auslager-Transportplattform 18b anfahrbar.

Denkbar ist aber auch, dass die Auslager-Transportplattformen 18a, 18b den Auslager-Fördervorrichtungen 20a, 20b flexibel zugeordnet sind. In diesem Fall kann die erste Auslager-Fördervorrichtung 20a wahlweise der ersten Auslager-Transportplattform 18a oder der zweiten Auslager-Transportplattform 18b zugeordnet werden und zum Auslagern eines Ladegutes 5 von der ersten oder zweiten Auslager-Transportplattform 18a, 18b angefahren werden. Dementsprechend kann die zweite Auslager-Fördervorrichtung 20b ebenfalls wahlweise der ersten Auslager-Transportplattform 18a oder der zweiten Auslager-Transportplattform 18b zugeordnet werden und zum Auslagern eines Ladegutes 5 von der ersten oder zweiten Auslager-Transportplattform 18a, 18b angefahren werden.

Umfasst die Lageranordnung 1a..1c nur die erste Auslager-Fördervorrichtung 20a (jedoch keine zweite Auslager-Fördervorrichtung 20b), so ist die erste Auslager-Fördervorrichtung 20a der ersten Auslager-Transportplattform 18a und der zweiten Auslager-Transportplattform 18b zugeordnet, und es kann die erste Auslager-Fördervorrichtung 20a zur Auslagerung eines Ladegutes 5 von der ersten Auslager-Transportplattform 18a und von der zweiten Auslager-Transportplattform 18b angefahren werden.

In einer weiteren Ausführungsvariante wird ein erster Lagerkennwert für einen ersten Lagerbereich B1 der Regalanordnung 2 und ein zweiter Lagerkennwert für einen zweiten Lagerbereich B2 der Regalanordnung 2 für die Art und Weise, wie der Einlagervorgang erfolgt, herangezogen. Konkret werden der erste Lagerkennwert und der zweite Lagerkennwert von einer Auswerteeinheit (die beispielsweise im Steuersystem 21 angeordnet oder Teil derselben sein kann) ermittelt und miteinander verglichen.

Der erste Lagerkennwert ist dabei durch das Verhältnis zwischen den vorhandenen Lagerplätzen 4 und den belegten Lagerplätzen 4 im ersten Lagerbereich B1 definiert und der zweite Lagerkennwert durch das Verhältnis zwischen den vorhandenen Lagerplätzen 4 und den belegten Lagerplätzen 4 im zweiten Lagerbereich B2. Die Ladegüter 5 werden in Folge vorteilhaft im Hinblick auf eine gegenseitige Anpassung von Lagerkennwerten im ersten Lagerbereich B1 und zweiten Lagerbereich B2 in die Regalanordnung 2 eingelagert.

Der erste Lagerbereich B1 erstreckt sich vertikal anders als der zweite Lagerbereich B2. In dem in Fig. 4 dargestellten Beispiel sind der erste Lagerbereich B1 und der zweite Lagerbereich B2 vertikal übereinander angeordnet und haben keinen Überlappungsbereich. Denkbar wäre aber auch, dass der erste Lagerbereich B1 und der zweite Lagerbereich B2 einander überlappen. Weiterhin ist denkbar, dass der genannten Ausführungsvariante mehr als zwei Lagerbereiche B1, B2 zugrunde gelegt werden.

Durch die vorgeschlagenen Maßnahmen kann eine ungleichmäßige Auslastung der Lagerplätze 4 im ersten Lagerbereich B1 und im zweiten Lagerbereich B2 und damit eine so genannte "Schieflast" vermieden und eine gleichmäßige Auslastung der Auslager-Bereitstellvorrichtungen 10, der Regalbediengeräte 11, der Auslager-Transportplattformen 18a, 18b und der Auslager-Fördervorrichtungen 20a, 20b beim Auslagern von Ladegütern 5 erreicht werden.

Ein Unterschied zwischen dem ersten Lagerkennwert und dem zweiten Lagerkennwert kann beispielsweise durch Bildung der Differenz oder durch Bildung eines Quotienten zwischen dem ersten Lagerkennwert und dem zweiten Lagerkennwert gebildet werden.

Die Lagerbereiche B1, B2 sind durch eine "logische" Trennung definiert. Beispielweise umfasst der erste Lagerbereich B1 unterhalb der "logischen" Trennung eine Anzahl an Lagerebenen L und der zweite Lagerbereich B2 oberhalb der "logischen" Trennung eine Anzahl an anderen Lagerebenen L. Die Anzahl der Lagerplätze 4 kann im ersten Lagerbereich B1 und zweiten Lagerbereich B2 insbesondere gleich sein. In diesem Fall entspricht der Quotient zwischen dem ersten Lagerkennwert und dem zweiten Lagerkennwert dem Quotienten zwischen der Anzahl der im ersten Lagerbereich B1 eingelagerten Ladegüter 5 und der Anzahl der im zweiten Lagerbereich B2 eingelagerten Ladegüter 5.

Die Lagerbereiche B 1, B2 können jeweils eine einzelne Lagerebene L oder eine Vielzahl von Lagerebenen L umfassen. Insbesondere kann die vertikale Erstreckung der Lagerbereiche B1, B2 der vertikalen Erstreckung der Einlager-Bewegungsbereiche E1, E2 und/oder der Auslager-Bewegungsbereiche A1, A2 entsprechen. Das heißt für das gegebene Beispiel, dass die vertikale Erstreckung des ersten Lagerbereichs B1 der vertikalen Erstreckung des ersten Einlager-Bewegungsbereichs E1 und/oder des ersten Auslager-Bewegungsbereichs A1 entsprechen kann, und die vertikale Erstreckung des zweiten Lagerbereichs B2 kann der vertikalen Erstreckung des zweiten Einlager-Bewegungsbereichs E2 und/oder des zweiten Auslager-Bewegungsbereichs A2 entsprechen.

Vorteilhaft können die Ladegüter 5 innerhalb des ersten Lagerbereichs B1 und/oder innerhalb des zweiten Lagerbereichs B2 chaotisch in die Lageranordnung 1a..1c eingelagert werden. Dadurch kann der steuerungstechnische Aufwand für die Einlagerung der Ladegüter 5 gering gehalten werden.

Weiterhin kann die Zuteilung der Lagerbereiche B1, B2 statisch sein oder dynamisch (das heißt, die Lagerbereiche B1, B2 können über die Zeit ihre Größe und/oder Position verändern).

In einer weiteren Variante des vorgestellten Verfahrens werden die in die Lageranordnung 1c einzulagernden Ladegüter 5 chaotisch und/oder gleichmäßig auf die erste Einlager-Fördervorrichtung 16a und die zweite Einlager-Fördervorrichtung 16b der Einlager-Fördertechnik 15 aufgeteilt. Dies ist eine Möglichkeit, um den steuerungstechnischen Aufwand für die Anförderung der Ladegüter 5 gering zu halten.

Insbesondere ist es von Vorteil, wenn der erste Einlager-Bewegungsbereich E1 und der zweite Einlager-Bewegungsbereichs E2 einander überlappen und der erste Auslager-Bewegungsbereich A1 und der zweite Auslager-Bewegungsbereich A2 voneinander getrennt sind, so wie dies in der Fig. 4 dargestellt ist. Die Einlager-Bewegungsbereiche E1 und E2 weisen daher einen Einlager-Überlappungsbereich E3 auf, der sowohl von der ersten Einlager-Transportplattform 14a als auch von der zweiten Einlager-Transportplattform 14b angefahren werden kann. Kollisionen zwischen den beiden Einlager-Transportplattformen 14a, 14b werden vom Steuersystem 21 verhindert.

Bei dieser Ausführungsvariante macht man sich den Umstand zu Nutze, dass bei der Einlagerung eines Ladeguts 5 in aller Regel Wahlfreiheit bei der Wahl des Lagerplatzes 4 besteht. Dies trifft insbesondere dann zu, wenn die Ladegüter 5 ungeordnet in einer Lageranordnung 1a..1c gelagert werden. Dem wird dadurch Rechnung getragen, dass die Einlager-Bewegungsbereiche E1, E2 einander überlappen und einen Einlager-Überlappungsbereich E3 aufweisen. Eine Einlager-Transportplattformen 14a, 14b kann daher einen vergleichsweise gro-ßen Bereich an Lagerebenen L abdecken.

Im Gegensatz zur Einlagerung wird bei der Auslagerung dagegen in aller Regel auf einen bestimmten Lagerplatz 4 zugegriffen, auf welchem das benötigte Ladegut 5 gelagert ist. Zudem ist der Auslagervorgang in aller Regel zeitkritischer als der Einlagervorgang, da die Zeit von der Bestellung eines Ladeguts 5 bis zur Auslieferung kurz gehalten werden muss. Dem wird dadurch Rechnung getragen, dass die Auslager-Bewegungsbereiche A1, A2 voneinander getrennt sind und keinen Überlappungsbereich aufweisen. Die Auslager-Transportplattformen 18a, 18b können daher ohne gegenseitige Beeinflussung und mit hoher Geschwindigkeit innerhalb der zugeordneten Auslager-Bewegungsbereiche A1, A2 bewegt werden.

Denkbar ist aber auch, dass verschiedene Betriebsmodi vorgesehen sind, die in den Fig. 4 bis 7 visualisiert sind.

Der erste Betriebsmodus ist im Grunde obenstehend schon erläutert worden. Das Steuersystem 21 steuert die erste Einlager-Transportplattform 14a und die zweite Einlager-Transportplattform 14b im ersten Betriebsmodus derart an, dass die Einlager-Bewegungsbereiche E1, E2 der ersten Einlager-Transportplattform 14a und der zweiten Einlager-Transportplattform 14b beim Einlagern von Ladegütern 5 einander vertikal überlappen. Das Steuersystem 21 steuert die erste Auslager-Transportplattform 18a und die zweite Auslager-Transportplattform 18b im ersten Betriebsmodus zudem derart an, dass die Auslager-Bewegungsbereiche A1, A2 der ersten Auslager-Transportplattform 18a und der zweiten Auslager-Transportplattform 18b beim Auslagern von Ladegütern 5 stets vertikal voneinander getrennt sind.

In einem zweiten Betriebsmodus, der in Fig. 5 visualisiert ist, werden die Einlager-Bewegungsbereiche E1, E2 der ersten Einlager-Transportplattform 14a und der zweiten Einlager-Transportplattform 14b beim Einlagern von Ladegütern 5 vertikal voneinander getrennt. Desgleichen werden die Auslager-Bewegungsbereiche A1, A2 der ersten Auslager-Transportplattform 18a und der zweiten Auslager-Transportplattform 18b beim Auslagern von Ladegütern 5 im zweiten Betriebsmodus vertikal voneinander getrennt.

Die Umschaltung zwischen erstem und zweiten Betriebsmodus kann insbesondere basierend auf einem Lagerkennwert für die Lagerbereiche B1, B2 der Lageranordnung 1c durch das Steuersystem 21 erfolgen. Wie bereits weiter oben erläutert, kann ein erster Lagerkennwert für den ersten Lagerbereich B1 der Lageranordnung 1c und ein zweiter Lagerkennwert für den zweiten Lagerbereich B2 der Lageranordnung 1c von einer Auswerteeinheit ermittelt und miteinander verglichen werden. Der erste Lagerkennwert ist durch das Verhältnis zwischen den vorhandenen Lagerplätzen 4 und den belegten Lagerplätzen 4 im ersten Lagerbereich B1 definiert und der zweite Lagerkennwert durch das Verhältnis zwischen den vorhandenen Lagerplätzen 4 und den belegten Lagerplätzen 4 im zweiten Lagerbereich B2. Der erste Lagerbereich B1 erstreckt sich dabei vertikal anders als der zweite Lagerbereich B2.

Das Steuersystem 21 betreibt die erste Einlager-Transportplattform 14a und die zweite Einlager-Transportplattform 14b dann im ersten Betriebsmodus, wenn ein Unterschied zwischen dem ersten Lagerkennwert und dem zweiten Lagerkennwert über einem ersten Schwellwert liegt, das heißt wenn zwischen der Belegung der Lagerbereiche B1, B2 ein Ungleichgewicht vorliegt.

Das Steuersystem 21 betreibt die erste Einlager-Transportplattform 14a und die zweite Einlager-Transportplattform 14b dagegen dann im zweiten Betriebsmodus, wenn ein Unterschied zwischen dem ersten Lagerkennwert und dem zweiten Lagerkennwert unter dem ersten Schwellwert liegt oder unter einem zweiten Schwellwert, der unter dem ersten Schwellwert liegt. Das heißt, der zweite Betriebsmodus wird dann vorgesehen, wenn die Belegung der Lagerbereiche B 1, B2 (im Wesentlichen) im Gleichgewicht ist. Vorteilhaft wird jene Variante angewandt, bei der die Umschaltung in den zweiten Betriebsmodus dann erfolgt, wenn ein Unterschied zwischen dem ersten Lagerkennwert und dem zweiten Lagerkennwert unter einem zweiten Schwellwert, der unter dem ersten Schwellwert liegt. Die in diesem Fall vorgesehene Hysterese verhindert ein allzu häufiges Umschalten zwischen dem ersten und dem zweiten Betriebsmodus. Grundsätzlich kann aber auch jene Variante angewandt werden, bei der die Umschaltung in den zweiten Betriebsmodus dann erfolgt, wenn ein Unterschied zwischen dem ersten Lagerkennwert und dem zweiten Lagerkennwert unter dem ersten Schwellwert liegt, also keine Hysterese vorgesehen wird.

Die Auslager-Bewegungsbereiche A1, A2 der Auslager-Transportplattformen 18a, 18b sind sowohl im ersten Betriebsmodus als auch im zweiten Betriebsmodus und damit unabhängig von einem Lagerkennwert vertikal voneinander getrennt.

Das Steuersystem 21 betreibt die erste Auslager-Transportplattform 18a und die zweite Auslager-Transportplattform 18b insbesondere dann im ersten Betriebsmodus oder im zweiten Betriebsmodus, wenn eine Betriebsfähigkeit der ersten Auslager-Transportplattform 18a und der zweiten Auslager-Transportplattform 18b und der ersten Auslager-Fördervorrichtung 20a und der zweiten Auslager-Fördervorrichtung 20b durch eine Diagnoseeinheit (die Teil des Steuersystems 21 sein kann) festgestellt wird oder die Betriebsfähigkeit nicht beeinträchtigt ist.

Denkbar ist aber auch, dass das Steuersystem 21 die erste Auslager-Transportplattform 18a und die zweite Auslager-Transportplattform 18b in einem dritten Betriebsmodus oder in einem vierten Betriebsmodus betreibt, wenn eine Beeinträchtigung der Betriebsfähigkeit der ersten Auslager-Transportplattform 18a oder der zweiten Auslager-Transportplattform 18b oder der ersten Auslager-Fördervorrichtung 20a oder der zweiten Auslager-Fördervorrichtung 20b durch die Diagnoseeinheit festgestellt wird oder die Betriebsfähigkeit nicht mehr gegeben ist.

Sowohl im dritten Betriebsmodus als auch im vierten Betriebsmodus liegt beim Auslagern von Ladegütern 5 eine vertikale Überlappung der Auslager-Bewegungsbereiche A1, A2 der ersten Auslager-Transportplattform 18a und der zweiten Auslager-Transportplattform 18b vor. Es gibt also einen Auslager-Überlappungsbereich A3. Kollisionen zwischen den beiden Auslager-Transportplattformen 18a, 18b werden dabei wiederum vom Steuersystem 21 verhindert.

Im dritten Betriebsmodus liegt beim Einlagern von Ladegütern 5 darüber hinaus eine vertikale Überlappung die Einlager-Bewegungsbereiche E1, E2 der ersten Einlager-Transportplattform 14a und der zweiten Einlager-Transportplattform 14b vor. Im vierten Betriebsmodus sind die Einlager-Bewegungsbereiche E1, E2 der ersten Einlager-Transportplattform 14a und der zweiten Einlager-Transportplattform 14b beim Einlagern von Ladegütern 5 dagegen vertikal voneinander getrennt.

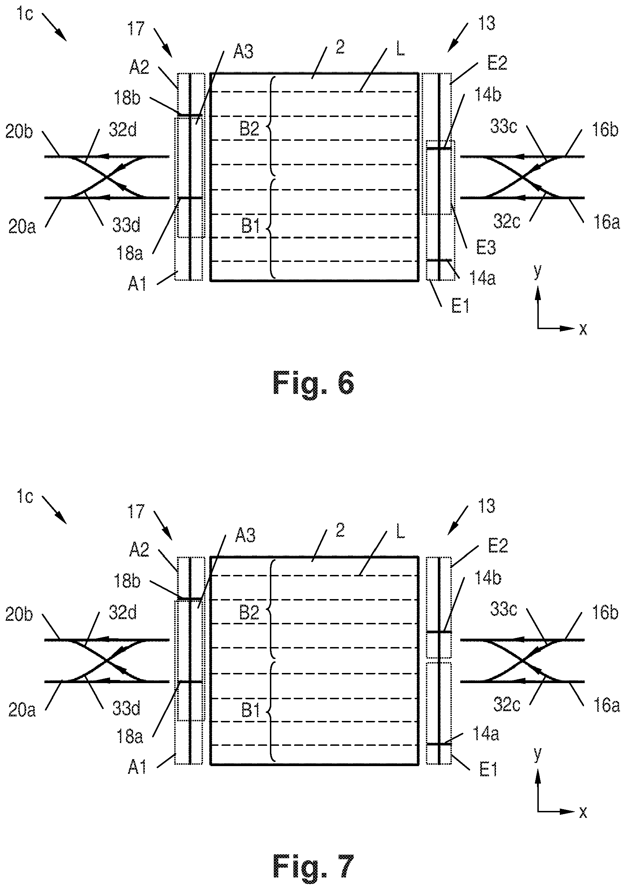

Der dritte Betriebsmodus ist in der Fig. 6 dargestellt, der vierte Betriebsmodus in der Fig. 7.

Bei dieser Variante des vorgestellten Verfahrens wird die mehrfache Anordnung von Auslager-Transportplattformen 18a, 18b und/oder Auslager-Fördervorrichtungen 20a, 20b im Fehlerfall dahingehend ausgenutzt, dass die strikte Trennung der Bewegungsbereiche A1, A2 für die Auslager-Transportplattformen 18a, 18b im Fehlerfall aufgehoben wird, um den automatisierten Lagerbetrieb auch bei Ausfall einer der Auslager-Transportplattformen 18a, 18b und/oder bei Ausfall einer der Auslager-Fördervorrichtungen 20a, 20b aufrechtzuerhalten. Beispielsweise kann die (untere) erste Auslager-Transportplattform 18a die (obere) zweite Auslager-Fördervorrichtung 20b anfahren, wenn die (untere) erste Auslager-Fördervorrichtung 20a blockiert ist, und so weiter.

Je nachdem, ob die Funktion der ersten Auslager-Transportplattform 18a oder der zweiten Auslager-Transportplattform 18b beeinträchtigt ist, kann die erste Auslager-Fördervorrichtung 20a wahlweise der ersten Auslager-Transportplattform 18a oder der zweiten Auslager-Transportplattform 18b zugeordnet werden und zum Auslagern/Abtransport eines Ladegutes 5 von der ersten Auslager-Transportplattform 18a oder zweiten Auslager-Transportplattform 18b angefahren werden, oder es wird die zweite Auslager-Fördervorrichtung 20b wahlweise der ersten Auslager-Transportplattform 18a oder der zweiten Auslager-Transportplattform 18b zugeordnet und zum Auslagern/Abtransport eines Ladegutes 5 von der ersten Auslager-Transportplattform 18a oder zweiten Auslager-Transportplattform 18b angefahren.

Je nachdem, ob die Funktion der ersten Auslager-Fördervorrichtung 20a oder der zweiten Auslager-Fördervorrichtung 20b beeinträchtigt ist, kann die erste Auslager-Transportplattform 18a wahlweise der ersten Auslager-Fördervorrichtung 20a oder der zweiten Auslager-Fördervorrichtung 20b zugeordnet und zum Auslagern/Abtransport eines Ladegutes 5 von der ersten Auslager-Transportplattform 18a angefahren werden, oder es wird die zweite Auslager-Transportplattform 18b wahlweise der ersten Auslager-Fördervorrichtung 20a oder der zweiten Auslager-Fördervorrichtung 20b zugeordnet und zum Auslagern/Abtransport eines Ladegutes 5 von der zweiten Auslager-Transportplattform 18b angefahren.

Die Umschaltung zwischen drittem und viertem Betriebsmodus kann wiederum basierend auf dem bereits zuvor erläuterten Lagerkennwerten für die Lagerbereiche B 1, B2 durch das Steuersystem 21 erfolgen. Konkret betreibt das Steuersystem 21 die erste Einlager-Transportplattform 14a und die zweite Einlager-Transportplattform 14b im dritten Betriebsmodus, wenn ein Unterschied zwischen dem ersten Lagerkennwert und dem zweiten Lagerkennwert über einem ersten Schwellwert liegt, und im vierten Betriebsmodus, wenn ein Unterschied zwischen dem ersten Lagerkennwert und dem zweiten Lagerkennwert unter dem ersten Schwellwert liegt oder unter einem zweiten Schwellwert, der unter dem ersten Schwellwert liegt.

Insbesondere im zweiten und vierten Betriebsmodus ist es von Vorteil, wenn der Einlager-Bewegungsbereich E1 der ersten Einlager-Transportplattform 14a den Lagerebenen L des ersten Lagerbereichs B 1 und der Einlager-Bewegungsbereich E2 der zweiten Einlager-Transportplattform 14b den Lagerebenen L des zweiten Lagerbereichs B2 zugeordnet wird. Dadurch werden die Lagerkennwerte nicht nur auf die Lagerbereiche B 1, B2 bezogen, sondern auch auf die Einlager-Bewegungsbereiche E1, E2 der Einlager-Transportplattformen 14a, 14b.

Auch ist es möglich, dass sich ein Einlager-Bewegungsbereich E1, E2 auf die Förderebene F1, F2 der jeweiligen Einlager-Fördervorrichtung 16a, 16b erstreckt, welche von einer Einlager-Transportplattform 14a, 14b angefahren werden soll. Beispielsweise kann sich der erste Einlager-Bewegungsbereich E1 bis zur ersten Einlager-Fördervorrichtung 16a oder darüber hinaus bis zur zweiten Einlager-Fördervorrichtung 16b erstrecken. Der zweite Einlager-Bewegungsbereich E2 kann sich bis zur zweiten Einlager-Fördervorrichtung 16b oder darüber hinaus bis zur ersten Einlager-Fördervorrichtung 16a erstrecken.

Dasselbe gilt bei der Auslagerung. Ein Auslager-Bewegungsbereich A1, A2 erstreckt sich auf die Förderebene F1, F2 der jeweiligen Auslager-Fördervorrichtung 20a, 20b, welche von einer Auslager-Transportplattform 18a, 18b angefahren werden soll. Beispielsweise kann sich der erste Auslager-Bewegungsbereich A1 bis zur ersten Auslager-Fördervorrichtung 20a oder darüber hinaus bis zur zweiten Auslager-Fördervorrichtung 20b erstrecken. Der zweite Auslager-Bewegungsbereich A2 kann sich bis zur zweiten Auslager-Fördervorrichtung 20b oder darüber hinaus bis zur ersten Auslager-Fördervorrichtung 20a erstrecken.

Die Betriebsmodi können hinsichtlich der Anordnung der Einlager-Bewegungsbereiche E1, E2 und der Auslager-Bewegungsbereiche A1, A2 also auf folgende Weise zusammengefasst werden:

| | Einlagerseite | Auslagerseite |
|---|---|---|
| Erster Betriebsmodus | Überlappung E1, E2 | keine Überlappung |
| Zweiter Betriebsmodus | keine Überlappung | keine Überlappung |
| Dritter Betriebsmodus | Überlappung E1, E2 | Überlappung A1, A2 |
| Vierter Betriebsmodus | keine Überlappung | Überlappung A1, A2 |

Die Betriebsmodi können hinsichtlich der Grundlage für die Auswahl eines bestimmten Betriebsmodus darüber hinaus auf folgende Weise zusammengefasst werden:

| | Lagerbereiche | Auslagerseite |
|---|---|---|
| Erster Betriebsmodus | ungleicher Füllgrad | einwandfreie Funktion |
| Zweiter Betriebsmodus | gleicher Füllgrad | einwandfreie Funktion |
| Dritter Betriebsmodus | ungleicher Füllgrad | Funktionale Einschränkung |
| Vierter Betriebsmodus | gleicher Füllgrad | Funktionale Einschränkung |

Besonders vorteilhaft ist es, wenn der erste Einlager-Bewegungsbereich E1 bei einem Wechsel vom zweiten Betriebsmodus in den ersten Betriebsmodus oder vom vierten Betriebsmodus in den dritten Betriebsmodus beibehalten und der zweite Einlager-Bewegungsbereich E2 auf den ersten Einlager-Bewegungsbereich E1 ausgedehnt wird, wenn der zweite Lagerbereich B2 im zweiten/vierten Betriebsmodus im Vergleich zum ersten Lagerbereich B1 übermäßig stark durch Ladegüter 5 belegt ist. Die oben angesprochene Zustandsänderung betrifft also einen Wechsel von einem Betriebsmodus, in dem die Einlager-Bewegungsbereiche E1, E2 voneinander getrennt sind, in einen Betriebsmodus, in dem die Einlager-Bewegungsbereiche E1, E2 einander überlappen. Der zweite Einlager-Bewegungsbereich E2 umfasst bei dieser Ausführungsform nach dem genannten Wechsel also den im zweiten/vierten Betriebsmodus gültigen ersten Einlager-Bewegungsbereich E1 und den im zweiten/vierten Betriebsmodus gültigen zweiten Einlager-Bewegungsbereich E2, gegebenenfalls abzüglich einer von der zweiten Einlager-Transportplattform 14b im ersten Einlager-Bewegungsbereich E1 bauartbedingt nicht erreichbaren Lagerebene L.

Besonders vorteilhaft ist es auch, wenn der zweite Einlager-Bewegungsbereich E2 bei einem Wechsel vom zweiten Betriebsmodus in den ersten Betriebsmodus oder vom vierten Betriebsmodus in den dritten Betriebsmodus beibehalten und der erste Einlager-Bewegungsbereich E1 auf den zweiten Einlager-Bewegungsbereich E2 ausgedehnt wird, wenn der erste Lagerbereich B1 im zweiten/vierten Betriebsmodus im Vergleich zum zweiten Lagerbereich B2 übermäßig stark durch Ladegüter 5 belegt ist. Die oben angesprochene Zustandsänderung betrifft also ebenfalls einen Wechsel von einem Betriebsmodus, in dem die Einlager-Bewegungsbereiche E1, E2 voneinander getrennt sind, in einen Betriebsmodus, in dem die Einlager-Bewegungsbereiche E1, E2 einander überlappen. Der erste Einlager-Bewegungsbereich E1 umfasst bei dieser Ausführungsform nach dem genannten Wechsel also den im zweiten/vierten Betriebsmodus gültigen ersten Einlager-Bewegungsbereich E1 und den im zweiten/vierten Betriebsmodus gültigen zweiten Einlager-Bewegungsbereich E2, gegebenenfalls abzüglich einer von der ersten Einlager-Transportplattform 14a im zweiten Einlager-Bewegungsbereich E2 bauartbedingt nicht erreichbaren Lagerebene L.

Besonders vorteilhaft ist es auch, wenn der erste Einlager-Bewegungsbereich E1 nach einem Wechsel vom ersten Betriebsmodus in den zweiten Betriebsmodus oder vom dritten Betriebsmodus in den vierten Betriebsmodus dem ersten Einlager-Bewegungsbereich E1 vor einem Wechsel vom zweiten Betriebsmodus in den ersten Betriebsmodus / vom vierten Betriebsmodus in den dritten Betriebsmodus entspricht und der zweite Einlager-Bewegungsbereich E2 nach einem Wechsel vom ersten Betriebsmodus in den zweiten Betriebsmodus oder vom dritten Betriebsmodus in den vierten Betriebsmodus dem zweiten Einlager-Bewegungsbereich E2 vor einem Wechsel vom zweiten Betriebsmodus in den ersten Betriebsmodus / vom vierten Betriebsmodus in den dritten Betriebsmodus entspricht. Mit anderen Worten werden der erste Einlager-Bewegungsbereich E1 und der zweite Einlager-Bewegungsbereich E2 nach einem Wechsel vom ersten Betriebsmodus in den zweiten Betriebsmodus oder vom dritten Betriebsmodus in den vierten Betriebsmodus auf ihre ursprüngliche Größe zurückgeschaltet.

Vorteilhaft ist es ganz generell, wenn die erste Einlager-Fördervorrichtung 16a und/oder die zweite Einlager-Fördervorrichtung 16b und/oder die erste Auslager-Fördervorrichtung 20a und/oder die zweite Auslager-Fördervorrichtung 20b im mittleren Drittel der vertikalen Erstreckung y des ersten oder zweiten Lagerregals 3a, 3b angeordnet sind/werden. Dadurch kann die Ein- und/oder Auslagerung von Ladegütern 5 besonders effizient erfolgen, da die dabei von den Einlager-Transportplattformen 14a, 14b zurückgelegten Wege beziehungsweise die von den Auslager-Transportplattformen 18a, 18b zurückgelegten Wege relativ kurz sind.

Grundsätzlich können die erste Einlager-Fördervorrichtung 16a und/oder die zweite Einlager-Fördervorrichtung 16b und/oder die erste Auslager-Fördervorrichtung 20a und/oder die zweite Auslager-Fördervorrichtung 20b aber auch im unteren Drittel oder oberen Drittel der vertikalen Erstreckung y des ersten oder zweiten Lagerregals 3a, 3b angeordnet sind/werden.

Im Falle einer Überlappung der Einlager-Bewegungsbereiche E1, E2 ist es darüber hinaus ist von Vorteil, wenn beide Einlager-Fördervorrichtungen 16a, 16b in beiden Einlager-Bewegungsbereichen E1, E2 beziehungsweise im Einlager-Überlappungsbereich E3 liegen. Auf diese Weise kann die Zuordnung der Einlager-Transportplattformen 14a, 14b zu den Einlager-Fördervorrichtungen 16a, 16b besonders flexibel erfolgen.

Im Falle einer Überlappung der Auslager-Bewegungsbereiche A1, A2 ist es darüber hinaus ist von Vorteil, wenn beide Auslager-Fördervorrichtungen 20a, 20b in beiden Auslager-Bewegungsbereichen A1, A2 beziehungsweise im Auslager-Überlappungsbereich A3 liegen. Auf diese Weise kann die Zuordnung der Auslager-Transportplattformen 18a, 18b zu den Auslager-Fördervorrichtungen 20a, 20b ebenfalls besonders flexibel erfolgen.

An dieser Stelle wird darauf hingewiesen, dass die wechselseitige Verbindung der Einlager-Fördervorrichtungen 16a, 16b durch die Verbindungsbahnen 32c, 33c nicht an eine bestimmte Auslegung der Einlager-Bewegungsbereichen E1, E2 beziehungsweise nicht an einen bestimmten Betriebsmodus gebunden ist, sondern eine wechselseitige Verbindung der Einlager-Fördervorrichtungen 16a, 16b durch die Verbindungsbahnen 32c, 33c unabhängig davon erfolgen kann.

An dieser Stelle wird weiterhin darauf hingewiesen, dass die wechselseitige Verbindung der Auslager-Fördervorrichtungen 20a, 20b durch die Verbindungsbahnen 32d, 33d nicht an eine bestimmte Auslegung der Auslager-Bewegungsbereiche A1, A2 beziehungsweise nicht an einen bestimmten Betriebsmodus gebunden ist, sondern eine wechselseitige Verbindung der Auslager-Fördervorrichtungen 20a, 20b durch die Verbindungsbahnen 32d, 33d unabhängig davon erfolgen kann.

An dieser Stelle wird auch darauf hingewiesen, dass die vorgeschlagenen Maßnahmen, obwohl diese in der Fig. 1 im Rahmen von kistenförmigen Ladehilfsmitteln (Behälter, Kartons etc.) erläutert wurden, auch in Verbindung mit anders geformten Ladehilfsmitteln angewandt werden können. Insbesondere können die vorgeschlagenen Maßnahmen auch im Zusammenhang mit Hängetaschen und Hängefördertechnik angewandt werden.

Weiterhin wird darauf hingewiesen, dass die vorgeschlagenen Maßnahmen zwar jeweils im Zusammenhang mit zwei Einlager-Transportplattformen 14a, 14b, zwei Einlager-Bewegungsbereichen E1, E2, zwei Einlager-Fördervorrichtungen 16a, 16b, zwei Auslager-Transportplattformen 18a, 18b, zwei Auslager-Bewegungsbereichen A1, A2, zwei Auslager-Fördervorrichtungen 20a, 20b, zwei Lagerbereichen B 1, B2, und zwei Förderebenen F1, F2 erläutert wurden, die offenbarten Prinzipien aber auch auf mehr als zwei Einlager-Transportplattformen 14a, 14b, mehr als zwei Einlager-Bewegungsbereiche E1, E2, mehr als zwei Einlager-Fördervorrichtungen 16a, 16b, mehr als zwei Auslager-Transportplattformen 18a, 18b, mehr als zwei Auslager-Bewegungsbereiche A1, A2, mehr als zwei Auslager-Fördervorrichtungen 20a, 20b, mehr als zwei Lagerbereiche B1, B2, und mehr als zwei Förderebenen F1, F2 angewandt werden können.

Zusammenfassend ermöglichen die vorgeschlagenen Maßnahmen in der Regalanordnung 2 beziehungsweise im Kommissioniersystem 24a, 24b insbesondere eine Entkopplung des Einlagervorgangs vom Auslagervorgang. Dies trifft in besonderem Maße zu, wenn an die Einlager-Vertikalfördervorrichtung 13 eingangsseitig ausschließlich die Einlager-Fördertechnik 15 und an die Auslager-Vertikalfördervorrichtung 17 ausgangsseitig ausschließlich die Auslager-Fördertechnik 19 angeschlossen ist und/oder die Einlager-Vertikalfördervorrichtung 13 von der Auslager-Vertikalfördervorrichtung 17 baulich getrennt ist. Eine entkoppelte Betriebsweise wird generell auch durch eine starre Zuordnung der Einlager-Transportplattformen 14a, 14b zu den Einlager-Fördervorrichtungen 16a, 16b beziehungsweise der Auslager-Transportplattformen 18a, 18b zu den Auslager-Fördervorrichtungen 20a, 20b unterstützt. Andererseits ermöglicht eine flexible Zuordnung der Einlager-Transportplattformen 14a, 14b zu den Einlager-Fördervorrichtungen 16a, 16b beziehungsweise der Auslager-Transportplattformen 18a, 18b zu den Auslager-Fördervorrichtungen 20a, 20b eine Betriebsweise der Regalanordnung 2 beziehungsweise des Kommissioniersystems 24a, 24b, welche gut an unterschiedliche Umstände beziehungsweise Betriebszustände angepasst werden kann. In besonderem Maße trifft dies zu, wenn die Einlager-Fördervorrichtungen 16a, 16b und/oder die Auslager-Fördervorrichtungen 20a, 20b wechselseitig miteinander verbunden sind. Auch das Vorsehen von verschiedenen Betriebsmodi unterstützt eine Anpassung der Betriebsweise der Regalanordnung 2 beziehungsweise des Kommissioniersystems 24a, 24b an verschiedene Umstände. Die unterschiedliche Betriebsweise der Einlager-Vertikalfördervorrichtung 13, 13a..13c und der Auslager-Vertikalfördervorrichtung 17, 17a..17e nützt darüber das Phänomen aus, dass bei der Einlagerung eines Ladeguts 5 zumeist Wahlfreiheit bei der Auswahl eines Lagerplatzes 4 vorliegt, wohingegen dies bei der Auslagerung in aller Regel nicht zutrifft. Durch die vorgeschlagenen Maßnahmen wird dem Rechnung getragen und damit eine besonders effiziente Betriebsweise einer Regalanordnung 2 beziehungsweise eines Kommissioniersystems 24a, 24b erreicht.

Eine besonders bevorzugte Ausführung einer Einlager-Vertikalfördervorrichtung 13, 13a..13c und/oder Auslager-Vertikalfördervorrichtung 17, 17a..17e ist in der österreichischen Patentanmeldung A 51090/2018 (AT 521359 B1) beschrieben und wird zum Gegenstand dieser Offenbarung gemacht.

Abschließend wird festgehalten, dass der Schutzbereich durch die Patentansprüche bestimmt ist. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Insbesondere wird auch festgehalten, dass die dargestellten Vorrichtungen in der Realität auch mehr oder auch weniger Bestandteile als dargestellt umfassen können. Teilweise können die dargestellten Vorrichtungen beziehungsweise deren Bestandteile auch unmaßstäblich und/oder vergrößert und/oder verkleinert dargestellt sein.

### Bezugszeichenaufstellung

- 1, 1a..1c: Lageranordnung
- 2: Regalanordnung
- 3a, 3b: Lagerregal
- 4: Lagerplatz
- 5: Ladegut

- 6, 6a..6e: Regalgasse
- 7: Einlager-Puffervorrichtung
- 8: Einlager-Bereitstellvorrichtung
- 9: Auslager-Puffervorrichtung
- 10: Auslager-Bereitstellvorrichtung

- 11: Regalbediengerät (Shuttle)
- 12: Regalbediengeräte-Heber
- 13, 13a..13c: Einlager-Vertikalfördervorrichtung
- 14a, 14b: Einlager-Transportplattform
- 15: Einlager-Fördertechnik

- 16a, 16b: Einlager-Fördervorrichtung
- 17, 17a..17e: Auslager-Vertikalfördervorrichtung
- 18a, 18b: Auslager-Transportplattform
- 19: Auslager-Fördertechnik
- 20a, 20b: Auslager-Fördervorrichtung

- 21: Steuersystem
- 22: Einlager-Vertikalmast
- 23: Auslager-Vertikalmast
- 24a, 24b: Kommissioniersystem
- 25a..25f: Kommissionierstation
- 26: erste Zuförderbahn
- 27a, 27b: Ein- und Auslager-Verteilerbahn / Förderumlaufbahn (Loop)
- 28: Rückförderbahn
- 29a, 29b: Einlagerbahn
- 30: zweite Zuförderbahn

- 31a, 31b: Auslagerbahn
- 32a..32d: erste Verbindungsbahn
- 33a..33d: zweite Verbindungsbahn
- 34a..34d: Wareneingangsstation
- 35a, 35b: Einlager-Verteilerbahn / Förderumlaufbahn (Loop)
- 36a, 36b: Auslager-Verteilerbahn / Förderumlaufbahn (Loop)

- A1, A2: Auslager-Bewegungsbereich
- A3: Auslager-Überlappungsbereich
- B1, B2: Lagerbereich
- E1, E2: Einlager-Bewegungsbereich
- E3: Einlager-Überlappungsbereich
- F1, F2: Förderebene
- L: Lagerebene

- x: Längsrichtung/Längserstreckung (der Regalgasse)
- y: Vertikalrichtung/Vertikalerstreckung (des Lagerregals)
- z: Querrichtung/Quererstreckung (der Regalgasse)

## Patentansprüche

1. Lageranordnung (1, 1a..1c), umfassend
- eine Regalanordnung (2) mit einem ersten Lagerregal (3a) und einem zweiten Lagerregal (3b) jeweils mit Lagerplätzen (4) für Ladegüter (5), wobei die Lagerplätze (4) in übereinander liegenden Lagerebenen (L) angeordnet sind, und mit einer Regalgasse (6, 6a..6e) zwischen dem ersten Lagerregal (3a) und dem zweiten Lagerregal (3b),
- eine Einlager-Puffervorrichtung (7) mit Einlager-Bereitstellvorrichtungen (8), welche in übereinander liegenden Bereitstellebenen angeordnet und jeweils für das Zwischenpuffern eines Ladeguts (5) oder mehrerer Ladegüter (5) ausgebildet sind,
- eine Auslager-Puffervorrichtung (9) mit Auslager-Bereitstellvorrichtungen (10), welche in übereinander liegenden Bereitstellebenen angeordnet und jeweils für das Zwischenpuffern eines Ladeguts (5) oder mehrerer Ladegüter (5) ausgebildet sind,
- Regalbediengeräte (11), welche in der Regalgasse (6, 6a..6e) vor den Lagerplätzen (4), vor den Einlager-Bereitstellvorrichtungen (8) und vor den Auslager-Bereitstellvorrichtungen (10) jeweils auf einer horizontalen Fahrebene verfahrbar sind, welche jeweils eine Lastaufnahmevorrichtung aufweisen und welche zum Transport der Ladegüter (5) von den Einlager-Bereitstellvorrichtungen (8) zu den Lagerplätzen (4) und zum Transport der Ladegüter (5) von den Lagerplätzen (4) zu den Auslager-Bereitstellvorrichtungen (10) ausgebildet sind, **gekennzeichnet durch**
- eine der Regalgasse (6, 6a..6e) zugeordnete Einlager-Vertikalfördervorrichtung (13, 13a..13c) mit mehreren unabhängig voneinander ansteuerbaren und jeweils in einem Einlager-Bewegungsbereich (E1, E2) relativ gegenüber den Bereitstellebenen verstellbaren Einlager-Transportplattformen (14a, 14b), die auf einem einzigen Einlager-Vertikalmast (22) bewegbar sind, und eine der Regalgasse (6, 6a..6e) zugeordnete und an die Einlager-Vertikalfördervorrichtung (13, 13a..13c) fördertechnisch angeschlossene Einlager-Fördertechnik (15) zum Antransport von Ladegütern (5) zu der Einlager-Vertikalfördervorrichtung (13, 13a..13c), wobei die Ladegüter (5) mittels der Einlager-Transportplattformen (14a, 14b) von der Einlager-Fördertechnik (15) zu den Einlager-Bereitstellvorrichtungen (8) transportierbar sind,
- eine der Regalgasse (6, 6a..6e) zugeordnete Auslager-Vertikalfördervorrichtung (17, 17a..17e) mit mehreren unabhängig voneinander ansteuerbaren und jeweils in einem Auslager-Bewegungsbereich (A1, A2) relativ gegenüber den Bereitstellebenen verstellbaren Auslager-Transportplattformen (18a, 18b), die auf einem einzigen Auslager-Vertikalmast (23) bewegbar sind, und eine der Regalgasse (6, 6a..6e) zugeordnete und an die Auslager-Vertikalfördervorrichtung (17, 17a..17e) fördertechnisch angeschlossene Auslager-Fördertechnik (19) zum Abtransport von Ladegütern (5) von der Auslager-Vertikalfördervorrichtung (17, 17a..17e), wobei die Ladegüter (5) mittels der Auslager-Transportplattformen (18a, 18b) von den Auslager-Bereitstellvorrichtungen (10) zu der Auslager-Fördertechnik (19) transportierbar sind, und
- ein Steuersystem (21), das für die voneinander unabhängige Ansteuerung der Einlager-Transportplattformen (14a, 14b) und der Auslager-Transportplattformen (18a, 18b) ausgebildet ist.

2. Lageranordnung (1, 1a..1c) nach Anspruch 1, **dadurch gekennzeichnet, dass** an die Einlager-Vertikalfördervorrichtung (13, 13a..13c) eingangsseitig ausschließlich die Einlager-Fördertechnik (15) und an die Auslager-Vertikalfördervorrichtung (17, 17a..17e) ausgangsseitig ausschließlich die Auslager-Fördertechnik (19) angeschlossen ist.

3. Lageranordnung (1, 1a..1c) nach Anspruch 1 oder 2, **dadurch gekennzeichnet, dass** die Einlager-Vertikalfördervorrichtung (13, 13a.. 13c) von der Auslager-Vertikalfördervorrichtung (17, 17a..17e) baulich getrennt ist.

4. Lageranordnung (1, 1a..1c) nach einem der Ansprüche 1 bis 3, **dadurch gekennzeichnet**, die Auslager-Fördertechnik (19) eine erste Auslager-Fördervorrichtung (20a) umfasst, welche einer ersten Auslager-Transportplattform (18a) der Auslager-Transportplattformen (18a, 18b) und einer zweiten Auslager-Transportplattform (18b) der Auslager-Transportplattformen (18a, 18b) zugeordnet und zur Auslagerung eines Ladeguts (5) von der ersten Auslager-Transportplattform (18a) und von der zweiten Auslager-Transportplattform (18b) anfahrbar ist.

5. Lageranordnung (1, 1a..1c) nach einem der Ansprüche 1 bis 3, **dadurch gekennzeichnet, dass** die Auslager-Fördertechnik (19) eine erste Auslager-Fördervorrichtung (20a) und eine zweite Auslager-Fördervorrichtung (20b) umfasst, welche in übereinander liegenden Förderebenen (F1, F2) angeordnet sind, wobei
- die erste Auslager-Fördervorrichtung (20a) einer ersten Auslager-Transportplattform (18a) der Auslager-Transportplattformen (18a, 18b) zugeordnet und zur Auslagerung eines Ladeguts (5) von der ersten Auslager-Transportplattform (18a) anfahrbar ist, und wobei
- die zweite Auslager-Fördervorrichtung (20b) einer zweiten Auslager-Transportplattform (18b) der Auslager-Transportplattformen (18a, 18b) zugeordnet und zur Auslagerung eines Ladeguts (5) von der zweiten Auslager-Transportplattform (18b) anfahrbar ist.

6. Lageranordnung (1, 1a..1c) nach einem der Ansprüche 1 bis 3, **dadurch gekennzeichnet, dass** die Auslager-Fördertechnik (19) eine erste Auslager-Fördervorrichtung (20a) und eine zweite Auslager-Fördervorrichtung (20b) umfasst, welche in übereinander liegenden Förderebenen (F1, F2) angeordnet sind, wobei
- die erste Auslager-Fördervorrichtung (20a) wahlweise einer ersten Auslager-Transportplattform (18a) der Auslager-Transportplattformen (18a, 18b) oder einer zweiten Auslager-Transportplattform (18b) der Auslager-Transportplattformen (18a, 18b) zuordenbar und zum Auslagern eines Ladeguts (5) von der ersten oder zweiten Auslager-Transportplattform (18a, 18b) anfahrbar ist, und wobei
- die zweite Auslager-Fördervorrichtung (20b) wahlweise der ersten Auslager-Transportplattform (18a) der Auslager-Transportplattformen (18a, 18b) oder der zweiten Auslager-Transportplattform (18b) der Auslager-Transportplattformen (18a, 18b) zuordenbar und zum Auslagern eines Ladeguts (5) von der ersten oder zweiten Auslager-Transportplattform (18a, 18b) anfahrbar ist.

7. Lageranordnung (1, 1a..1c) nach Anspruch 5 oder 6, **dadurch gekennzeichnet, dass** die erste Auslager-Fördervorrichtung (20a) und die zweite Auslager-Fördervorrichtung (20b) fördertechnisch miteinander verbunden sind.

8. Lageranordnung nach Anspruch 7, **dadurch gekennzeichnet, dass** die fördertechnische Verbindung (32a..32d, 33a..33d) zwischen der ersten Auslager-Fördervorrichtung (20a) und zweiten Auslager-Fördervorrichtung (20b) eine Zusammenführung der ersten Auslager-Fördervorrichtung (20a) und der zweiten Auslager-Fördervorrichtung (20b) umfasst.

9. Lageranordnung (1, 1a..1c) nach Anspruch 7, **dadurch gekennzeichnet, dass** die fördertechnische Verbindung (32a..32d, 33a..33d) die erste Auslager-Fördervorrichtung (20a) und die zweite Auslager-Fördervorrichtung (20b) wechselseitig miteinander verbindet.

10. Lageranordnung (1, 1a..1c) nach einem der Ansprüche 1 bis 9, **dadurch gekennzeichnet, dass** die Einlager-Fördertechnik (15) eine erste Einlager-Fördervorrichtung (16a) umfasst, welche einer ersten Einlager-Transportplattform (14a) der Einlager-Transportplattformen (14a, 14b) und einer zweiten Einlager-Transportplattform (14b) der Einlager-Transportplattformen (14a, 14b) zugeordnet und zur Einlagerung eines Ladeguts (5) von der ersten Einlager-Transportplattform (14a) und von der zweiten Einlager-Transportplattform (14b) anfahrbar ist.

11. Lageranordnung (1, 1a..1c) nach einem der Ansprüche 1 bis 9, **dadurch gekennzeichnet, dass** die Einlager-Fördertechnik (15) eine erste Einlager-Fördervorrichtung (16a) und eine zweite Einlager-Fördervorrichtung (16b) umfasst, welche in übereinander liegenden Förderebenen (F1, F2) angeordnet sind, wobei
- die erste Einlager-Fördervorrichtung (16a) einer ersten Einlager-Transportplattform (14a) der Einlager-Transportplattformen (14a, 14b) zugeordnet und zur Einlagerung eines Ladeguts (5) von der ersten Einlager-Transportplattform (14a) anfahrbar ist, und wobei
- die zweite Einlager-Fördervorrichtung (16b) einer zweiten Einlager-Transportplattform (14b) der Einlager-Transportplattformen (14a, 14b) zugeordnet und zur Einlagerung eines Ladeguts (5) von der zweiten Einlager-Transportplattform (14b) anfahrbar ist.

12. Lageranordnung (1, 1a..1c) nach einem der Ansprüche 1 bis 9, **dadurch gekennzeichnet, dass** die Einlager-Fördertechnik (15) eine erste Einlager-Fördervorrichtung (16a) und eine zweite Einlager-Fördervorrichtung (16b) umfasst, welche in übereinander liegenden Förderebenen (F1, F2) angeordnet sind, wobei
- die erste Einlager-Fördervorrichtung (16a) wahlweise einer ersten Einlager-Transportplattform (14ab) der Einlager-Transportplattformen (14a, 14b) oder einer zweiten Einlager-Transportplattform (14b) der Einlager-Transportplattformen (14a, 14b) zuordenbar und zum Einlagern eines Ladeguts (5) von der ersten oder zweiten Einlager-Transportplattform (14a, 14b) anfahrbar ist, und wobei
- die zweite Einlager-Fördervorrichtung (16b) wahlweise der ersten Einlager-Transportplattform (14a) der Einlager-Transportplattformen (14a, 14b) oder der zweiten Einlager-Transportplattform (14b) der Einlager-Transportplattformen (14a, 14b) zuordenbar und zum Einlagern eines Ladeguts (5) von der ersten oder zweiten Einlager-Transportplattform (14a, 14b) anfahrbar ist.

13. Lageranordnung (1, 1a..1c) nach Anspruch 12, **dadurch gekennzeichnet, dass** das Steuersystem (21)
- für die Ansteuerung der ersten Einlager-Transportplattform (14a) und der zweiten Einlager-Transportplattform (14b) in einem ersten Betriebsmodus derart ausgebildet ist, dass die Einlager-Bewegungsbereiche (E1, E2) der ersten Einlager-Transportplattform (14a) und der zweiten Einlager-Transportplattform (14b) beim Einlagern von Ladegütern (5) einander vertikal überlappen, und
- für die Ansteuerung der ersten Auslager-Transportplattform (18a) und der zweiten Auslager-Transportplattform (18b) im ersten Betriebsmodus derart ausgebildet ist, dass die Auslager-Bewegungsbereiche (A1, A2) der ersten Auslager-Transportplattform (18a) und der zweiten Auslager-Transportplattform (18b) beim Auslagern von Ladegütern (5) stets vertikal voneinander getrennt sind.

14. Lageranordnung (1, 1a..1c) nach einem der Ansprüche 5 bis 12, **dadurch gekennzeichnet, dass** die erste Einlager-Fördervorrichtung (16a) und/oder die zweite Einlager-Fördervorrichtung (16b) und/oder die erste Auslager-Fördervorrichtung (20a) und/oder die zweite Auslager-Fördervorrichtung (20b) im mittleren Drittel der vertikalen Erstreckung (y) des ersten oder zweiten Lagerregals (3a, 3b) angeordnet sind/werden.

15. Kommissioniersystem (24a, 24b) mit einer Lageranordnung (1, 1a..1c) nach einem der Ansprüche 7 bis 14, **gekennzeichnet durch** eine erste Kommissionierstation (25a..25f) und eine zweite Kommissionierstation (25a..25f), welche durch die fördertechnische Verbindung (32a..32d, 33a..33d) zwischen der ersten Auslager-Fördervorrichtung (20a) und der zweiten Auslager-Fördervorrichtung (20b) jeweils sowohl mit der ersten Auslager-Fördervorrichtung (20a) als auch der zweiten Auslager-Fördervorrichtung (20b) fördertechnisch verbunden sind.

16. Verfahren zum Betrieb einer Lageranordnung (1, 1a..1c) umfassend
- eine Regalanordnung (2) mit einem ersten Lagerregal (3a) und einem zweiten Lagerregal (3b) jeweils mit Lagerplätzen (4) für Ladegüter (5), wobei die Lagerplätze (4) in übereinander liegenden Lagerebenen (L) angeordnet sind, und mit einer Regalgasse (6, 6a..6e) zwischen dem ersten Lagerregal (3a, 3b) und dem zweiten Lagerregal (3a, 3b),
- eine Einlager-Puffervorrichtung (7) mit Einlager-Bereitstellvorrichtungen (8), welche in übereinander liegenden Bereitstellebenen angeordnet und jeweils für das Zwischenpuffern eines Ladeguts (5) oder mehrerer Ladegüter (5) ausgebildet sind,
- eine Einlager-Vertikalfördervorrichtung (13, 13a.. 13c) mit mehreren unabhängig voneinander ansteuerbaren und jeweils in einem Einlager-Bewegungsbereich (E1, E2) relativ gegenüber den Bereitstellebenen verstellbaren Einlager-Transportplattformen (14a, 14b), mittels welcher Ladegüter (5) von einer Einlager-Fördertechnik (15) zu den Einlager-Bereitstellvorrichtungen (8) transportiert werden,
- eine Auslager-Puffervorrichtung (9) mit Auslager-Bereitstellvorrichtungen (10), welche in übereinander liegenden Bereitstellebenen angeordnet und jeweils für das Zwischenpuffern eines Ladeguts (5) oder mehrerer Ladegüter (5) ausgebildet sind,
- eine Auslager-Vertikalfördervorrichtung (17, 17a.. 17e) mit mehreren unabhängig voneinander ansteuerbaren und jeweils in einem Auslager-Bewegungsbereich (A1, A2) relativ gegenüber den Bereitstellebenen verstellbaren Auslager-Transportplattformen (18a, 18b), mittels welcher Ladegüter (5) von den Auslager-Bereitstellvorrichtungen (10) zu einer Auslager-Fördertechnik (19) transportiert werden,
- Regalbediengeräte (11), welche in der Regalgasse (6, 6a..6e) vor den Lagerplätzen (4), vor den Einlager-Bereitstellvorrichtungen (8) und vor den Auslager-Bereitstellvorrichtungen (10) jeweils auf einer horizontalen Fahrebene verfahrbar sind und welche jeweils eine Lastaufnahmevorrichtung zum Transport der Ladegüter (5) zwischen einem Lagerplatz (4), einer Einlager-Bereitstellvorrichtung (8) und einer Auslager-Bereitstellvorrichtung (10) aufweisen,
- eine an die Einlager-Vertikalfördervorrichtung (13, 13a.. 13c) fördertechnisch angeschlossene Einlager-Fördertechnik (15) zum Antransport von Ladegütern (5) zu der Einlager-Vertikalfördervorrichtung (13, 13a..13c),
- eine an die Auslager-Vertikalfördervorrichtung (17, 17a.. 17e) fördertechnisch angeschlossene Auslager-Fördertechnik (19) zum Abtransport von Ladegütern (5) von der Auslager-Vertikalfördervorrichtung (17, 17a.. 17e),
**dadurch gekennzeichnet, dass**
- ein Steuersystem (21) die Einlager-Transportplattformen (14a, 14b), die auf einem einzigen Einlager-Vertikalmast (22) bewegt werden, derart ansteuert, dass einzulagernde Ladegüter (5) von der Einlager-Fördertechnik (15) übernommen und auf die Einlager-Puffervorrichtung (7) abgegeben werden, und
- das Steuersystem (21) die Auslager-Transportplattformen (18a, 18b), die auf einem einzigen Auslager-Vertikalmast (23) bewegt werden, derart ansteuert, dass auszulagernde Ladegüter (5) von der Auslager-Puffervorrichtung (9) übernommen und auf die Auslager-Fördertechnik (19) abgegeben werden.

17. Verfahren nach Anspruch 16, **dadurch gekennzeichnet, dass** die Einlager-Fördertechnik (15) eine erste Einlager-Fördervorrichtung (16a) und eine zweite Einlager-Fördervorrichtung (16b) umfasst, welche in übereinander liegenden Förderebenen (F1, F2) angeordnet sind, wobei die Ladegüter (5) über eine erste Einlager-Transportplattform (14a) der Einlager-Transportplattformen (14a, 14b) oder eine zweite Einlager-Transportplattform (14b) der Einlager-Transportplattformen (14a, 14b) von der ersten Einlager-Fördervorrichtung (16a) zu den Einlager-Bereitstellvorrichtungen (8) oder von der zweiten Einlager-Fördervorrichtung (16b) zu den Einlager-Bereitstellvorrichtungen (8) transportiert werden.

18. Verfahren nach Anspruch 17, **dadurch gekennzeichnet, dass**
- die erste Einlager-Fördervorrichtung (16a) wahlweise der ersten Einlager-Transportplattform (14ab) der Einlager-Transportplattformen (14a, 14b) oder der zweiten Einlager-Transportplattform (14b) der Einlager-Transportplattformen (14a, 14b) zuordenbar ist und zum Einlagern eines Ladeguts (5) von der ersten Einlager-Transportplattform (14a) oder der zweiten Einlager-Transportplattform (14b) anfahrbar ist, und wobei
- die zweite Einlager-Fördervorrichtung (16b) wahlweise der ersten Einlager-Transportplattform (14a) der Einlager-Transportplattformen (14a, 14b) oder der zweiten Einlager-Transportplattform (14b) der Einlager-Transportplattformen (14a, 14b) zuordenbar ist und zum Einlagern eines Ladeguts (5) von der ersten Einlager-Transportplattform (14a) oder der zweiten Einlager-Transportplattform (14b) anfahrbar ist.

19. Verfahren nach einem der Ansprüche 16 bis 18, **dadurch gekennzeichnet, dass** die Auslager-Fördertechnik (19) eine erste Auslager-Fördervorrichtung (20a) und eine zweite Auslager-Fördervorrichtung (20b) umfasst, welche in übereinander liegenden Förderebenen (F1, F2) angeordnet sind, wobei die Ladegüter (5) über eine erste Auslager-Transportplattform (18a) der Auslager-Transportplattformen (18a, 18b) oder eine zweite Auslager-Transportplattform (18b) der Auslager-Transportplattformen (18a, 18b) von den Auslager-Bereitstellvorrichtungen (10) zu der ersten Auslager-Fördervorrichtung (20a) oder von den Auslager-Bereitstellvorrichtungen (10) zu der zweiten Auslager-Fördervorrichtung (20b) transportiert werden.

20. Verfahren nach Anspruch 19, **dadurch gekennzeichnet, dass**
- die erste Auslager-Fördervorrichtung (20a) einer ersten Auslager-Transportplattform (18a) der Auslager-Transportplattformen (18a, 18b) zugeordnet und zum Abtransport eines Ladeguts (5) von der ersten Auslager-Transportplattform (18a) anfahrbar ist, und wobei
- die zweite Auslager-Fördervorrichtung (20b) einer zweiten Auslager-Transportplattform (18b) der Auslager-Transportplattformen (18a, 18b) zugeordnet und zum Abtransport eines Ladeguts (5) von der zweiten Auslager-Transportplattform (18b) anfahrbar ist.

21. Verfahren nach einem der Ansprüche 16 bis 20, **dadurch gekennzeichnet, dass** einzulagernde Ladegüter (5) von der Einlager-Fördertechnik (15) antransportiert und von dieser ausschließlich an die Einlager-Vertikalfördervorrichtung (13, 13a.. 13c) abgegeben werden und auszulagernde Ladegüter (5) ausschließlich von der Auslager-Vertikalfördervorrichtung (17, 17a..17e) auf die Auslager-Fördertechnik (19) abgegeben und von dieser abtransportiert werden.

22. Verfahren nach einem der Ansprüche 16 bis 21, **dadurch gekennzeichnet, dass**
- das Steuersystem (21) eine erste Einlager-Transportplattform (14a) und eine zweite Einlager-Transportplattform (14b) der Einlager-Transportplattformen (14a, 14b) in einem ersten Betriebsmodus derart ansteuert, dass die Einlager-Bewegungsbereiche (E1, E2) der ersten Einlager-Transportplattform (14a) und der zweiten Einlager-Transportplattform (14b) beim Einlagern von Ladegütern (5) einander vertikal überlappen, und
- das Steuersystem (21) eine erste Auslager-Transportplattform (18a) und eine zweite Auslager-Transportplattform (18b) der Auslager-Transportplattformen (18a, 18b) im ersten Betriebsmodus derart ansteuert, dass die Auslager-Bewegungsbereiche (A1, A2) der ersten Auslager-Transportplattform (18a) und der zweiten Auslager-Transportplattform (18b) beim Auslagern von Ladegütern (5) stets vertikal voneinander getrennt sind.

23. Verfahren nach Anspruch 22, **dadurch gekennzeichnet, dass**
- von einer Auswerteeinheit ein erster Lagerkennwert für einen ersten Lagerbereich (B1) der Regalanordnung (2) und ein zweiter Lagerkennwert für einen zweiten Lagerbereich (B2) der Regalanordnung (2) ermittelt und miteinander verglichen werden, wobei der erste Lagerkennwert durch das Verhältnis zwischen vorhandenen Lagerplätzen (4) und belegten Lagerplätzen (4) im ersten Lagerbereich (B1) definiert ist und der zweite Lagerkennwert durch das Verhältnis zwischen vorhandenen Lagerplätzen (4) und belegten Lagerplätzen (4) im zweiten Lagerbereich (B2) definiert ist, und wobei sich der erste Lagerbereich (B1) vertikal anders erstreckt als der zweite Lagerbereich (B2),
- das Steuersystem (21) die erste Einlager-Transportplattform (14a) und die zweite Einlager-Transportplattform (14b) im ersten Betriebsmodus betreibt, wenn ein Unterschied zwischen dem ersten Lagerkennwert und dem zweiten Lagerkennwert über einem ersten Schwellwert liegt,
- das Steuersystem (21) die erste Einlager-Transportplattform (14a) und die zweite Einlager-Transportplattform (14b) in einem zweiten Betriebsmodus betreibt, wenn ein Unterschied zwischen dem ersten Lagerkennwert und dem zweiten Lagerkennwert unter dem ersten Schwellwert liegt oder unter einem zweiten Schwellwert, der unter dem ersten Schwellwert liegt, wobei die Einlager-Bewegungsbereiche (E1, E2) der ersten Einlager-Transportplattform (14a) und der zweiten Einlager-Transportplattform (14b) beim Einlagern von Ladegütern (5) im zweiten Betriebsmodus vertikal voneinander getrennt sind, und
- die Auslager-Bewegungsbereiche (A1, A2) der ersten Auslager-Transportplattform (18a) und der zweiten Auslager-Transportplattform (18b) beim Auslagern im zweiten Betriebsmodus und unabhängig von einem Lagerkennwert stets vertikal voneinander getrennt sind.

24. Verfahren nach Anspruch 23, **dadurch gekennzeichnet, dass** das Steuersystem (21) die erste Auslager-Transportplattform (18a) und die zweite Auslager-Transportplattform (18b) im ersten Betriebsmodus oder im zweiten Betriebsmodus betreibt, wenn eine Betriebsfähigkeit der ersten Auslager-Transportplattform (18a) und der zweiten Auslager-Transportplattform (18b) und der ersten Auslager-Fördervorrichtung (20a) und der zweiten Auslager-Fördervorrichtung (20b) durch eine Diagnoseeinheit festgestellt wird.

25. Verfahren nach einem der Ansprüche 22 bis 24, **dadurch gekennzeichnet, dass** das Steuersystem (21) die erste Auslager-Transportplattform (18a) und die zweite Auslager-Transportplattform (18b) in einem dritten Betriebsmodus oder in einem vierten Betriebsmodus betreibt, wenn eine Beeinträchtigung der Betriebsfähigkeit der ersten Auslager-Transportplattform (18a) oder der zweiten Auslager-Transportplattform (18b) oder der ersten Auslager-Fördervorrichtung (20a) oder der zweiten Auslager-Fördervorrichtung (20b) durch eine Diagnoseeinheit festgestellt wird, wobei
- die Auslager-Bewegungsbereiche (A1, A2) der ersten Auslager-Transportplattform (18a) und der zweiten Auslager-Transportplattform (18b) beim Auslagern von Ladegütern (5) einander sowohl im dritten Betriebsmodus als auch im vierten Betriebsmodus vertikal überlappen,
- die Einlager-Bewegungsbereiche (E1, E2) der ersten Einlager-Transportplattform (14a) und der zweiten Einlager-Transportplattform (14b) beim Einlagern von Ladegütern (5) einander im dritten Betriebsmodus vertikal überlappen und
- die Einlager-Bewegungsbereiche (E1, E2) der ersten Einlager-Transportplattform (14a) und der zweiten Einlager-Transportplattform (14b) beim Einlagern von Ladegütern (5) im vierten Betriebsmodus vertikal voneinander getrennt sind.

26. Verfahren nach Anspruch 25, **dadurch gekennzeichnet, dass**
- von einer Auswerteeinheit ein erster Lagerkennwert für einen ersten Lagerbereich (B1) der Regalanordnung (2) und ein zweiter Lagerkennwert für einen zweiten Lagerbereich (B2) der Regalanordnung (2) ermittelt und miteinander verglichen werden, wobei der erste Lagerkennwert durch das Verhältnis zwischen vorhandenen Lagerplätzen (4) und belegten Lagerplätzen (4) im ersten Lagerbereich (B1) definiert ist und der der zweite Lagerkennwert durch das Verhältnis zwischen vorhandenen Lagerplätzen (4) und belegten Lagerplätzen (4) im zweiten Lagerbereich (B2) definiert ist, und wobei sich der erste Lagerbereich (B1) vertikal anders erstreckt als der zweite Lagerbereich (B2),
- das Steuersystem (21) die erste Einlager-Transportplattform (14a) und zweite Einlager-Transportplattform (14b) im dritten Betriebsmodus betreibt, wenn ein Unterschied zwischen dem ersten Lagerkennwert und dem zweiten Lagerkennwert über einem ersten Schwellwert liegt,
- das Steuersystem (21) die erste Einlager-Transportplattform (14a) und zweite Einlager-Transportplattform (14b) in einem vierten Betriebsmodus betreibt, wenn ein Unterschied zwischen dem ersten Lagerkennwert und dem zweiten Lagerkennwert unter dem ersten Schwellwert liegt oder unter einem zweiten Schwellwert, der unter dem ersten Schwellwert liegt.

27. Verfahren nach einem der Ansprüche 16 bis 26, **dadurch gekennzeichnet, dass** der erste Einlager-Bewegungsbereich (E1) der ersten Einlager-Transportplattform (14a) den Lagerebenen (L) des ersten Lagerbereichs (B1) und der zweite Einlager-Bewegungsbereich (E2) der zweiten Einlager-Transportplattform (14b) den Lagerebenen (L) des zweiten Lagerbereichs (B2) zugeordnet wird.

28. Verfahren nach einem der Ansprüche 16 bis 27, **dadurch gekennzeichnet, dass**
- von einer Auswerteeinheit ein erster Lagerkennwert für einen ersten Lagerbereich (B1) der Regalanordnung (2) und ein zweiter Lagerkennwert für einen zweiten Lagerbereich (B2) der Regalanordnung (2) ermittelt und miteinander verglichen werden, wobei der erste Lagerkennwert durch das Verhältnis zwischen vorhandenen Lagerplätzen (4) und belegten Lagerplätzen (4) im ersten Lagerbereich (B1) definiert ist und der zweite Lagerkennwert durch das Verhältnis zwischen vorhandenen Lagerplätzen (4) und belegten Lagerplätzen (4) im zweiten Lagerbereich (B2) definiert ist, und wobei sich der erste Lagerbereich (B1) vertikal anders erstreckt als der zweite Lagerbereich (B2), und
- die Ladegüter (5) im Hinblick auf eine gegenseitige Anpassung von Lagerkennwerten im ersten Lagerbereich (B1) und zweiten Lagerbereich (B2) in die Regalanordnung (2) eingelagert werden.

29. Verfahren nach einem der Ansprüche 16 bis 28, **dadurch gekennzeichnet, dass** die Ladegüter (5) innerhalb des ersten Lagerbereichs (B 1) und/oder innerhalb des zweiten Lagerbereichs (B2) chaotisch in die Regalanordnung (2) eingelagert werden.

30. Verfahren nach einem der Ansprüche 16 bis 29, **dadurch gekennzeichnet, dass** die in die Regalanordnung (2) einzulagernden Ladegüter (5) chaotisch und/oder gleichmäßig auf eine erste Einlager-Fördervorrichtung (16a) und eine zweite Einlager-Fördervorrichtung (16b) der Einlager-Fördertechnik (15) aufgeteilt werden.

31. Verfahren nach einem der Ansprüche 16 bis 30, **dadurch gekennzeichnet, dass** einige der Ladegüter (5) beim Abtransport von einer ersten Auslager-Fördervorrichtung (20a) der Auslager-Fördertechnik (19) auf eine zweite Auslager-Fördervorrichtung (20b) der Auslager-Fördertechnik (19) und einige der Ladegüter (5) beim Abtransport von der zweiten Auslager-Fördervorrichtung (20b) auf die erste Auslager-Fördervorrichtung (20a) übergeben werden.

## Claims

1. A storage arrangement (1, 1a..1c), comprising
- a rack arrangement (2) having a first storage rack (3a) and a second storage rack (3b), each having storage places (4) for loads (5), wherein the storage places (4) are arranged in storage planes (L) located one above the other, and having a rack aisle (6, 6a..6e) between the first storage rack (3a) and the second storage rack (3b),
- a storage buffer device (7) having storage provisioning devices (8) arranged in provisioning planes located one above the other and each configured for interim buffering of a load (5) or multiple loads (5),
- a retrieval buffer device (9) having retrieval provisioning devices (10) arranged in provisioning planes located one above the other and each configured for interim buffering of a load (5) or multiple loads (5),
- storage and retrieval devices (11), which are each movable on a horizontal travel plane in the rack aisle (6, 6a..6e) in front of the storage places (4), in front of the storage provisioning devices (8) and in front of the retrieval provisioning devices (10), and each have a load receiving device and are configured for transporting the loads (5) from the storage provisioning devices (8) to the storage places (4) and for transporting the loads (5) from the storage places (4) to the retrieval provisioning devices (10),
**characterized in that**
- a storage vertical conveying device (13, 13a..13c) associated with the rack aisle (6, 6a..6e) and having multiple storage transport platforms (14a, 14b), which are controllable independently of one another and each movable in a storage movement area (E1, E2) relative to the provisioning planes and movable on one single storage vertical mast (22), and a storage conveying system (15) associated with the rack aisle (6, 6a..6e) and connected in terms of conveyance to the storage vertical conveying device (13, 13a..13c) for transporting loads (5) to the storage vertical conveying device (13, 13a..13c), wherein the loads (5) are transportable by means of the storage transport platforms (14a, 14b) from the storage conveying system (15) to the storage provisioning devices (8),
- a retrieval vertical conveying device (17, 17a.. 17e) associated with the rack aisle (6, 6a..6e) and having multiple retrieval transport platforms (18a, 18b), which are controllable independently of one another and each movable in a retrieval movement area (A1, A2) relative to the provisioning planes and movable on one single retrieval vertical mast (23), and a retrieval conveying system (19) associated with the rack aisle (6, 6a..6e) and connected in terms of conveyance to the retrieval vertical conveying device (17, 17a..17e) for transporting loads (5) away from the retrieval vertical conveying device (17, 17a..17e), wherein the loads (5) are transportable by means of the retrieval transport platforms (18a, 18b) from the retrieval provisioning devices (10) to the retrieval conveying system (19), and
- a control system (21) configured for controlling the storage transport platforms (14a, 14b) and the retrieval transport platforms (18a, 18b) independently of one another.

2. The storage arrangement (1, 1a..1c) according to claim 1, **characterized in that** only the storage conveying system (15) is connected to the storage vertical conveying device (13, 13a..13c) on the input side, and only the retrieval conveying system (19) is connected to the retrieval vertical conveying device (17, 17a..17e) on the output side.

3. The storage arrangement (1, 1a..1c) according to claim 1 or 2, **characterized in that** the storage vertical conveying device (13, 13a..13c) is structurally separate from the retrieval vertical conveying device (17, 17a..17e).

4. The storage arrangement (1, 1a..1c) according to one of claims 1 to 3, **characterized in that** the retrieval conveying system (19) comprises a first retrieval conveying device (20a), which is associated with a first retrieval transport platform (18a) of the retrieval transport platforms (18a, 18b) and with a second retrieval transport platform (18b) of the retrieval transport platforms (18a, 18b) and accessible by the first retrieval transport platform (18a) and by the second retrieval transport platform (18b) for retrieving a load (5).

5. The storage arrangement (1, 1a..1c) according to one of claims 1 to 3, **characterized in that** the retrieval conveying system (19) comprises a first retrieval conveying device (20a) and a second retrieval conveying device (20b), which are arranged in conveyor planes (F1, F2) located one above the other, wherein
- the first retrieval conveying device (20a) is associated with a first retrieval transport platform (18a) of the retrieval transport platforms (18a, 18b) and accessible by the first retrieval transport platform (18a) for retrieving a load (5), and wherein
- the second retrieval conveying device (20b) is associated with a second retrieval transport platform (18b) of the retrieval transport platforms (18a, 18b) and accessible by the second retrieval transport platform (18b) for retrieving a load (5).

6. The storage arrangement (1, 1a..1c) according to one of claims 1 to 3, **characterized in that** the retrieval conveying system (19) comprises a first retrieval conveying device (20a) and a second retrieval conveying device (20b), which are arranged in conveyor planes (F1, F2) located one above the other, wherein
- the first retrieval conveying device (20a) may either be associated with a first retrieval transport platform (18a) of the retrieval transport platforms (18a, 18b) or with a second retrieval transport platform (18b) of the retrieval transport platforms (18a, 18b) and is accessible by the first or the second retrieval transport platform (18a, 18b) for retrieving a load (5), and wherein
- the second retrieval conveying device (20b) may either be associated with the first retrieval transport platform (18a) of the retrieval transport platforms (18a, 18b) or with the second retrieval transport platform (18b) of the retrieval transport platforms (18a, 18b) and is accessible by the first or the second retrieval transport platform (18a, 18b) for retrieving a load (5).

7. The storage arrangement (1, 1a..1c) according to claim 5 or 6, **characterized in that** the first retrieval conveying device (20a) and the second retrieval conveying device (20b) are connected in terms of conveyance to each other.

8. The storage arrangement according to claim 7, **characterized in that** the conveyor connection (32a..32d, 33a..33d) between the first retrieval conveying device (20a) and the second retrieval conveying device (20b) comprises a joining of the first retrieval conveying device (20a) and the second retrieval conveying device (20b).

9. The storage arrangement (1, 1a..1c) according to claim 7, **characterized in that** the conveyor connection (32a..32d, 33a..33d) mutually connects the first retrieval conveying device (20a) and the second retrieval conveying device (20b).

10. The storage arrangement (1, 1a..1c) according to one of claims 1 to 9, **characterized in that** the storage conveying system (15) comprises a first storage conveying device (16a), which is associated with a first storage transport platform (14a) of the storage transport plat-forms (14a, 14b) and with a second storage transport platform (14b) of the storage transport platforms (14a, 14b) and accessible by the first storage transport platform (14a) and by the second storage transport platform (14b) for storing a load (5).

11. The storage arrangement (1, 1a..1c) according to one of claims 1 to 9, **characterized in that** the storage conveying system (15) comprises a first storage conveying device (16a) and a second storage conveying device (16b), which are arranged in conveyor planes (F1, F2) located one above the other, wherein
- the first storage conveying device (16a) is associated with a first storage transport platform (14a) of the storage transport platforms (14a, 14b) and accessible by the first storage transport platform (14a) for storing a load (5), and wherein
- the second storage conveying device (16b) is associated with a second storage transport platform (14b) of the storage transport platforms (14a, 14b) and accessible by the second storage transport platform (14b) for storing a load (5).

12. The storage arrangement (1, 1a..1c) according to one of claims 1 to 9, **characterized in that** the storage conveying system (15) comprises a first storage conveying device (16a) and a second storage conveying device (16b), which are arranged in conveyor planes (F1, F2) located one above the other, wherein
- the first storage conveying device (16a) may either be associated with a first storage transport platform (14a) of the storage transport platforms (14a, 14b) or with a second storage transport platform (14b) of the storage transport platforms (14a, 14b) and is accessible by the first or the second storage transport platform (14a, 14b) for storing a load (5), and wherein
- the second storage conveying device (16b) may either be associated with the first storage transport platform (14a) of the storage transport platforms (14a, 14b) or with the second storage transport platform (14b) of the storage transport platforms (14a, 14b) and is accessible by the first or the second storage transport platform (14a, 14b) for storing a load (5).

13. The storage arrangement (1, 1a..1c) according to claim 12, **characterized in that** the control system (21),
- for controlling the first storage transport platform (14a) and the second storage transport platform (14b) in a first operating mode, is configured such that the storage movement areas (E1, E2) of the first storage transport platform (14a) and the second storage transport platform (14b) vertically overlap during storage of loads (5), and
- for controlling the first retrieval transport platform (18a) and the second retrieval transport platform (18b) in the first operating mode, is configured such that the retrieval movement areas (A1, A2) of the first retrieval transport platform (18a) and the second retrieval transport platform (18b) are always vertically separate from one another during retrieval of loads (5).

14. The storage arrangement (1, 1a..1c) according to one of claims 5 to 12, **characterized in that** the first storage conveying device (16a) and/or the second storage conveying device (16b) and/or the first retrieval conveying device (20a) and/or the second retrieval conveying device (20b) are arranged in the middle third of the vertical extension (y) of the first or the second storage rack (3a, 3b).

15. An order-picking system (24a, 24b) with a storage arrangement (1, 1a..1c) according to one of claims 7 to 14, **characterized by** a first order-picking station (25a..25f) and a second order-picking station (25a..25f), which are each connected in terms of conveyance both to the first retrieval conveying device (20a) and to the second retrieval conveying device (20b) via the conveyor connection (32a..32d, 33a..33d) between the first retrieval conveying device (20a) and the second retrieval conveying device (20b).

16. A method for operating a storage arrangement (1, 1a..1c) comprising
- a rack arrangement (2) having a first storage rack (3a) and a second storage rack (3b), each having storage places (4) for loads (5), wherein the storage places (4) are arranged in storage planes (L) located one above the other, and having a rack aisle (6, 6a..6e) between the first storage rack (3a, 3b) and the second storage rack (3a, 3b),
- a storage buffer device (7) having storage provisioning devices (8) arranged in provisioning planes located one above the other and each configured for interim buffering of a load (5) or multiple loads (5),
- a storage vertical conveying device (13, 13a..13c) having multiple storage transport platforms (14a, 14b), which are controllable independently of one another and each movable in a storage movement area (E1, E2) relative to the provisioning planes and by means of which loads (5) are transported from a storage conveying system (15) to the storage provisioning devices (8),
- a retrieval buffer device (9) having retrieval provisioning devices (10) arranged in provisioning planes located one above the other and each configured for interim buffering of a load (5) or multiple loads (5),
- a retrieval vertical conveying device (17, 17a..17e) having multiple retrieval transport platforms (18a, 18b), which are controllable independently of one another and each movable in a retrieval movement area (A1, A2) relative to the provisioning planes and by means of which loads (5) are transported from the retrieval provisioning devices (10) to a retrieval conveying system (19),
- storage and retrieval devices (11), which are each movable on a horizontal travel plane in the rack aisle (6, 6a..6e) in front of the storage places (4), in front of the storage provisioning devices (8) and in front of the retrieval provisioning devices (10) and which each have a load receiving device for transporting the loads (5) between a storage place (4), a storage provisioning device (8) and a retrieval provisioning device (10),
- a storage conveying system (15), which is connected in terms of conveyance to the storage vertical conveying device (13, 13a..13c), for transporting loads (5) to the storage vertical conveying device (13, 13a..13c),
- a retrieval conveying system (19), which is connected in terms of conveyance to the retrieval vertical conveying device (17, 17a..17e), for transporting loads (5) away from the retrieval vertical conveying device (17, 17a..17e),
**characterized in that**
- a control system (21) controls the storage transport platforms (14a, 14b), which are moved on one single storage vertical mast (22), such that loads (5) to be stored are taken over from the storage conveying system (15) and handed over onto the storage buffer device (7), and
- the control system (21) controls the retrieval transport platforms (18a, 18b), which are moved on one single retrieval vertical mast (23), such that loads (5) to be retrieved are taken over from the retrieval buffer device (9) and handed over onto the retrieval conveying system (19).

17. The method according to claim 16, **characterized in that** the storage conveying system (15) comprises a first storage conveying device (16a) and a second storage conveying device (16b), which are arranged in conveyor planes (F1, F2) located one above the other, wherein the loads (5) are transported via a first storage transport platform (14a) of the storage transport platforms (14a, 14b) or a second storage transport platform (14b) of the storage transport platforms (14a, 14b) from the first storage conveying device (16a) to the storage provisioning devices (8) or from the second storage conveying device (16b) to the storage provisioning devices (8).

18. The method according to claim 17, **characterized in that**
- the first storage conveying device (16a) may either be associated with the first storage transport platform (14a) of the storage transport platforms (14a, 14b) or with the second storage transport platform (14b) of the storage transport platforms (14a, 14b) and is accessible by the first storage transport platform (14a) or by the second storage transport platform (14b) for storing a load (5), and wherein
- the second storage conveying device (16b) may either be associated with the first storage transport platform (14a) of the storage transport platforms (14a, 14b) or with the second storage transport platform (14b) of the storage transport platforms (14a, 14b) and is accessible by the first storage transport platform (14a) or by the second storage transport platform (14b) for storing a load (5).

19. The method according to one of claims 16 to 18, **characterized in that** the retrieval conveying system (19) comprises a first retrieval conveying device (20a) and a second retrieval conveying device (20b), which are arranged in conveyor planes (F1, F2) located one above the other, wherein the loads (5) are transported via a first retrieval transport platform (18a) of the retrieval transport platforms (18a, 18b) or a second retrieval transport platform (18b) of the retrieval transport platforms (18a, 18b) from the retrieval provisioning devices (10) to the first retrieval conveying device (20a) or from the retrieval provisioning devices (10) to the second retrieval conveying device (20b).

20. The method according to claim 19, **characterized in that**
- the first retrieval conveying device (20a) is associated with a first retrieval transport platform (18a) of the retrieval transport platforms (18a, 18b) and accessible by the first retrieval transport platform (18a) for transporting away a load (5), and wherein
- the second retrieval conveying device (20b) is associated with a second retrieval transport platform (18b) of the retrieval transport platforms (18a, 18b) and accessible by the second retrieval transport platform (18b) for transporting away a load (5).

21. The method according to one of claims 16 to 20, **characterized in that** loads (5) to be stored are delivered by the storage conveying system (15) and handed over by it to the storage vertical conveying device (13, 13a..13c) only, and loads (5) to be retrieved are handed over onto the retrieval conveying system (19) by the retrieval vertical conveying device (17, 17a.. 17e) only and transported away by the retrieval conveying system (19).

22. The method according to one of claims 16 to 21, **characterized in that**
- the control system (21) controls a first storage transport platform (14a) and a second storage transport platform (14b) of the storage transport platforms (14a, 14b) in a first operating mode such that the storage movement areas (E1, E2) of the first storage transport platform (14a) and the second storage transport platform (14b) vertically overlap during storage of loads (5), and
- the control system (21) controls a first retrieval transport platform (18a) and a second retrieval transport platform (18b) of the retrieval transport platforms (18a, 18b) in the first operating mode such that the retrieval movement areas (A1, A2) of the first retrieval transport platform (18a) and the second retrieval transport platform (18b) are always vertically separate from one another during retrieval of loads (5).

23. The method according to claim 22, **characterized in that**
- an evaluation unit determines and compares a first storage parameter for a first storage zone (B 1) of the rack arrangement (2) and a second storage parameter for a second storage zone (B2) of the rack arrangement (2), wherein the first storage parameter is defined by the ratio between available storage places (4) and occupied storage places (4) in the first storage zone (B1), and the second storage parameter is defined by the ratio between available storage places (4) and occupied storage places (4) in the second storage zone (B2), and wherein the first storage zone (B 1) has a different vertical extension than the second storage zone (B2),
- the control system (21) operates the first storage transport platform (14a) and the second storage transport platform (14b) in the first operating mode if a difference between the first storage parameter and the second storage parameter lies above a first threshold,
- the control system (21) operates the first storage transport platform (14a) and the second storage transport platform (14b) in a second operating mode if a difference between the first storage parameter and the second storage parameter lies below the first threshold or below a second threshold, which lies below the first threshold, wherein the storage movement areas (E1, E2) of the first storage transport platform (14a) and the second storage transport platform (14b) are vertically separate from one another in the second operating mode during storage of loads (5), and
- the retrieval movement areas (A1, A2) of the first retrieval transport platform (18a) and the second retrieval transport platform (18b) are always vertically separate from one another during retrieval in the second operating mode and irrespectively of a storage parameter.

24. The method according to claim 23, **characterized in that** the control system (21) operates the first retrieval transport platform (18a) and the second retrieval transport platform (18b) in the first operating mode or in the second operating mode if operating ability of the first retrieval transport platform (18a) and the second retrieval transport platform (18b) and the first retrieval conveying device (20a) and the second retrieval conveying device (20b) is determined by a diagnostic unit.

25. The method according to one of claims 22 to 24, **characterized in that** the control system (21) operates the first retrieval transport platform (18a) and the second retrieval transport platform (18b) in a third operating mode or in a fourth operating mode if an impairment of the operating ability of the first retrieval transport platform (18a) or the second retrieval transport platform (18b) or the first retrieval conveying device (20a) or the second retrieval conveying device (20b) is determined by a diagnostic unit, wherein
- the retrieval movement areas (A1, A2) of the first retrieval transport platform (18a) and the second retrieval transport platform (18b) vertically overlap both in the third operating mode and in the fourth operating mode during retrieval of loads (5),
- the storage movement areas (E1, E2) of the first storage transport platform (14a) and the second storage transport platform (14b) vertically overlap in the third operating mode during storage of loads (5), and
- the storage movement areas (E1, E2) of the first storage transport platform (14a) and the second storage transport platform (14b) are vertically separate from one another in the fourth operating mode during storage of loads (5).

26. The method according to claim 25, **characterized in that**
- an evaluation unit determines and compares a first storage parameter for a first storage zone (B 1) of the rack arrangement (2) and a second storage parameter for a second storage zone (B2) of the rack arrangement (2), wherein the first storage parameter is defined by the ratio between available storage places (4) and occupied storage places (4) in the first storage zone (B1) and the second storage parameter is defined by the ratio between available storage places (4) and occupied storage places (4) in the second storage zone (B2) and wherein the first storage zone (B1) has a different vertical extension than the second storage zone (B2),
- the control system (21) operates the first storage transport platform (14a) and the second storage transport platform (14b) in the third operating mode if a difference between the first storage parameter and the second storage parameter lies above a first threshold,
- the control system (21) operates the first storage transport platform (14a) and the second storage transport platform (14b) in a fourth operating mode if a difference between the first storage parameter and the second storage parameter lies below the first threshold or below a second threshold, which lies below the first threshold.

27. The method according to one of claims 16 to 26, **characterized in that** the first storage movement area (E1) of the first storage transport platform (14a) is associated with the storage planes (L) of the first storage zone (B 1), and the second storage movement area (E2) of the second storage transport platform (14b) is associated with the storage planes (L) of the second storage zone (B2).

28. The method according to one of claims 16 to 27, **characterized in that**
- an evaluation unit determines and compares a first storage parameter for a first storage zone (B 1) of the rack arrangement (2) and a second storage parameter for a second storage zone (B2) of the rack arrangement (2), wherein the first storage parameter is defined by the ratio between available storage places (4) and occupied storage places (4) in the first storage zone (B1), and the second storage parameter is defined by the ratio between available storage places (4) and occupied storage places (4) in the second storage zone (B2), and wherein the first storage zone (B 1) has a different vertical extension than the second storage zone (B2), and
- the loads (5) are stored into the rack arrangement (2) in respect of mutually adapting storage parameters in the first storage zone (B 1) and in the second storage zone (B2).

29. The method according to one of claims 16 to 28, **characterized in that** the loads (5) are randomly stored into the rack arrangement (2) within the first storage zone (B 1) and/or within the second storage zone (B2).

30. The method according to one of claims 16 to 29, **characterized in that** the loads (5) to be stored into the rack arrangement (2) are randomly and/or evenly distributed to a first storage conveying device (16a) and a second storage conveying device (16b) of the storage conveying system (15).

31. The method according to one of claims 16 to 30, **characterized in that** some of the loads (5), while they are transported away, are transferred from a first retrieval conveying device (20a) of the retrieval conveying system (19) onto a second retrieval conveying device (20b) of the retrieval conveying system (19), and some of the loads (5), while they are transported away, are transferred from the second retrieval conveying device (20b) onto the first retrieval conveying device (20a).

## Revendications

1. Arrangement de stockage (1, 1a... 1c) comprenant
- un arrangement de rayonnages (2) avec un premier rayonnage de stockage (3a) et un deuxième rayonnage de stockage (3b) respectivement avec des emplacements de stockage (4) pour des articles (5), dans lequel les emplacements de stockage (4) sont disposés dans des niveaux de stockage superposés (L), et avec une allée de rayonnages (6, 6a... 6e) entre le premier rayonnage de stockage (3a) et le deuxième rayonnage de stockage (3b),
- un dispositif tampon de mise en stock (7) avec des dispositifs de mise à disposition de mise en stock (8), qui sont disposés à des niveaux de mise à disposition superposés et qui sont conçus chacun pour l'entreposage d'un article (5) ou de plusieurs articles (5),
- un dispositif tampon de sortie de stock (9) avec des dispositifs de mise à disposition de sortie de stock (10), qui sont disposés à des niveaux de mise à disposition superposés et qui sont conçus chacun pour l'entreposage d'un article (5) ou de plusieurs articles (5),
- des appareils de commande de rayonnages (11), qui peuvent être déplacés dans l'allée de rayonnages (6, 6a... 6e) devant les emplacements de stockage (4), devant les dispositifs de mise à disposition de mise en stock (8) et devant les dispositifs de mise à disposition de sortie de stock (10) chacun sur un plan de déplacement horizontal, qui présentent chacun un dispositif de levage et qui sont conçus pour le transport des articles (5) des dispositifs de mise à disposition de mise en stock (8) vers les emplacements de stockage (4) et pour le transport des articles (5) des emplacements de stockage (4) vers les dispositifs de mise à disposition de sortie de stock (10), **caractérisé par**
- un dispositif de convoyage vertical de mise en stock (13, 13a... 13c) correspondant à l'allée de rayonnages (6, 6a... 6e), avec plusieurs plateformes de transport de mise en stock (14a, 14b) contrôlables indépendamment entre elles et pouvant être déplacées chacune dans une zone de déplacement de mise en stock (E1, E2) par rapport aux niveaux de mise à disposition, qui sont mobiles sur un seul mât vertical de mise en stock (22), et un système de convoyage de mise en stock (15), correspondant à l'allée de rayonnages (6, 6a... 6e) et relié au dispositif de convoyage vertical de mise en stock (13, 13a... 13c), pour le transport des articles (5) vers le dispositif de convoyage vertical de mise en stock (13, 13a... 13c), dans lequel les articles (5) peuvent être transportés au moyen des plateformes de transport de mise en stock (14a, 14b) du système de convoyage de mise en stock (15) vers les dispositifs de mise à disposition de mise en stock (8),
- un dispositif de convoyage vertical de sortie de stock (17, 17a... 17e), correspondant à l'allée de rayonnages (6, 6a... 6e), avec plusieurs plateformes de transport de sortie de stock (18a, 18b) contrôlables indépendamment entre elles et pouvant être déplacées chacune dans une zone de déplacement de sortie de stock (A1, A2), qui sont mobiles sur un seul mât vertical de sortie de stock (23), et un système de convoyage de sortie de stock (19) correspondant à l'allée de rayonnages (6, 6a... 6e) et relié au dispositif de convoyage vertical de sortie de stock (17, 17a... 17e), pour le transport des articles (5) hors du dispositif de convoyage vertical de sortie de stock (17, 17a... 17e), dans lequel les articles (5) peuvent être transportés au moyen des plateformes de transport de sortie de stock (18a, 18b) des dispositifs de mise à disposition de sortie de stock (10) vers le système de convoyage de sortie de stock (19) et
- un système de commande (21) qui est conçu pour contrôler indépendamment entre elles les plateformes de transport de mise en stock (14a, 14b) et les plateformes de transport de sortie de stock (18a, 18b),

2. Arrangement de stockage (1, 1a... 1c) selon la revendication 1, **caractérisé en ce que**, au dispositif de convoyage vertical de mise en stock (13, 13a... 13c), côté entrée, est relié exclusivement le système de convoyage de mise en stock (15) et, dispositif de convoyage vertical de sortie de stock (17, 17a... 17e), côté sortie, est relié exclusivement le système de convoyage de sortie de stock (19).

3. Arrangement de stockage (1, 1a... 1c) selon la revendication 1 ou 2, **caractérisé en ce que** le dispositif de convoyage vertical de mise en stock (13, 13a... 13c) est séparé physiquement du dispositif de convoyage vertical de sortie de stock (17, 17a... 17e).

4. Arrangement de stockage (1, 1a... 1c) selon l'une des revendications 1 à 3, **caractérisé en ce que** le système de convoyage de sortie de stock (19) comprend un premier dispositif de convoyage de sortie de stock (20a), qui correspond à une première plateforme de transport de sortie de stock (18a) des plateformes de transport de sortie de stock (18a, 18b) et à une deuxième plateforme de transport de sortie de stock (18b) des plateformes de transport de sortie de stock (18a, 18b), et qui peut être déplacée, pour la sortie de stock d'un article (5), par la première plateforme de transport de sortie de stock (18a) et par la deuxième plateforme de transport de sortie de stock (18b).

5. Arrangement de stockage (1, 1a... 1c) selon l'une des revendications 1 à 3, **caractérisé en ce que** le système de convoyage de sortie de stock (19) comprend un premier dispositif de convoyage de sortie de stock (20a) et un deuxième dispositif de convoyage de sortie de stock (20b) qui sont disposés dans les niveaux de convoyage superposés (F1, F2), dans lequel
- le premier dispositif de convoyage de sortie de stock (20a) correspond à une première plateforme de transport de sortie de stock (18a) des plateformes de transport de sortie de stock (18a, 18b) et peut être déplacé, pour la sortie de stock d'un article (5), par la première plateforme de transport de sortie de stock (18a) et dans lequel
- le deuxième dispositif de convoyage de sortie de stock (20b) correspond à une deuxième plateforme de transport de sortie de stock (18b) des plateformes de transport de sortie de stock (18a, 18b) et peut être déplacé, pour la sortie de stock d'un article (5), par la deuxième plateforme de transport de sortie de stock (18b).

6. Arrangement de stockage (1, 1a... 1c) selon l'une des revendications 1 à 3, **caractérisé en ce que** le système de convoyage de sortie de stock (19) comprend un premier dispositif de convoyage de sortie de stock (20a) et un deuxième dispositif de convoyage de sortie de stock (20b) qui sont disposés dans les niveaux de convoyage superposés (F1, F2), dans lequel
- le premier dispositif de convoyage de sortie de stock (20a) peut être attribué soit à la première plateforme de transport de sortie de stock (18a) des plateformes de transport de sortie de stock (18a, 18b) soit à une deuxième plateforme de transport de sortie de stock (18b) des plateformes de transport de sortie de stock (18a, 18b) et peut être déplacé, pour la sortie de stock d'un article (5), par la première ou la deuxième plateforme de transport de sortie de stock (18a, 18b) et dans lequel
- le deuxième dispositif de convoyage de sortie de stock (20b) peut être attribué soit à la première plateforme de transport de sortie de stock (18a) des plateformes de transport de sortie de stock (18a, 18b) soit à la deuxième plateforme de transport de sortie de stock (18b) des plateformes de transport de sortie de stock (18a, 18b) et peut être déplacé, pour la sortie de stock d'un article (5), par la première ou la deuxième plateforme de transport de sortie de stock (18a, 18b).

7. Arrangement de stockage (1, 1a... 1c) selon la revendication 5 ou 6, **caractérisé en ce que** le premier dispositif de convoyage de sortie de stock (20a) et le deuxième dispositif de convoyage de sortie de stock (20b) sont reliés entre eux par le système de convoyage.

8. Arrangement de stockage selon la revendication 7, **caractérisé en ce que** la liaison par système de convoyage (32a... 32d, 33a... 33d) entre le premier dispositif de convoyage de sortie de stock (20a) et le deuxième dispositif de convoyage de sortie de stock (20b) comprend un assemblage du premier dispositif de convoyage de sortie de stock (20a) et du deuxième dispositif de convoyage de sortie de stock (20b).

9. Arrangement de stockage (1, 1a... 1c) selon la revendication 7, **caractérisé en ce que** la liaison par système de convoyage (32a... 32d, 33a... 33d) relie alternativement entre eux le premier dispositif de convoyage de sortie de stock (20a) et le deuxième dispositif de convoyage de sortie de stock (20b).

10. Arrangement de stockage (1, 1a... 1c) selon l'une des revendications 1 à 9, **caractérisé en ce que** le système de convoyage de mise en stock (15) comprend un premier dispositif de convoyage de mise en stock (16a), qui correspond à une première plateforme de transport de mise en stock (14a) des plateformes de transport de mise en stock (14a, 14b) et à une deuxième plateforme de transport de mise en stock (14b) des plateformes de transport de mise en stock (14a, 14b) et peut être déplacé, pour la mise en stock d'un article (5), par la première plateforme de transport de mise en stock (14a) et de la deuxième plateforme de mise en stock (14b).

11. Arrangement de stockage (1, 1a... 1c) selon l'une des revendications 1 à 9, **caractérisé en ce que** le système de convoyage de mise en stock (15) comprend un premier dispositif de convoyage de mise en stock (16a) et un deuxième dispositif de convoyage de mise en stock (16b), qui sont disposés dans des niveaux de convoyage superposés (F1, F2), dans lequel
- le premier dispositif de convoyage de mise en stock (16a) correspond à une première plateforme de transport de mise en stock (14a) des plateformes de transport de mise en stock (14a, 14b) et peut être déplacé, pour la mise en stock d'un article (5), par la première plateforme de transport de mise en stock (14a) et dans lequel
- le deuxième dispositif de convoyage de mise en stock (16b) correspond à une deuxième plateforme de transport de mise en stock (14b) des plateformes de transport de mise en stock (14a, 14b) et peut être déplacé, pour la mise en stock d'un article (5), par la deuxième plateforme de mise en stock (14b).

12. Arrangement de stockage (1, 1a... 1c) selon l'une des revendications 1 à 9, **caractérisé en ce que** le système de convoyage de mise en stock (15) comprend un premier dispositif de convoyage de mise en stock (16a) et un deuxième dispositif de convoyage de mise en stock (16b), qui sont disposés dans des niveaux de convoyage superposés (F1, F2), dans lequel
- le premier dispositif de convoyage de mise en stock (16a) peut être attribué soit à une première plateforme de transport de mise en stock (14a) des plateformes de transport de mise en stock (14a, 14b) soit à une deuxième plateforme de mise en stock (14b) des plateformes de transport de mise en stock (14a, 14b) et peut être déplacé, pour la mise en stock d'un article (5), par la première ou la deuxième plateforme de transport de mise en stock (14a, 14b) et dans lequel
- le deuxième dispositif de convoyage de mise en stock (16b) peut être attribué soit à la première plateforme de transport de mise en stock (14a) des plateformes de transport de mise en stock (14a, 14b) soit à la deuxième plateforme de mise en stock (14b) des plateformes de transport de mise en stock (14a, 14b) et peut être déplacé, pour la mise en stock d'un article (5), par la première ou la deuxième plateforme de transport de mise en stock (14a, 14b).

13. Arrangement de stockage (1, 1a... 1c) selon la revendication 12, **caractérisé en ce que** le système de commande (21) est conçu
- pour le contrôle de la première plateforme de transport de mise en stock (14a) et de la deuxième plateforme de transport de mise en stock (14b) dans un premier mode de fonctionnement, de façon à ce que les zones de déplacement de mise en stock (E1, E2) de la première plateforme de transport de mise en stock (14a) et de la deuxième plateforme de transport de mise en stock (14b) se superposent verticalement entre elles lors de la mise en stock d'articles (5) et
- pour le contrôle de la première plateforme de transport de sortie de stock (18a) et de la deuxième plateforme de transport de sortie de stock (18b) dans un premier mode de fonctionnement, de façon à ce que les zones de déplacement de sortie de stock (A1, A2) de la première plateforme de transport de sortie de stock (18a) et de la deuxième plateforme de transport de sortie de stock (18b) soient toujours séparées verticalement entre elles lors de la sortie de stock d'articles (5).

14. Arrangement de stockage (1, 1a... 1c) selon l'une des revendications 5 à 12, **caractérisé en ce que** le premier dispositif de convoyage de mise en stock (16a) et/ou le deuxième dispositif de convoyage de mise en stock (16b) et/ou le premier dispositif de convoyage de sortie de stock (20a) et/ou le deuxième dispositif de convoyage de sortie de stock (20b) sont disposés dans le tiers central de l'extension verticale (y) du premier ou du deuxième rayonnage de stockage (3a, 3b).

15. Système de préparation de commandes (24a, 24b) avec un arrangement de stockage (1, 1a... 1c) selon l'une des revendications 7 à 14, **caractérisé par** une première station de préparation de commandes (25a... 25f) et une deuxième station de préparation de commandes (25a... 25f), qui sont reliées par la liaison par système de convoyage (32a... 32d, 33a... 33d) entre le premier dispositif de convoyage de sortie de stock (20a) et le deuxième dispositif de convoyage de sortie de stock (20b) ainsi qu'avec le premier dispositif de convoyage de sortie de stock (20a) et avec le deuxième dispositif de convoyage de sortie de stock (20b).

16. Procédé de fonctionnement d'un arrangement de stockage (1, 1a... 1c) comprenant
- un arrangement de rayonnages (2) avec un premier rayonnage de stockage (3a) et un deuxième rayonnage de stockage (3b) chacun avec des emplacements de stockage (4) pour des articles (5), dans lequel les emplacements de stockage (4) sont disposés dans des niveaux de stockage superposés (L), et avec une allée de rayonnages (6, 6a... 6e) entre le premier rayonnage de stockage (3a, 3b) et le deuxième rayonnage de stockage (3a, 3b),
- un dispositif tampon de mise en stock (7) avec des dispositifs de mise à disposition de mise en stock (8), qui sont disposés à des niveaux de mise à disposition superposés et qui sont conçus chacun pour l'entreposage d'un article (5) ou de plusieurs articles (5),
- un dispositif de convoyage vertical de mise en stock (13, 13a... 13c), avec plusieurs plateformes de transport de mise en stock (14a, 14b) contrôlables indépendamment entre elles et pouvant être déplacées chacune dans une zone de déplacement de mise en stock (E1, E2) par rapport aux niveaux de mise à disposition, au moyen desquelles des articles (5) sont transportés d'un système de convoyage de mise en stock (15) vers les dispositifs de mise à disposition de mise en stock (8),
- un dispositif tampon de sortie de stock (9) avec des dispositifs de mise à disposition de sortie de stock (10), qui sont disposés à des niveaux de mise à disposition superposés et qui sont conçus chacun pour l'entreposage d'un article (5) ou de plusieurs articles (5),
- un dispositif de convoyage vertical de sortie de stock (17, 17a... 17e), avec plusieurs plateformes de transport de sortie de stock (18a, 18b) contrôlables indépendamment entre elles et pouvant être déplacées chacune dans une zone de déplacement de sortie de stock (A1, A2), au moyen desquelles des articles (5) sont transportés d'un système de convoyage de sortie de stock (10) vers un système de convoyage de sortie de stock (19),
- des appareils de commande de rayonnages (11), qui peuvent être déplacés dans l'allée de rayonnages (6, 6a... 6e) devant les emplacements de stockage (4), devant les dispositifs de mise à disposition de mise en stock (8) et devant les dispositifs de mise à disposition de sortie de stock (10) chacun sur un plan de déplacement horizontal, qui présentent chacun un dispositif de levage et qui sont conçus pour le transport des articles (5) entre un emplacement de stockage (4), un dispositif de mise à disposition de mise en stock (8) et un dispositif de mise à disposition de sortie de stock (10),
- un système de convoyage de mise en stock (15), relié par convoyage au dispositif de convoyage vertical de mise en stock (13, 13a... 13c), pour le transport d'articles (5) vers le dispositif de convoyage vertical de mise en stock (13, 13a... 13c),
- un système de convoyage de sortie de stock (19), relié par convoyage au dispositif de convoyage vertical de sortie de stock (17, 17a... 17e), pour le transport d'articles (5) à partir du dispositif de convoyage vertical de sortie de stock (17, 17a... 17e), **caractérisé en ce que**
- un système de commande (21) contrôle les plateformes de transport de mise en stock (14a, 14b), qui sont déplacées sur un seul mât vertical de mise en stock (22), de façon à ce que les articles (5) à mettre en stock soient pris en charge par le système de convoyage de mise en stock (15) et déposés sur le dispositif tampon de mise en stock (7) et
- le système de commande (21) contrôle les plateformes de transport de sortie de stock (18a, 18b), qui sont déplacées sur un seul mât vertical de sortie de stock (23), de façon à ce que les articles (5) à sortir du stock soient pris en charge par le dispositif tampon de sortie de stock (9) et déposés sur le système de convoyage de sortie de stock (19).

17. Procédé selon la revendication 16, **caractérisé en ce que** le système de convoyage de mise en stock (15) comprend un premier dispositif de convoyage de mise en stock (16a) et un deuxième dispositif de convoyage de mise en stock (16b), qui sont disposés dans des niveaux de convoyage superposés (F1, F2), dans lequel les articles (5) sont transportés, par l'intermédiaire d'une première plateforme de transport de mise en stock (14a) des plateformes de mise en stock (14a, 14b) ou par l'interminable d'une deuxième plateforme de transport de mise en stock (14b) des plateformes de mise en stock (14a, 14b), du premier dispositif de convoyage de mise en stock (16a) vers les dispositifs de mise à disposition de mise en stock (8) ou du deuxième dispositif de convoyage de mise en stock (16b) vers les dispositifs de mise à disposition de mise en stock (8).

18. Procédé selon la revendication 17, **caractérisé en ce que**
- le premier dispositif de convoyage de mise en stock (16a) peut être attribué soit à une première plateforme de transport de mise en stock (14a) des plateformes de transport de mise en stock (14a, 14b) soit à une deuxième plateforme de mise en stock (14b) des plateformes de transport de mise en stock (14a, 14b) et peut être déplacé, pour la mise en stock d'un article (5), par la première ou la deuxième plateforme de transport de mise en stock (14b) et dans lequel
- le deuxième dispositif de convoyage de mise en stock (16b) peut être attribué soit à la première plateforme de transport de mise en stock (14a) des plateformes de transport de mise en stock (14a, 14b) soit à la deuxième plateforme de mise en stock (14b) des plateformes de transport de mise en stock (14a, 14b) et peut être déplacé, pour la mise en stock d'un article (5), par la première ou la deuxième plateforme de transport de mise en stock (14a, 14b).

19. Procédé selon l'une des revendications 16 à 18, **caractérisé en ce que** le système de convoyage de sortie de stock (19) comprend un premier dispositif de convoyage de sortie de stock (20a) et un deuxième dispositif de convoyage de sortie de stock (20b) qui sont disposés dans les niveaux de convoyage superposés (F1, F2), dans lequel les articles (5) sont transportés, par l'intermédiaire d'une première plateforme de transport de sortie de stock (18a) des plateformes de sortie de stock (18a, 18b) ou par l'interminable d'une deuxième plateforme de transport de sortie de stock (18b) des plateformes de sortie de stock (18a, 18b), des dispositifs de mise à disposition de sortie de stock (10) vers le premier dispositif de convoyage de sortie de stock (20a) ou des dispositifs de mise à disposition de sortie de stock (10) vers le deuxième dispositif de convoyage de sortie de stock (20b).

20. Procédé selon la revendication 19, **caractérisé en ce que**
- le premier dispositif de convoyage de sortie de stock (20a) correspond à une première plateforme de transport de sortie de stock (18a) des plateformes de sortie de stock (18a, 18b) et peut être déplacé, pour le transport d'un article (5), par la première plateforme de transport de sortie de stock (18a) et dans lequel
- le deuxième dispositif de convoyage de sortie de stock (20b) correspond à une deuxième plateforme de transport de sortie de stock (18b) des plateformes de sortie de stock (18a, 18b) et peut être déplacé, pour le transport d'un article (5), par la deuxième plateforme de transport de sortie de stock (18b).

21. Procédé selon l'une des revendications 16 à 20, **caractérisé en ce que** les articles (5) à mettre en stock sont transportés par le système de convoyage de mise en stock (15) et sont déposés par celui-ci exclusivement sur le dispositif de convoyage vertical de mise en stock (13, 13a... 13c) et les articles (5) à sortir du stock sont déposés exclusivement par le dispositif de convoyage vertical de sortie de stock (17, 17a... 17e) sur le système de convoyage de sortie de stock (19) et transportés par celui-ci.

22. Procédé selon l'une des revendications 16 à 21, **caractérisé en ce que**
- le système de commande (21) contrôle une première plateforme de transport de mise en stock (14a) et une deuxième plateforme de transport de mise en stock (14b) des plateformes de transport de mise en stock (14a, 14b) dans un premier mode de fonctionnement, de façon à ce que les zones de déplacement de mise en stock (E1, E2) de la première plateforme de transport de mise en stock (14a) et de la deuxième plateforme de transport de mise en stock (14b) se superposent verticalement entre elles lors de la mise en stock d'articles (5) et
- le système de commande (21) contrôle une première plateforme de transport de sortie de stock (18a) et de la deuxième plateforme de transport de sortie de stock (18b) des plateformes de transport de sortie de stock (18a, 18b) dans un premier mode de fonctionnement, de façon à ce que les zones de déplacement de sortie de stock (A1, A2) de la première plateforme de transport de sortie de stock (18a) et de la deuxième plateforme de transport de sortie de stock (18b) soient toujours séparées verticalement entre elles lors de la sortie de stock d'articles (5).

23. Procédé selon la revendication 22, **caractérisé en ce que**
- une unité d'analyse détermine une première valeur caractéristique de stockage pour une première zone de stockage (B1) de l'arrangement de rayonnages (2) et une deuxième valeur caractéristique de stockage pour une deuxième zone de stockage (B2) de l'arrangement de rayonnages (2) et les compare, dans lequel la première valeur caractéristique de stockage est définie par le rapport entre les emplacements de stockage (4) existants et les emplacements de stockage (4) occupés dans la première zone de stockage (B1) et la deuxième valeur caractéristique de stockage est définie par le rapport entre les emplacements de stockage (4) existants et les emplacements de stockage (4) occupés dans la deuxième zone de stockage (B2) et dans lequel la première zone de stockage (B1) présente une extension verticale différente de la deuxième zone de stockage (B2),
- le système de commande (21) fait fonctionner la première plateforme de transport de mise en stock (14a) et la deuxième plateforme de transport de mise en stock (14b) dans le premier mode de fonctionnement lorsqu'une différence entre la première valeur caractéristique de stockage et la deuxième valeur caractéristique de stockage est supérieure à une première valeur seuil,
- le système de commande (21) fait fonctionner la première plateforme de transport de mise en stock (14a) et la deuxième plateforme de transport de mise en stock (14b) dans un deuxième mode de fonctionnement lorsqu'une différence entre la première valeur caractéristique de stockage et la deuxième valeur caractéristique de stockage est inférieure à la première valeur seuil et inférieure à une deuxième valeur seuil qui est inférieure à la première valeur seuil, dans lequel les zones de déplacement de mise en stock (E1, E2) de la première plateforme de transport de mise en stock (14a) et de la deuxième plateforme de transport de mise en stock (14b) sont séparées verticalement entre elles lors de la mise en stock d'articles (5) dans le deuxième mode de fonctionnement et
- les zones de déplacement de sortie de stock (A1, A2) de la première plateforme de transport de sortie de stock (18a) et de la deuxième plateforme de transport de sortie de stock (18b) sont toujours séparées verticalement entre elles lors de la sortie de stock dans le deuxième mode de fonctionnement et quelle que soit la valeur caractéristique de stockage.

24. Procédé selon la revendication 23, **caractérisé en ce que** le système de commande (21) fait fonctionner la première plateforme de transport de sortie de stock (18a) et la deuxième plateforme de transport de sortie de stock (18b) dans le premier mode de fonctionnement ou dans le deuxième mode de fonctionnement lorsqu'une disponibilité de la première plateforme de transport de sortie de stock (18a) et la deuxième plateforme de transport de sortie de stock (18b) et du premier dispositif de convoyage de sortie de stock (20a) et du deuxième dispositif de convoyage de sortie de stock (20b) est constatée par une unité de diagnostic.

25. Procédé selon l'une des revendications 22 à 24, **caractérisé en ce que** le système de commande (21) fait fonctionner la première plateforme de transport de sortie de stock (18a) et la deuxième plateforme de transport de sortie de stock (18b) dans un troisième mode de fonctionnement ou dans un quatrième mode de fonctionnement lorsqu'une réduction de la disponibilité de la première plateforme de transport de sortie de stock (18a) et la deuxième plateforme de transport de sortie de stock (18b) et du premier dispositif de convoyage de sortie de stock (20a) et du deuxième dispositif de convoyage de sortie de stock (20b) est constatée par une unité de diagnostic, dans lequel
- les zones de déplacement de sortie de stock (A1, A2) de la première plateforme de transport de sortie de stock (18a) et de la deuxième plateforme de transport de sortie de stock (18b) se superposent verticalement entre elles lors de la sortie de stock d'articles aussi bien dans le troisième mode de fonctionnement que dans le quatrième mode de fonctionnement,
- les zones de déplacement de mise en stock (E1, E2) de la première plateforme de transport de mise en stock (14a) et de la deuxième plateforme de transport de mise en stock (14b) se superposent verticalement entre elles lors de la mise en stock d'articles (5) dans le troisième mode de fonctionnement et
- les zones de déplacement de mise en stock (E1, E2) de la première plateforme de transport de mise en stock (14a) et de la deuxième plateforme de transport de mise en stock (14b) se superposent verticalement entre elles lors de la mise en stock d'articles (5) dans le quatrième mode de fonctionnement.

26. Procédé selon la revendication 25, **caractérisé en ce que**
- une unité d'analyse détermine une première valeur caractéristique de stockage pour une première zone de stockage (B1) de l'arrangement de rayonnages (2) et une deuxième valeur caractéristique de stockage pour une deuxième zone de stockage (B2) de l'arrangement de rayonnages (2) et les compare, dans lequel la première valeur caractéristique de stockage est définie par le rapport entre les emplacements de stockage (4) existants et les emplacements de stockage (4) occupés dans la première zone de stockage (B1) et la deuxième valeur caractéristique de stockage est définie par le rapport entre les emplacements de stockage (4) existants et les emplacements de stockage (4) occupés dans la deuxième zone de stockage (B2) et dans lequel la première zone de stockage (B1) présente une extension verticale différente de la deuxième zone de stockage (B2),
- le système de commande (21) fait fonctionner la première plateforme de transport de mise en stock (14a) et la deuxième plateforme de transport de mise en stock (14b) dans le troisième mode de fonctionnement lorsqu'une différence entre la première valeur caractéristique de stockage et la deuxième valeur caractéristique de stockage est supérieure à une première valeur seuil,
- le système de commande (21) fait fonctionner la première plateforme de transport de mise en stock (14a) et la deuxième plateforme de transport de mise en stock (14b) dans un quatrième mode de fonctionnement lorsqu'une différence entre la première valeur caractéristique de stockage et la deuxième valeur caractéristique de stockage est inférieure à la première valeur seuil et inférieure à une deuxième valeur seuil qui est inférieure à la première valeur seuil.

27. Procédé selon l'une des revendications 16 à 26, **caractérisé en ce que** la première zone de déplacement de mise en stock (E1) de la première plateforme de transport de mise en stock (14a) correspond aux niveaux de stockage (L) de la première zone de stockage (B1) et la deuxième zone de déplacement de mise en stock (E2) de la deuxième plateforme de transport de mise en stock (14b) correspond aux niveaux de stockage (L) de la deuxième zone de stockage (B2).

28. Procédé selon l'une des revendications 16 à 27, **caractérisé en ce que**
- une unité d'analyse détermine une première valeur caractéristique de stockage pour une première zone de stockage (B1) de l'arrangement de rayonnages (2) et une deuxième valeur caractéristique de stockage pour une deuxième zone de stockage (B2) de l'arrangement de rayonnages (2) et les compare, dans lequel la première valeur caractéristique de stockage est définie par le rapport entre les emplacements de stockage (4) existants et les emplacements de stockage (4) occupés dans la première zone de stockage (B1) et la deuxième valeur caractéristique de stockage est définie par le rapport entre les emplacements de stockage (4) existants et les emplacements de stockage (4) occupés dans la deuxième zone de stockage (B2) et dans lequel la première zone de stockage (B1) présente une extension verticale différente de la deuxième zone de stockage (B2), et
- les articles (5) sont mis en stock dans l'arrangement de rayonnages (2) avec une adaptation mutuelle des valeurs caractéristiques de stockage dans la première zone de stockage (B1) et la deuxième zone de stockage (B2).

29. Procédé selon l'une des revendications 16 à 28, **caractérisé en ce que** les articles (5) sont mis en stock de manière chaotique dans l'arrangement de rayonnages (2) à l'intérieur de la première zone de stockage (B 1) et/ou à l'intérieur de la deuxième zone de stockage (B2).

30. Procédé selon l'une des revendications 16 à 29, **caractérisé en ce que** les articles (5) à mettre en stock dans l'arrangement de rayonnages (2) sont répartis de manière chaotique et/ou uniforme sur un premier dispositif de convoyage de mise en stock (16a) et un deuxième dispositif de convoyage de mise en stock (16b) du système de convoyage de mise en stock (15).

31. Procédé selon l'une des revendications 16 à 30, **caractérisé en ce que** certains des articles (5) sont transférés, lors du transport par un premier dispositif de convoyage de sortie de stock (20a) du système de convoyage de sortie de stock (19), vers un deuxième dispositif de convoyage de sortie de stock (20b) du système de convoyage de sortie de stock (19) et certains des articles (5) sont transférés, lors du transport par le deuxième dispositif de convoyage de sortie de stock (20b), vers le premier dispositif de convoyage de sortie de stock (20a).
